Europäisches Patentamt

European Patent Office

Office européen des brevets

(19)

(11) **EP 1 335 627 A2**

(12) **EUROPEAN PATENT APPLICATION**

(43) Date of publication:
**13.08.2003 Bulletin 2003/33**

(51) Int Cl.$^7$: **H04Q 11/00**

(21) Application number: **03002482.2**

(22) Date of filing: **05.02.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **06.02.2002 JP 2002029692
07.02.2002 JP 2002031326
07.02.2002 JP 2002031343
07.02.2002 JP 2002031397
01.03.2002 JP 2002055252
01.04.2002 JP 2002099161**

(71) Applicant: **Nippon Telegraph and Telephone Corporation
Tokyo 100-8116 (JP)**

(72) Inventors:
- **Imajuku, Wataru
  Musashino-shi, Tokyo 180-8585 (JP)**
- **Oki, Eije
  Musashino-shi, Tokyo 180-8585 (JP)**
- **Shiomoto, Kohei
  Musashino-shi, Tokyo 180-8585 (JP)**
- **Shimazaki, Daisaku
  Musashino-shi, Tokyo 180-8585 (JP)**
- **Yamanaka, Naoaki
  Musashino-shi, Tokyo 180-8585 (JP)**

(74) Representative:
**von Samson-Himmelstjerna, Friedrich R.,
Dipl.-Phys. et al
SAMSON & PARTNER
Widenmayerstrasse 5
80538 München (DE)**

(54) **Optical network, optical cross-connect apparatus, photonic-IP network, and node**

(57)  An optical network includes links and nodes. In each node, a control section sets an optical path to be used for optical transport. A switching section performs switching of the optical path. In the control section, a link observation section observes the wavelength of signal light that is being transmitted through a link connected to the node as the utilization of the link. A flooding section notifies each of the remaining nodes of the link utilization and acquires a link utilization observed by each of the remaining nodes so as to share the link utilization between the nodes. An optical path calculation section selects the optical path to be used for optical transport by calculation using the link utilization observed by the link observation section and the link utilization observed by each of the remaining nodes. An optical path setting section sets the optical path selected by the optical path calculation section to the optical path to be used for optical transport.

FIG. 1

## Description

Background of the Invention

The present invention relates to a node having a wavelength conversion capability or regeneration, reshaping and retiming capability, and an optical network and optical cross-connect apparatus which set an optical-path routing in accordance with the layout of nodes having these capabilities. The present invention also relates to a photonic-IP network and node which implement an integrated network of a high-capacity optical path network implemented by the optical cross-connect apparatus and a packet or cell transport network implemented by a layer 2/3 switch such as an IP router.

In an optical network using an optical fiber as a transmission medium, each node has a wavelength conversion capability or regeneration, reshaping and retiming capability. The wavelength of signal light is converted or the waveform of signal light is reshaped, as needed, to execute transmission. When all nodes have the wavelength conversion capability or regeneration, reshaping and retiming capability, the degree of freedom for optical-path routing increases. However, the cost of the entire optical network also increases because a wavelength converter or regeneration, reshaping and retiming device is expensive. A method of forming an optical network using minimum necessary wavelength converters or regeneration, reshaping and retiming devices has been studied.

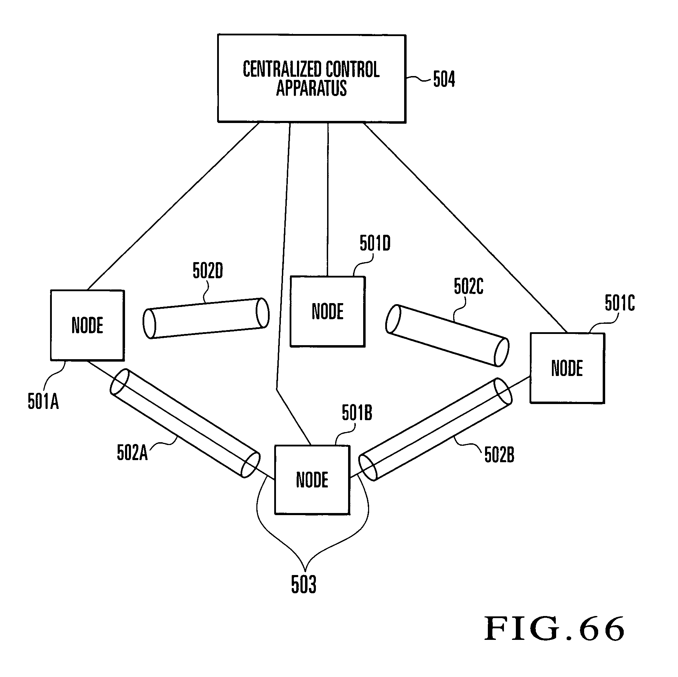

Fig. 66 shows the overall arrangement of a conventional optical network. This optical network has nodes 501A, 501B, 501C, and 501D each formed from an optical cross-connect apparatus, and links 502A, 502B, 502C, and 502D which are placed among the nodes 501A to 501D and transmit signal light by wavelength multiplexing. The optical paths that connect the nodes 501A to 501D are specified by the links 502A to 502D and wavelengths to be used. For example, an optical path 503 which connects the node 501A to the node 501C is formed by connecting a wavelength λ1 of the link 502A to a wavelength λ2 of the link 502B. If the wavelength λ1 is different from the wavelength λ2, the node 501B must convert the wavelength of a transmission signal input from the link 502A from λ1 into λ2 and output the signal to the link 502B. To avoid this wavelength conversion, an optical path for which the wavelength λ1 equals the wavelength λ2 is preferably assigned.

In the conventional optical network, a centralized control apparatus 504 which is used by a network operator to manage the optical network is used to set an optical path. More specifically, the nodes 501A to 501D notify the centralized control apparatus 504 of the status information of each of the wavelengths of the links 502A to 502D connected to the nodes. Upon receiving an optical path setting request from the network operator, the centralized control apparatus 504 refers the reported status information of the links 502A to 502D, calculates the optical paths between the nodes 501A to 501D, and transmits control signals representing the calculation results to the nodes 501A to 501D. The nodes 501A to 501D set optical paths connected to them on the basis of the received control signals.

However, when the centralized control apparatus 504 is used, the network operator must set, in the centralized control apparatus 504, changes such as an increase in number of nodes in the optical network or addition or deletion of a node. This increases the load on the network operator. In addition, no optical paths can be set until the above-described changes are set in the centralized control apparatus 504. Hence, even when an optical path setting request is received, it may be impossible to quickly set the optical paths. Furthermore, to suppress the number of wavelength converters in the nodes of the optical network minimumly, the centralized control apparatus 504 must recognize the nodes having the devices and their utilization and select the routes and wavelengths of optical paths while preventing use of excess wavelength converters and regeneration, reshaping and retiming devices.

Similarly, to suppress the number of network elements of regeneration, reshaping and retiming devices to be installed in the optical network, regeneration, reshaping and retiming of all optical paths must not be executed in a specific regenerator section. Instead, for optical paths with little degradation in signal-to-noise ratio or Q value, the length interval of regeneration, reshaping and retiming spacing must be flexibly increased (e.g., reference: N.S. Bergano, "Margin Measurements in Optical Amplifier", IEEE Photonics Letter, vol. 5, p. 304, 1993). Normally, the degradation in quality of an optical path largely varies depending on the type of optical fiber and the band of the optical path to be accommodated. This is not only due to differences in chromatic dispersion, higher-order chromatic dispersion, and polarization dispersion based on the type of installed optical fiber but also due to differences in effects of nonlinear refraction such as a fourwave mixing effect, self-phase modulation effect, and cross-phase modulation effect. The distance between necessary regeneration, reshaping and retiming devices must be largely increased by appropriately using the above characteristics and appropriately selecting the fiber link to be accommodated or wavelength band.

On the other hand, along with an increase in data communication traffic in the Internet or the like, a node device having a throughput of 10 to 100 Tbit/s or more will be introduced in the near future. A mainstream communication protocol in the Internet is TCP/IP protocol. The IP protocol basically has a function of segmenting communication data into packets and a function of assigning a transmission source address and transmission destination address to each of the segmented packet. The protocol provides a so-called best effort service without any quality guarantee. However, as the Internet becomes popular, the user side requires the Internet to have a capability of transmitting high-quality real-time data such as image data or audio data.

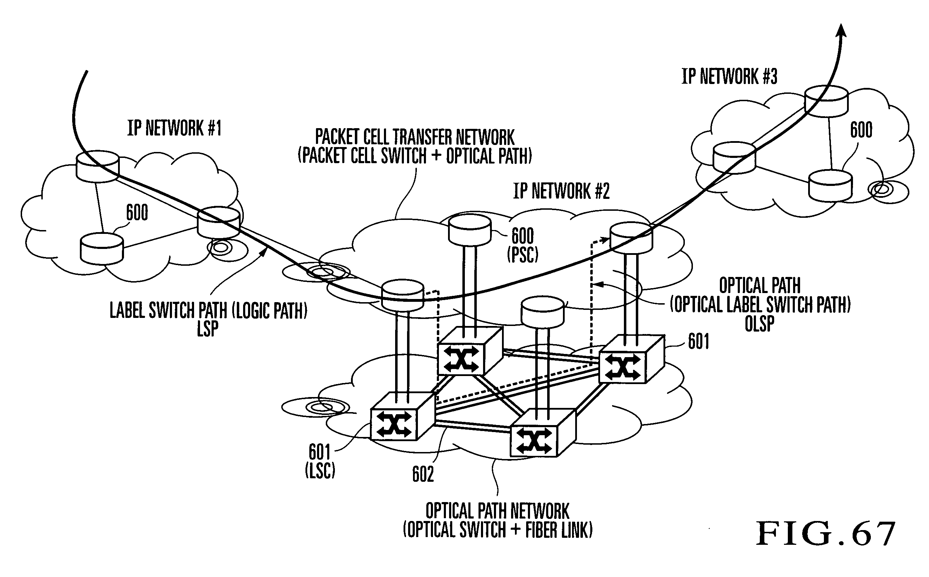

Internet service providers are also being pressed to provide high-quality Internet services while coping with a rapid increase in communication traffic that is said to double in a half year. As shown in Fig. 67, in the current IP network (packet/cell transport network), an IP router network that is overlaid on an SDH path or optical path network is provided. Resource management for the respective layers is executed by individual control systems.

Referring to Fig. 67, reference numeral 600 denotes a packet/cell switch (PSC: Packet Switch Capable) that executes routing processing for each IP packet; 601, an optical switch (LSC: Lambda Switch Capable) which executes routing processing for each optical path; and 602, a fiber link which connects the optical switches 601. In the network shown in Fig. 67, a multi-layer network is formed by a packet/cell transport network including the packet/cell switches 600 and optical paths and a fiber link that accommodates the optical switches 601 and optical paths. The packet/cell switches 600 which process the TCP/IP protocol as the main communication protocol in the Internet and the optical switches 601 which execute routing processing of optical paths operate in cooperation with each other whereby a network having a high-capacity transport capability is implemented.

As described above, in the current IP network, an IP router network that is overlaid on an SDH path or optical path network is provided. Resource management for the respective layers is executed by individual control systems. Hence, the traffic accommodation design is also done for each layer. As a result, the required network resource becomes redundant. In addition, no high-speed service providing can be ensured.

As a means for solving these problems, a concept called Generalized Multi-Protocol Label Switching (GMPLS) (reference: E. Mannnie, IETF Internet Draft "Generalized Multi-Protocol Label Switching (GMPLS) Architecture; draft-ietf-ccamp-gmpls-atchitecture-03.txt") is proposed recently. This aims to systematically manage node devices implemented with different techniques such as PSC and LSC, and links that connect the nodes under integrated control software that is implemented on the basis of the concept of GMPLS. More specifically, GMPLS aims to realize integrated-management on the IP network and optical network that have been conventionally separately managed for each layer, establishing a technique of quickly connecting/disconnecting optical paths in accordance with a change in IP traffic, and effectively utilizing the network resource.

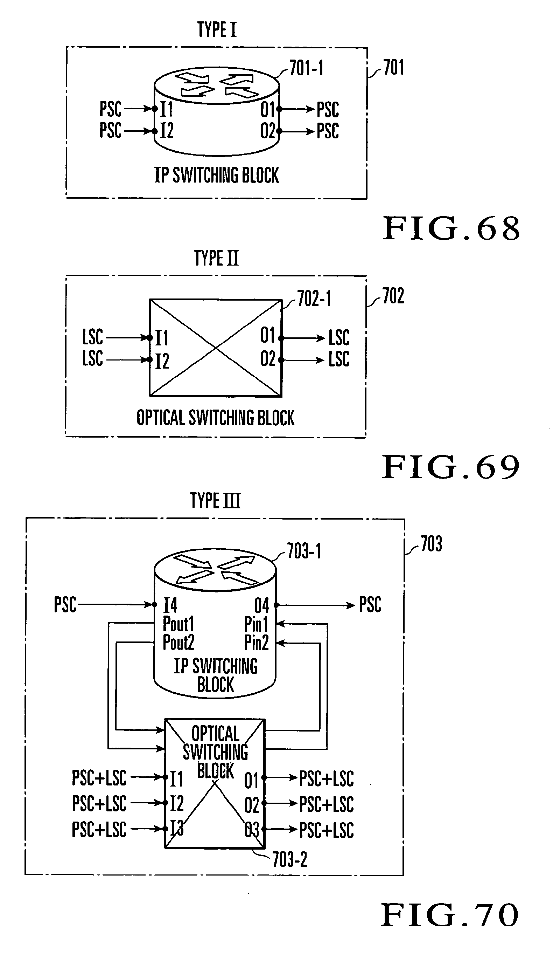

Figs. 68 to 70 show the classification of types of nodes and types of SC (Switching Capability) defined for each interface of these nodes on the basis of the concept of GMPLS. Fig. 68 shows a node of type I which uses an IP switching block (electrical router). Fig. 69 shows a node of type II which uses an optical switching block. Fig. 70 shows a node of type III which integrates the IP switching block and optical switching block. A node 701 of type I has, as its constituent element, an IP switch 701-1 and also has interfaces I1, I2, O1, and O2. A node 702 of type II has, as its constituent element, an optical switching block 702-1 and also has the interfaces I1, I2, O1, and O2. A node 703 of type III has, as its constituent elements, an IP switching block 703-1 and optical switching block 703-2. The node 703 has the interfaces I1, I2, I3, O1, O2, and O3 on the optical switching block 703-2 side, and interfaces I4 and O4 on the IP switching block 703-1 side. Referring to Figs. 68 to 70, the interfaces are indicated by full circles. Each interface is assigned an ID (identification number) as unique information used to identify the interface in the transport network. An example of the ID is an IP address.

Referring to Fig. 68, all the interfaces I1, I2, O1, and O2 of the node 701 have PSC (Packet Switching Capability). PSC means a switching capability which is switched for every packet. Referring to Fig. 69, all the interfaces I1, I2, O1, and O2 of the node 702 have LSC (Lambda Switching Capability). LSC means a switching capability which is switched for every wavelength. In Fig. 69, a description of a physical fiber link is omitted. A number of interfaces having LSC belong to the port of one optical fiber. Logically, however, an interface is defined for each wavelength. Referring to Fig. 70, the interfaces I1, I2, I3, O1, O2, and O3 on the optical switching block 703-2 side in the node 703 have PSC and LSC. That is, the interfaces I1, I2, I3, O1, O2, and O3 on the optical switching block 703-2 side in the node 703 can have either LSC or PSC in accordance with the connection state of switching. Such a switching capability of an interface is indicated by "PSC + LSC" in Fig. 70. Referring to Fig. 70, the interfaces I4 and O4 on the IP switching block 703-1 side in the node 703 have PSC because they are always switched by the IP switching block 703-1.

[Photonic-IP Network]

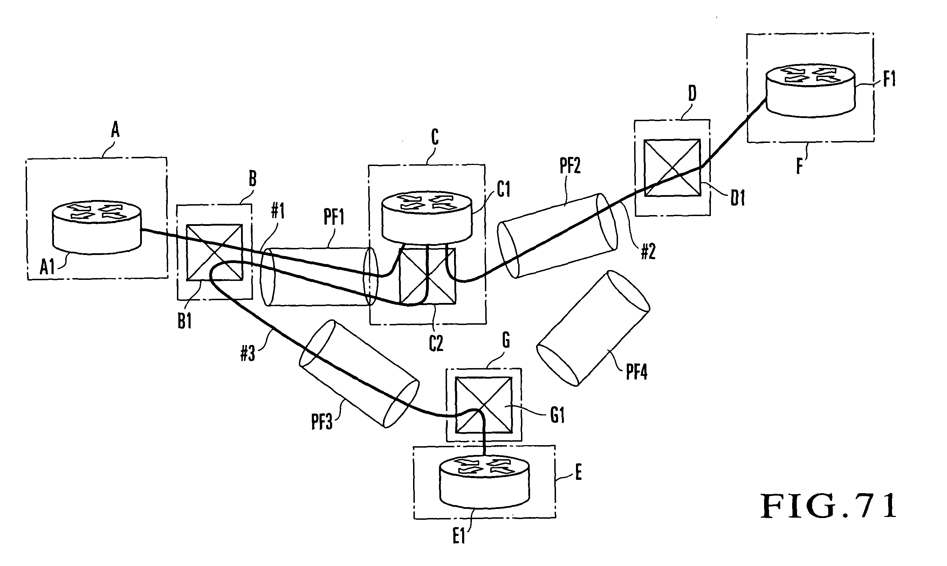

Fig. 71 shows a photonic-IP network using nodes of types I, II, and III. Referring to Fig. 71, nodes A, E, and F are nodes of type I. Nodes B, D, and G are nodes of type II. A node C is a node of type III. Optical path #1 is set between an IP switching block A1 of the node A and an IP switching block C1 of the node C. Optical path #2 is set between the IP switching block C1 of the node C and an IP switching block F1 of the node F. Optical path #3 is set between the IP switching block C1 of the node C and an IP switching block E1 of the node E. Optical path #1 is terminated at the IP switching blocks A1 and C1. Optical path #2 is terminated at the IP switching blocks C1 and F1. Optical path #3 is terminated at the IP switching blocks C1 and E1. Optical paths #1, #2, and #3 are not terminated at IP switching blocks B1, D1, and G1 of the nodes B, D, and G where only switching for each wavelength is performed. Referring to Fig. 71, reference symbols PF1 to PF4 denote fiber links.

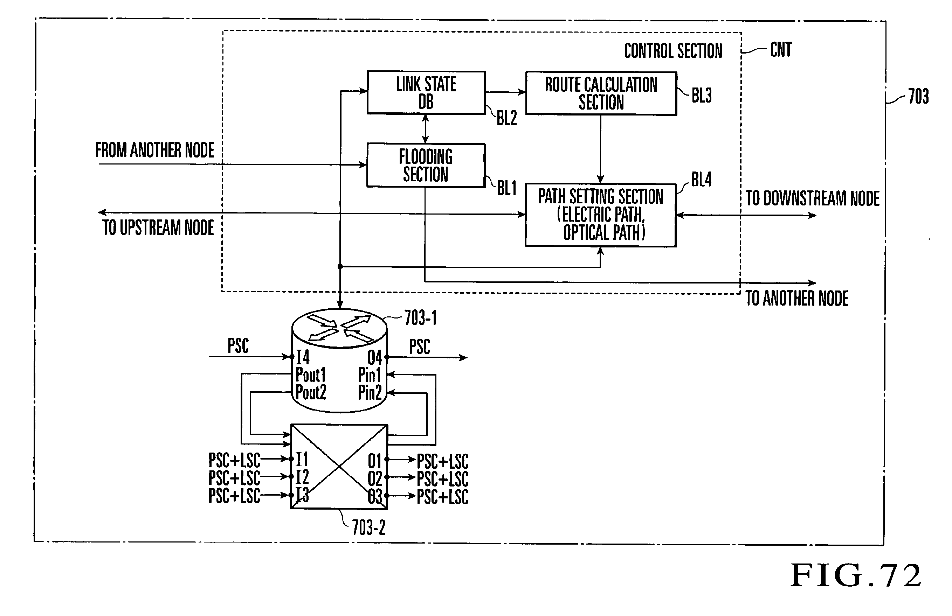

Fig. 72 shows the schematic arrangement of the conventional node 703 of type III. The node 703 has a control block CNT. The control block CNT has a flooding section BL1, link state DB BL2, route calculation section BL3, and path setting section BL4. The switching capabilities unique to the interfaces I1, I2, I3, I4, O1, O2, O3, and O4 of the node 703 are stored in the link state DB BL2 and advertised to the remaining nodes in the photonic-IP network through the flooding section BL1 using a routing protocol such as OSPF (Open Shortest Path First). Each of the remaining nodes also has the control block CNT similar to that of the node 703 and advertises the switching capabilities unique to the interfaces in that node, like the node 703. The switching capability of an interface, which is advertised from an upstream node, is received by the link state DB BL2 through the flooding section BL1 and also sent to a downstream node. The nodes in the network are connected and have a ring shape through a control path.

Accordingly, the link state DB BL2 of the node 703 stores, as link state information, the switching capabilities unique to the interfaces of all nodes in the photonic-IP network. The link state DB BL2 of each of the remaining nodes also stores, as link state information, the switching capabilities unique to the interfaces of all nodes in the photonic-IP network.

In the node 703, the route calculation section BL3 refers to the link state information stored in the link state DB BL2, calculates the route from the source node to the destination node, and sends the calculated route to the path setting section BL4. On the basis of the path from the route calculation section BL3, the path setting section BL4 sets the path in the IP router 703-1 and optical switching block 703-2 and also notifies the upstream and downstream nodes of the route from the route calculation section BL3. The upstream and downstream nodes set paths in them in accordance with the route sent from the node 703.

Advertising the switching capability using a routing protocol such as OSPF is described in reference 1 (J. Moy, "OSPF Version 2", RFC2328, 1998), reference 2 (R. Coltun, "The OSPF Opaque LSA Option", RFC2370, 1998), and reference 3 (A. Banerjee, J. Drake, J.P. Lang, B. Turner, K. Kompella, and Y. Rekhter, "Generalized Multiprotocol Label Switching: An Overview of Routing and Management Enhancements", IEEE Commun. Mag., pp. 144-150, Jan. 2001).

[Example 1 of Optical Path Setting in Photonic-IP Network]

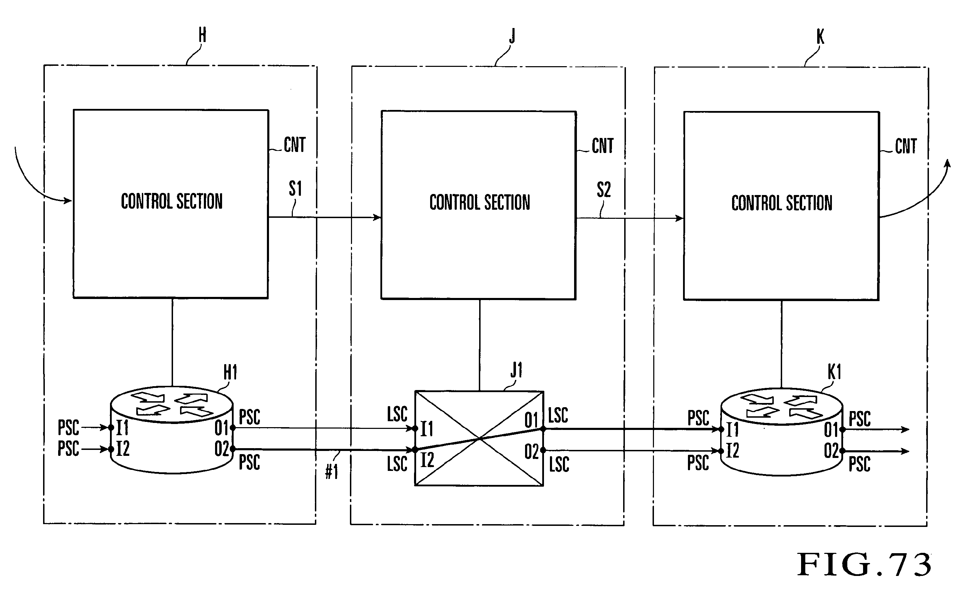

Fig. 73 shows an example of optical path setting in the photonic-IP network. In this example, nodes H and K are nodes of type I, and a node J is a type of node II. The node H is defined as a source node, and the node K is defined as a destination node. A route is calculated by a control block CNT in the node H. The calculated route is sent to the nodes J and K through control paths S1 and S2, thereby setting, between the nodes H and K, optical path #1 from an interface O2 of the node H to an interface I1 of the node K through interfaces I2 and O1 of the node J. In the example shown in Fig. 73, setting optical path #1, the interfaces I2 and O1 of the node J are connected using LSC. Accordingly, the interfaces I2 and O1 have no available (already used) switching capability. That is, no available switching capability remains for the interfaces I2 and O1. The state wherein no switching capability remains is called "Nothing".

[Example 2 of Optical Path Setting in Photonic-IP Network]

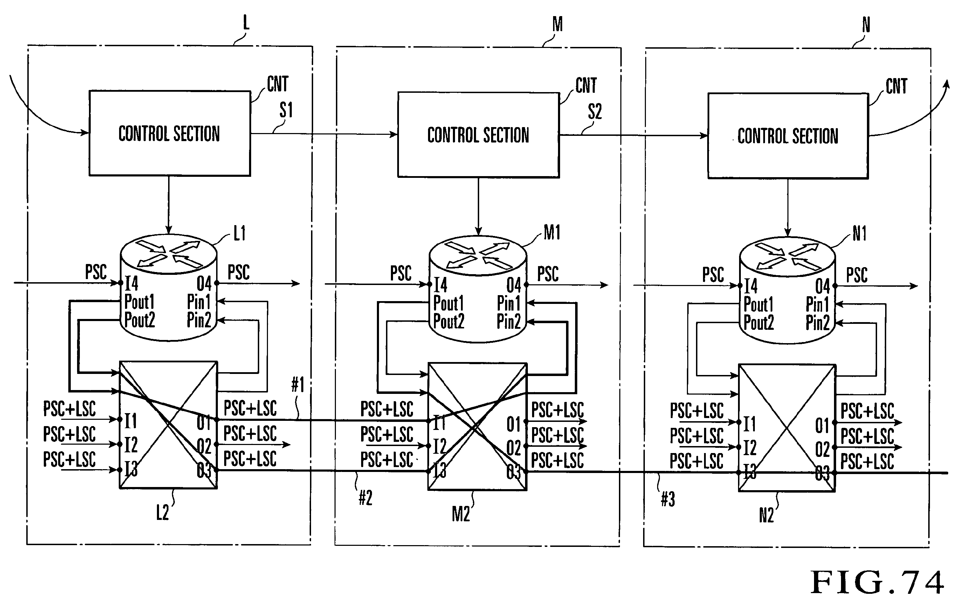

Fig. 74 shows another example of optical path setting in the photonic-IP network. In this example, nodes L, M, and N are nodes of type III. The node L is defined as a source node, and the node M is defined as a destination node. A route is calculated by a control block CNT in the node L. The calculated route is sent to the node M through a control path S1, thereby setting, between the nodes L and M, optical paths #1 and #2. More specifically, optical path #1 from an output port Pout1 of an IP switching block L1 of the node L to an input port Pin1 of an IP switching block M1 of the node M through an interface O1 of an optical switching block L2 of the node L and an interface I1 of an optical switching block M2 of the node M and optical path #2 from an output port Pout2 of the IP switching block L1 of the node L to an input port Pin2 of the IP switching block M1 of the node M through an interface O3 of the optical switching block L2 of the node L and an interface I3 of the optical switching block M2 of the node M are set. In addition, the node M is defined as a source node, and a downstream node (not shown) is defined as a destination node. A route is calculated by the control block CNT in the node M. The calculated route is sent to the node N through a control path S2, thereby setting, between the nodes M and N, optical path #3. More specifically, optical path #3 which is output from the output port Pout1 of the IP switching block M1 of the node M to the interface I3 of an optical switching block N2 of the node N through the interface O3 of the optical switching block M2 of the node M and output from the interface O3 of the optical switching block N2 is set.

In the example shown in Fig. 74, in setting optical path #1, the interface O1 of the optical switching block L2 of the node L is connected to the output port Pout1 of the IP switching block L1 using LSC. The interface I1 of the optical switching block M2 of the node M is connected to the input port Pin1 of the IP switching block M1 using LSC. In setting optical path #2, the interface O3 of the optical switching block L2 of the node L is connected to the output port Pout2 of the IP switching block L1 using LSC. The interface I3 of the optical switching block M2 of the node M is connected to the input port Pin2 of the IP switching block M1 using LSC. In setting optical path #3, the interface O3 of the optical switching block M2 of the node M is connected to the output port Pout1 of the IP switching block M1 using LSC. The interfaces I3 and O3 of the optical switching block N2 of the node N are connected using LSC.

Accordingly, the interfaces O1 and O3 of the node L and the interfaces I1, I3, and O3 of the node M have no LSC as a switching capability. Only PSC remains. The interfaces I3 and O3 of the node N have neither LSC nor PSC and are set in the "Nothing" state. PSC as a switching capability which is switched for every packet remains when an interface is terminated at an IP switching block. This capability does not remain when an interface is not terminated at an IP switching block, like the interfaces I3 and O3 of the node N, and relays an optical path.

As described above, the switching capability of an interface changes depending on the utilization of the resource (interface and input/output ports) in the node. In the prior art, however, the utilization of the resource in the node is not reflected on the switching capability of the interface to be advertised. Hence, when an optical-path routing is calculated, no appropriate path may be selected. In addition, setting an optical path, no appropriate optical path may be set. For example, in the example shown in Fig. 73, the switching capability of the interfaces I2 and O1 of the node J is stored as LSC in that node. In addition, the interfaces are advertised to the remaining nodes H and K as interfaces having LSC as the switching capability. However, when optical path #1 is set, the switching capability of the interfaces I2 and O1 of the node J is "Nothing". In this case, in the link state information in the nodes H, J, and K, the switching capability of the interfaces I2 and O1 of the node J remains LSC. For this reason, no appropriate path may be selected in calculating the route. In addition, no appropriate optical path may be set in settling the optical path.

In the example shown in Fig. 74, the switching capability of the interfaces O1 and O3 of the node L is stored as "PSC + LSC" in that node. In addition, the interfaces are advertised to the remaining nodes M and N as interfaces having the switching capability "PSC + LSC". The switching capability of the interfaces I1, I3, and O3 of the node M is stored as "PSC + LSC" in that node. In addition, the interfaces are advertised to the remaining nodes L and N as interfaces having the switching capability "PSC + LSC". The switching capability of the interfaces I1 and O3 of the node N is stored as "PSC + LSC" in that node. In addition, the interfaces are advertised to the remaining nodes L and M as interfaces having the switching capability "PSC + LSC".

However, when optical paths #1, #2, and #3 are set, the interfaces O1 and O3 and the interfaces I1, I3, and O3 of the node M only have PSC. The switching capability of the interfaces I3 and O3 of the node N is "Nothing". In this case, in the link state information in the nodes L, M, and N, the switching capability of the interfaces O1 and O3 of the node L, the interfaces I1, I3, and O3 of the node M, and the interfaces I3 and O3 of the node N remains "PSC + LSC". For this reason, no appropriate path may be selected in calculating the route. In addition, no appropriate optical path may be set in settling the optical path.

Even when the above-described problems are solved, and the switching capability of each node becomes clear, each node must have a more advanced routing capability. For example, IP traffic transport from the node A to the node F in Fig. 71 will be examined. In the network state shown in Fig. 71, no optical path which directly connects the node A to the node F is present. Based on the prior art, the IP traffic passes through the node A, node C, and node F. However, when the above-described technique is used, the switching capability of the nodes C and F is clear even in the node A. This makes it possible to set an optical path from the node A to the node F in accordance with an IP traffic transport request from the node A to the node F and transport the above-described traffic through this optical path. The advantage in terms of network operation cost depends on the amount of the IP traffic to be transported and the switching capability of the nodes C and F. Each node must have a control function of doing such determination.

Summary of the Invention

The present invention has been made to solve the above problems, and has as its object to provide an optical network and optical cross-connect apparatus capable of setting an optical path without using a centralized control apparatus in the optical network, preventing any excessive use of wavelength converters and regeneration, reshaping and retiming devices, and effectively utilizing the optical network resource.

It is another object of the present invention to provide a photonic-IP network and node capable of more accurately calculating a route or setting a path by advertising the switching capability of each interface on which the utilization of the resource of a node is reflected.

In order to achieve the above objects, according to the present invention, there is provided an optical network comprising a plurality of links which transmit a plurality of signal light components having different wavelengths, and a plurality of nodes which are connected to each other through the links and perform switching of an optical path specified by the link and the wavelength of the transmission signal light, wherein each of the nodes comprises control means for setting the optical path to be used for optical transport, and switching means for performing switching of the optical path set by the control means, and the control means comprises link observation means for observing a wavelength of signal light that is being transmitted through a link connected to the node as a utilization of the link, information exchange means for notifying each of the remaining nodes of the link utilization observed by the link observation means and acquiring a link utilization observed by each of the remaining nodes so as to share the link utilization between the nodes, optical path selection means for selecting the optical path to be used for optical transport by calculation using the link utilization observed by the link observation means and the link utilization observed by each of the remaining nodes, and optical path setting means for setting the optical path selected by the optical path setting means as the optical path to be used for optical transport.

There is also provided an optical cross-connect apparatus comprising control means for setting an optical path specified by a link which transmits a plurality of signal light components having different wavelengths and the wavelength of the transmission signal light, and switching means for performing switching of the optical path set by the control means, wherein the control means comprises link observation means for observing a wavelength of signal light that is being transmitted through a link connected to the cross-connect apparatus as a utilization of the link, information exchange means for notifying each of the remaining nodes of the link utilization observed by the link observation means and acquiring a link utilization observed by each of the remaining nodes so as to share the link utilization between nodes in an optical network to which the cross-connect apparatus is connected, optical path selection means for selecting an optical path to be used for optical transport by calculation using the link utilization observed by the link observation means and the link utilization observed by each of the remaining nodes, and optical path setting means for setting the optical path selected by the optical path setting means to an optical path to be used for optical transport.

In addition, there is also provided a photonic-IP network having an interface which has a switching capability for performing switching, for each packet, of a path to be used for data communication through an IP network, and an interface which has a switching capability for performing switching, for each wavelength of transmission signal light, of a path to be used for data communication through an optical network, comprising a node which switching-connects the IP network and the optical network, wherein the node comprises monitor means for monitoring the switching capability of each interface in the node on the basis of a utilization of a resource in the node, storage means for updating/storing the switching capability obtained by the monitor means, and switching capability advertising means for advertising the switching capability to remaining nodes.

There is also provided a node comprising an interface having a switching capability for performing switching, for each wavelength of transmission signal light, of a path to be used for data communication through an optical network, monitor means for monitoring the switching capability of each interface in the node on the basis of a utilization of a resource in the node, storage means for updating/storing the switching capability obtained by the monitor means, and switching capability advertising means for advertising the switching capability to remaining nodes.

Brief Description of the Drawings

Fig. 1 is a block diagram showing the overall arrangement of an optical network according to the present invention;
Fig. 2 is a block diagram showing an arrangement of an optical cross-connect apparatus according to the present invention;
Fig. 3 is a view showing an example of the format of information representing a fiber link utilization output from a link observation section shown in Fig. 2;
Fig. 4 is a view showing another example of the format of information representing a fiber link utilization output from the link observation section shown in Fig. 2;
Fig. 5 is a flow chart showing the flow of link observation operation by the optical cross-connect apparatus shown in Fig. 2;
Fig. 6 is a flow chart showing the flow of flooding operation by the optical cross-connect apparatus shown in Fig. 2;
Fig. 7 is a flow chart showing the flow of optical path setting operation by the optical cross-connect apparatus shown in Fig. 2;
Fig. 8 is a view showing still another example of the format of information representing a fiber link utilization output from the link observation section shown in Fig. 2;
Fig. 9 is a view showing still another example of the format of information representing a fiber link utilization output from the link observation section shown in Fig. 2;
Fig. 10 is a view showing still another example of the format of information representing a fiber link utilization output from the link observation section shown in Fig. 2;
Fig. 11 is a view showing still another example of the format of information representing a fiber link utilization output from the link observation section shown in Fig. 2;
Fig. 12 is a view showing still another example of the format of information representing a fiber link utilization output from the link observation section shown in Fig. 2;
Fig. 13 is a block diagram showing another arrangement of the optical cross-connect apparatus according to the present invention;

Fig. 14 is a view showing an arrangement of a node of the optical network according to the present invention;

Fig. 15 is a view showing tables which are used by the monitor section shown in Fig. 14 and indicate whether an input wavelength can be converted into an output wavelength;

Fig. 16 is a view showing another arrangement of a node of the optical network according to the present invention;

Fig. 17 is a view showing tables which are used by the monitor section shown in Fig. 16 and indicate whether an input wavelength can be converted into an output wavelength;

Fig. 18 is a view showing a format to be used to send a wavelength converter utilization in each node;

Fig. 19 is a view showing a format which indicates cost values;

Fig. 20 is a view showing a format which indicates the average value of cost values for each input wavelength;

Fig. 21 is a view showing an arrangement of a node using an advertisement section in the optical network according to the present invention;

Fig. 22 is a view showing the arrangement of a centralized control optical network;

Fig. 23 is a view showing a node arrangement used for a description of cost value calculation;

Fig. 24 is a view showing cost values based on the number of unused wavelength converters;

Fig. 25 is a view showing cost values with respect to an input wavelength based on the number of unused wavelength converters;

Fig. 26 is a view showing the first example of routing of the optical network;

Fig. 27 is a view showing the second example of routing of the optical network;

Fig. 28 is a view showing the processing procedure of routing of the optical network;

Fig. 29 is a view showing the arrangement of another optical network according to the present invention;

Fig. 30 is a view showing the arrangement of a node shown in Fig. 29;

Fig. 31 is an explanatory view of optical-path routing information managed by the node shown in Fig. 30;

Fig. 32 is an explanatory view of degradation parameter advertising processing executed in the node shown in Fig. 30;

Fig. 33 is an explanatory view of optical-path routing determination processing executed in the node shown in Fig. 30;

Fig. 34 is a flow chart of a routing method executed in the node shown in Fig. 30;

Fig. 35 is a flow chart of a shortest route setting processing executed in the node shown in Fig. 30;

Fig. 36 is an explanatory view of another degradation parameter advertising processing executed in the node shown in Fig. 30;

Fig. 37 is an explanatory view of an example of setting of a wavelength band ID and signal degradation parameter based on the advertising processing shown in Fig. 36;

Fig. 38 is an explanatory view of the example of setting of the wavelength band ID and signal degradation parameter based on the advertising processing shown in Fig. 36;

Fig. 39 is an explanatory view of another degradation parameter advertising processing executed in the node shown in Fig. 30;

Fig. 40 is an explanatory view of a transmittable condition in an optical fiber transmission system;

Fig. 41 is an explanatory view of still another degradation parameter advertising processing executed in the node shown in Fig. 30;

Fig. 42 is a view showing the outline of an embodiment of a node (node having a switching capability monitor section) used in a photonic-IP network according to the present invention;

Fig. 43 is a view showing an example of optical path setting in a photonic-IP network using nodes of types I and II with a switching capability monitor section;

Fig. 44 is a view showing an example of optical path setting in a photonic-IP network using nodes of type III with a switching capability monitor section;

Fig. 45 is a view showing an example of optical path setting in the photonic-IP network so as to explain the solution to problem ① in the example shown in Fig. 44;

Fig. 46 is a view showing another example of optical path setting in the photonic-IP network so as to explain the solution to problem ① in the example shown in Fig. 44;

Fig. 47 is a view showing still another example of optical path setting in the photonic-IP network so as to explain the solution to problem ① in the example shown in Fig. 44;

Fig. 48 is a view showing advertisement information advertised in the node shown in Fig. 47;

Fig. 49 is a view showing still another example of optical path setting in the photonic-IP network so as to explain the solution to problem ① in the example shown in Fig. 44;

Fig. 50 is a view showing advertisement information advertised in the node shown in Fig. 49;

Fig. 51 is a view showing an example of optical path setting in the photonic-IP network so as to explain the solution to problem ② in the example shown in Fig. 43, which is posed in the same way as in the example shown in Fig. 44;

Fig. 52 is a view showing an arrangement of a node used in the photonic-IP network according to the present invention;

Fig. 53 is a view showing advertising processing of an optical path link state information and fiber link state information, which is performed in the node shown in Fig. 52;

Fig. 54 is an explanatory view of routing processing executed in the node shown in Fig. 52;

Fig. 55 is a view showing another arrangement of the node used in the photonic-IP network according to the present invention;

Fig. 56 is an explanatory view of route calculation processing executed in the node shown in Fig. 55;

Fig. 57 is an explanatory view of route calculation processing executed in the node shown in Fig. 55;

Fig. 58 is a view showing a state table used in the route calculation processing shown in Fig. 57;

Fig. 59 is a view showing a capability table used in the route calculation processing shown in Fig. 57;

Fig. 60 is an explanatory view of label switch path setting processing executed by the photonic-IP network formed from the node shown in Fig. 55;

Fig. 61 is a sequence chart showing the label switch path setting processing shown in Fig. 60;

Fig. 62 is a view showing another arrangement of the node used in the photonic-IP network according to the present invention;

Fig. 63 is a view showing still another arrangement of the node used in the photonic-IP network according to the present invention;

Fig. 64 is a view showing a photonic-IP network so as to explain the effect of the present invention;

Fig. 65 is a view showing comparison in performance between the present invention and a prior art;

Fig. 66 is a block diagram showing the overall arrangement of a conventional optical network;

Fig. 67 is an explanatory view showing the arrangement of the conventional IP network;

Fig. 68 is a view showing a node of type I used in the photonic-IP network;

Fig. 69 is a view showing a node of type II used in the photonic-IP network;

Fig. 70 is a view showing a node of type III used in the photonic-IP network;

Fig. 71 is a view showing a photonic-IP network using nodes of types I, II, and III;

Fig. 72 is a view showing the schematic arrangement of a conventional node of type III;

Fig. 73 is a view showing an example of optical path setting in the photonic-IP network using conventional nodes of types I and II; and

Fig. 74 is a view showing an example of optical path setting in the photonic-IP network using conventional nodes of type III.

Description of the Preferred Embodiments

The embodiments of the present invention will be described next with reference to the accompanying drawings.

(First Embodiment)

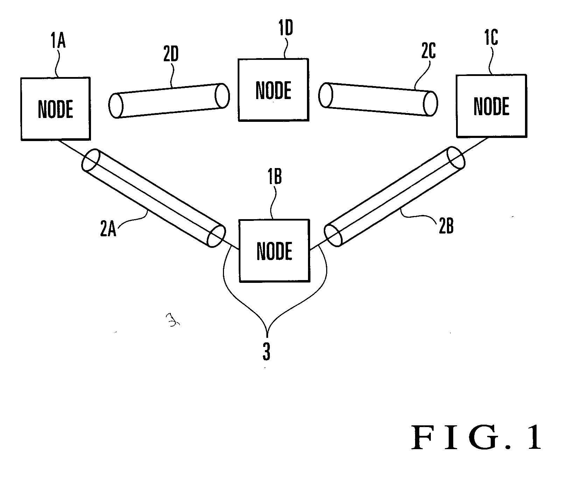

Fig. 1 shows the overall arrangement of an optical network according to the present invention. This optical network is constructed by nodes 1A, 1B, 1C, and 1D each of which is formed from an optical cross-connect apparatus, and links 2A, 2B, 2C, and 2D formed among the nodes 1A to 1D to transmit an optical signal by wavelength multiplexing. Optical paths which connect the nodes 1A to 1D are specified by the links 2A to 2D and wavelengths to be used. For example, an optical path 3 which connects the nodes 1A and 1C is formed by connecting a wavelength λ1 of the link 2A and a wavelength λ2 of the link 2B by the node 1B.

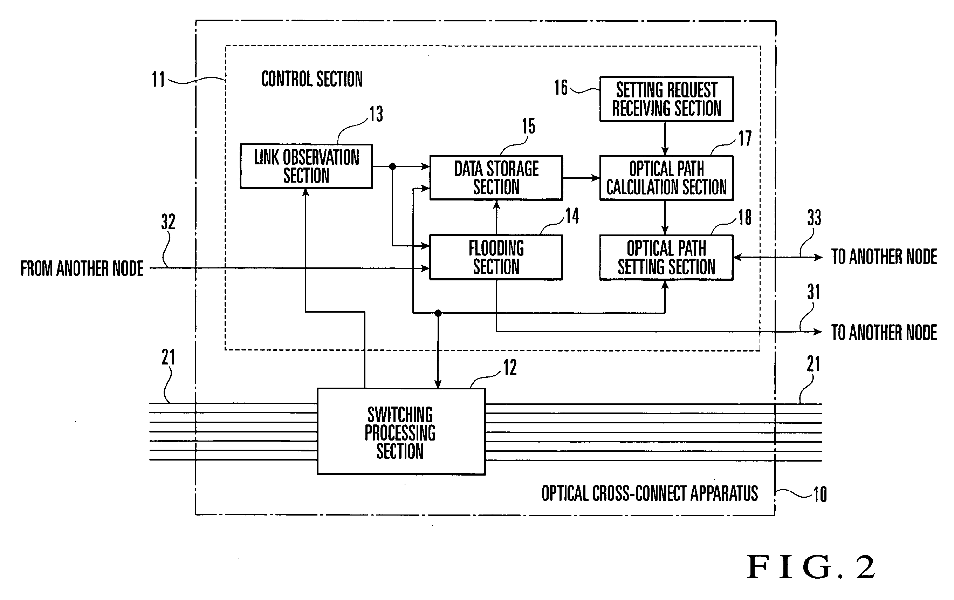

Fig. 2 shows an arrangement of an optical cross-connect apparatus which acts as one of the nodes 1A to 1D. An optical cross-connect apparatus 10 is formed from a control section 11 and switching section 12. The control section 11 combines a plurality of fiber links 21 to be connected to the optical cross-connect apparatus 10 and their wavelengths, thereby setting an optical path to be connected to the optical cross-connect apparatus 10. The switching section 12 executes switching to another node through the optical path set by the control section 11. When the optical cross-connect apparatus 10 acts as one of the nodes 1A to 1D of the optical network, the bundle of fiber links 21 acts as the links 2A to 2B.

The control section 11 comprises a link observation section 13 connected to the switching section 12, a flooding section 14 connected to the output side of the link observation section 13 and also connected to the optical cross-connect apparatus (or flooding section) of another node through control channels 31 and 32, a data storage section 15 connected to the output side of the link observation section 13 and the output side of the flooding section 14, a setting request receiving section 16, an optical path calculation section 17 connected to the output side of the data storage section 15 and the output side of the setting request receiving section 16, and an optical path setting section 18 connected to the optical path calculation section 17, data storage section 15, and switching section 12 and also connected to the optical cross-connect apparatus (or optical path setting section) of another node through a control channel 33.

The link observation section 13 observes the utilizations of all the plurality of fiber links 21 connected to the optical cross-connect apparatus 10 for each wavelength. The link observation section 13 may observe the utilizations of all wavelengths of the fiber links 21. However, when the use purpose of a specific wavelength is determined in advance, the utilizations of the limited number of wavelengths except the specific wavelength may be observed.

The flooding section 14 broadcasts, to the optical cross-connect apparatuses of the remaining nodes, information representing the utilizations of the fiber links 21 input from the link observation section 13. Hence, the flooding section 14 has a means for transmitting information from the link observation section 13 to an unspecified optical cross-connect apparatus through the control channel 31, and a means for receiving, as needed, information received from an unspecified optical cross-connect apparatus through the control channel 32 and transporting the information to the remaining unspecific optical cross-connect apparatuses through the control channel 31. The flooding section 14 acts as an information notification means for notifying the remaining optical cross-connect apparatuses of information and an information acquisition means for acquiring information from the remaining optical cross-connect apparatuses.

The data storage section 15 stores data about the link state in the optical network. When information is input from the link observation section 13 to the data storage section 15, or information is received from another optical cross-connect apparatus through the flooding section 14, the data storage section 15 updates stored link state data on the basis of these pieces of information.

A network operator who manages the optical network or the like inputs an optical path setting request to the setting request receiving section 16.

When an optical path setting request is received, the optical path calculation section 17 calculates an optical path in the optical network on the basis of the link state data at that time. The route and wavelength of the optical path are selected such that wavelength conversion is minimized in the optical cross-connect apparatus 10 acting as a node.

The optical path setting section 18 transmits the optical path information obtained by the optical path calculation section 17 to the optical cross-connect apparatus of another node through the control channel 33. In addition, on the basis of the optical path information, the optical path setting section 18 combines the plurality of fiber links 21 connected to the optical cross-connect apparatus 10 and their wavelengths and sets, in the switching section 12, an optical path to be connected to the optical cross-connect apparatus 10.

The optical cross-connect apparatus 10 employs a protocol based on the routing protocol of a communication network used as an Internet Protocol (IP) network to broadcast the link utilization in the optical network. An example of the routing protocol used as a base is Open Shortest Path First (OSPF) (reference 1 (J. Moy, "OSPF Version 2", RFC2328, 1998)). In OSPF, a node connected to a link manages the link state and broadcasts it to a communication network (reference 1 and reference 2 (R. Coltun, "The OSPF Opaque LSA Option", RFC2370, 1998)). OSPF of an IP network can be extended to an optical layer (A. Banerjee, J. Drake, J.P. Lang, B. Turner, K. Kompella, and Y. Rekhter, "Generalized Multiprotocol Label Switching: An Overview of Routing and Management Enhancements", IEEE Commun. Mag., pp. 144-150, Jan. 2001). When this OSPF is used, the link state of an optical layer can also be managed.

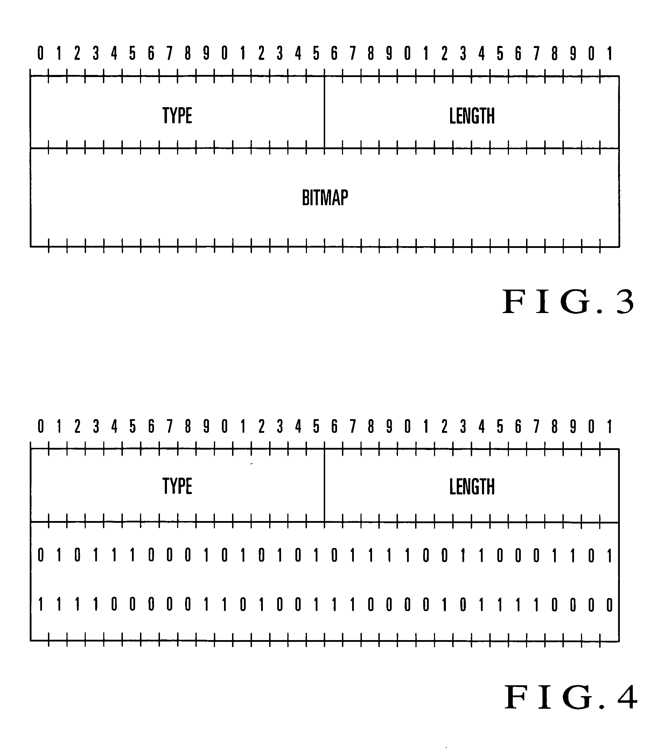

Figs. 3 and 4 show examples of the format of information representing the utilization of the fiber links 21, which is output from the link observation section 13. The information output from the link observation section 13 represents, using the bitmap format, whether each wavelength of the plurality of fiber links 21 connected to the optical cross-connect apparatus 10 is used or unused.

More specifically, referring to Fig. 3, the type of information, and here, the used/unused state of each wavelength is indicated in the "type" field in the bitmap format. The length of the format is indicated in the "length" field. The used/unused state of each wavelength is indicated in the "bitmap" field.

All links in the optical network correspond to each bit of the "bitmap" for each wavelength. Hence, as shown in Fig. 4, when "1" is set for each bit representing a used wavelength and "0" for each bit representing an unused wavelength, the utilizations of the links in the optical path communication network can be represented. For wavelengths which need not be observed, corresponding bits can be omitted.

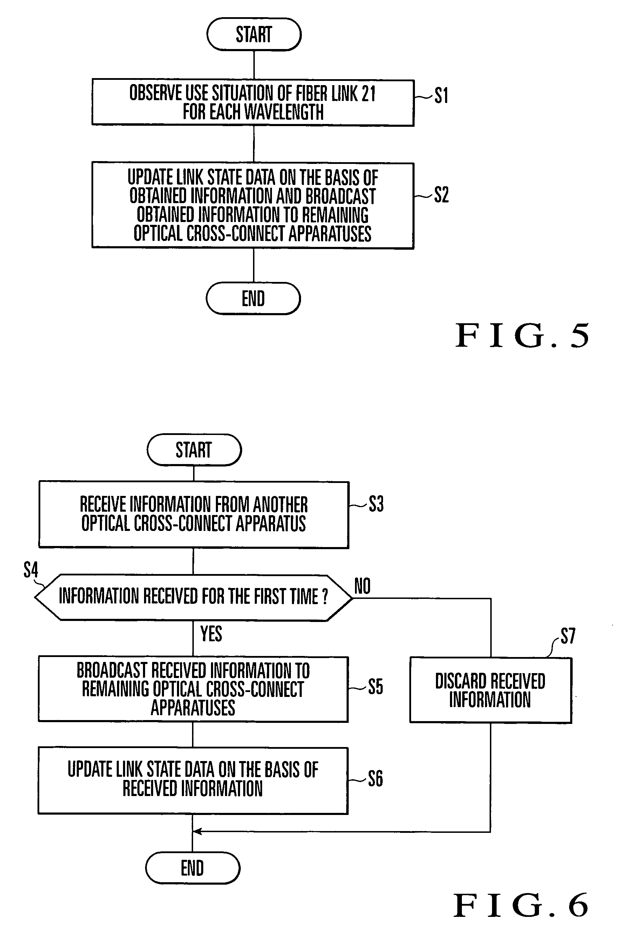

Optical path setting operation by the optical cross-connect apparatus 10 shown in Fig. 2 will be described next with reference to Figs. 5 to 7.

The optical cross-connect apparatus 10 in the optical network causes the link observation section 13 to periodically observe, for each wavelength, whether each of the plurality of fiber links 21 connected to the apparatus 10 is used or unused (Fig. 5: step S1).

Information representing the observed utilization is sent to the data storage section 15 to update link state data stored in the data storage section 15. The information representing the observed utilization is also sent to the flooding section 14. The flooding section 14 broadcasts the information to the optical cross-connect apparatuses of the remaining nodes in the optical network through the control channel 31 (Fig. 5: step S2).

On the other hand, when the information representing the utilization of the fiber links is received from the optical cross-connect apparatus of another node in the optical network (Fig. 6: step S3), and it is information that has been received for the first time (Fig. 6: step S4, Yes), the information is broadcast from the flooding section 14 to the optical cross-connect apparatus of another node through the control channel 31 (Fig. 6: step S5). In addition, the received information is sent from the flooding section 14 to the data storage section 15 to update the link state data stored in the data storage section 15 (Fig. 6: step S6).

When the operation in steps S3 to S6 is executed by all optical cross-connect apparatuses in the optical network, the information representing the utilization of the fiber links in the optical network can propagate through the entire optical network. Hence, all the optical cross-connect apparatuses can share single link state data on which the utilization of the fiber links is reflected.

When information that has been received once is received again (Fig. 6: steps S3 and S4, No), the received information is discarded by the flooding section 14 (Fig. 6: step S7).

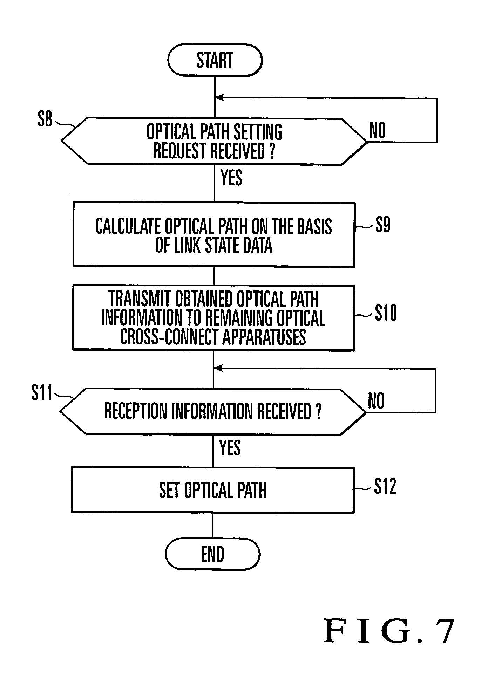

When an optical path setting request is input from the setting request receiving section 16 (Fig. 7: step S8, Yes), the optical path calculation section 17 calculates the route and wavelength of an optical path in the optical network while referring to the link state data on which the utilization of the fiber links in the optical network is reflected (Fig. 7: step S9). Optical path information obtained by the optical path calculation section 17 is sent to the optical path setting section 18. The optical path information is transmitted from the optical path setting section 18 to the optical cross-connect apparatus of another node in the optical network through the control channel 33 (Fig. 7: step S10).

After that, the node that has received the optical path information also sequentially transports it to another node. When the optical path information reaches the node at the end of the optical network, the optical cross-connect apparatus of that node returns information representing reception of the optical path information through a route different from that of the optical path information.

When the optical cross-connect apparatus 10 which has calculated the optical path information receives the information representing reception of the optical path information (Fig. 7: step S11, Yes), the optical cross-connect apparatus combines the plurality of fiber links 21 connected to the optical cross-connect apparatus 10 and their wavelengths on the basis of the optical path information and sets, in the switching section 12, an optical path to be connected to the optical cross-connect apparatus 10 (Fig. 7: step S12). This setting is performed while confirming on the basis of the link state data whether a specific wavelength of the fiber links 21 overlaps a plurality of optical paths.

The optical cross-connect apparatuses of an end node and relay nodes in the optical network can also form optical paths by executing the operation in step S12 after returning or transporting the information representing reception of the optical path information.

Accordingly, the utilization of the fiber links 21 is changed. Each wavelength is observed by the link observation section 13, and the link state data stored in the data storage section 15 is updated. In addition, information representing the observed utilization is broadcast from the flooding section 14.

As described above, in this embodiment, collection of the utilization of all fiber links in the optical network and calculation and setting of optical paths based on the utilization can be done on the optical cross-connect apparatus side, i.e., on the node side. Since the centralized control apparatus 504 shown in Fig. 66 need not be used for optical path setting, the load on the network operator can be reduced. In addition, after a setting request is received, the optical path can quickly be set.

Additionally, the utilization of all fiber links in the network, i.e., the used/unused state of each wavelength is reflected on the link state data of the optical cross-connect apparatus, an optical path can be set while minimizing wavelength conversion in the optical cross-connect apparatus acting as a node. Since it is unnecessary to arrange expensive wavelength converters in the optical cross-connect apparatus, an inexpensive optical cross-connect apparatus and optical network can be provided.

In the above-described case, the optical cross-connect apparatus 10 broadcasts information representing the utilization of the fiber links 21, which is obtained by the link observation section 13. However, link state data updated in the data storage section 15 on the basis of the utilization of the fiber links 21 may be sent to the flooding section 14 and then broadcast to the optical cross-connect apparatus of another node in the optical network.

The control sections of the optical cross-connect apparatuses transmit/receive information representing the link utilization in a form of a packet and therefore have the control channels 31 to 33 independently of the fiber links 21. When a means for extracting a packet is arranged in the switching section 12, the information representing the link utilization can be transmitted/received between the control sections 11 using the fiber link 21 without the control channels 31 to 33.

It is only necessary that at least one optical cross-connect apparatus in the optical network has the setting request receiving section 16 and optical path calculation section 17 of the optical cross-connect apparatus 10. Relay nodes and destination node -in the optical network need not always have them.

(Second Embodiment)

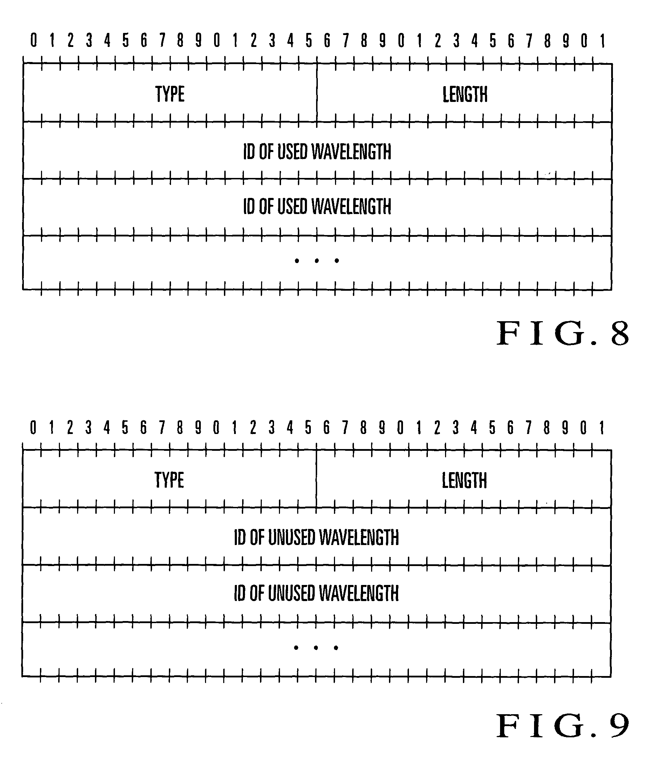

Figs. 8 and 9 show still another example of the format of information representing the utilization of fiber links 21, which is output from a link observation section 13.

Figs. 3 and 4 show examples in which whether each wavelength of the fiber links 21 is currently used is indicated in the bitmap format. As shown in Fig. 8, in addition to "type" and "length", only the IDs (numbers) of currently used wavelengths may be indicated for wavelengths to be observed in the fiber links 21 connected to an optical cross-connect apparatus 10. IDs are individually assigned to the wavelengths to be observed in the wavelengths of all the fiber links in the optical network. Even with this method, it can be indicated whether each wavelength of the fiber links is currently used or unused.

As shown in Fig. 9, only the IDs (numbers) of currently unused wavelengths may be indicated.

(Third Embodiment)

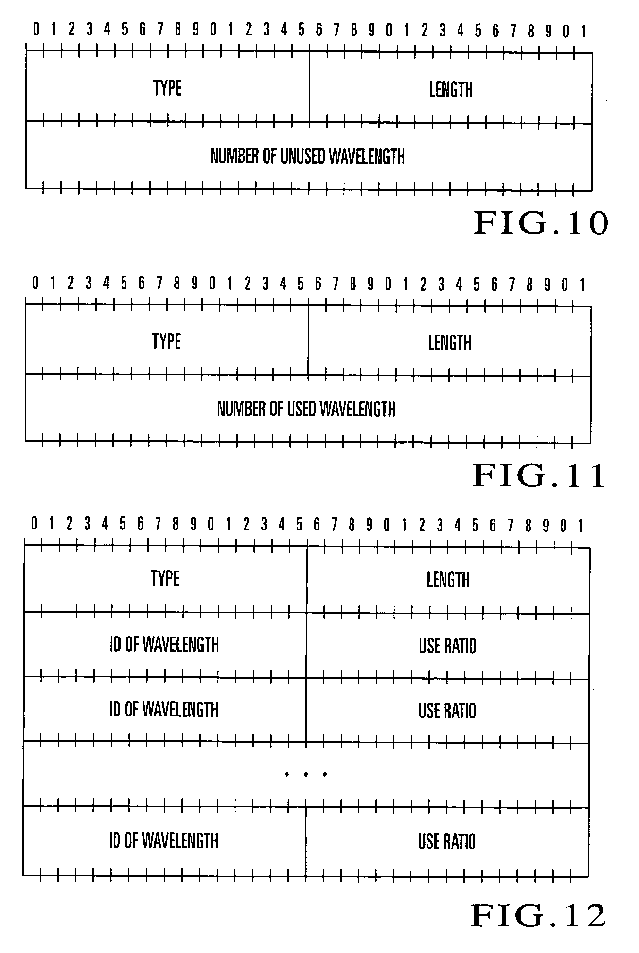

Figs. 10 and 11 show still another example of the format of information representing the utilization of fiber link 21, which is output from a link observation section 13. Figs. 3 and 4 show examples in which whether each wavelength of the fiber links 21 is currently used is indicated. Instead, the number of wavelengths for which optical paths can newly be set in the fiber links 21 connected to an optical cross-connect apparatus 10 may be indicated. More specifically, as shown in Fig. 10, in addition to "type" and "length", the number of wavelengths which are currently unused is indicated.

The total number of wavelengths of the fiber links 21 are known in advance. Hence, when the number of wavelengths which are currently unused is indicated, the ratio of currently unused wavelengths in the fiber links 21 can be known. In addition, if a new optical path is set for one of the currently unused wavelengths, how the ratio of unused wavelengths is changed can also be known. Hence, an optical path can be set by selecting a route including fiber links with a high ratio of unused wavelengths. This prevents generation of a bottleneck due to use of wavelengths. Similarly, as shown in Fig. 11, the number of currently used wavelengths may be indicated.

(Fourth Embodiment)

Fig. 12 shows still another example of the format of information representing the utilization of fiber links 21, which is output from a link observation section 13. Figs. 3 and 4 show examples in which whether each wavelength of the fiber links 21 is currently used is indicated. Instead, the statistical utilization of the fiber links 21 may be indicated in consideration of the past utilization. For example, as shown in Fig. 12, in addition to "type" and "length", a use ratio representing the probability of use of each wavelength per unit time is indicated in correspondence with the ID of the wavelength of the fiber links 21 connected to an optical cross-connect apparatus 10.

Accordingly, an optical path can be set by selecting fiber links with low use ratios and their wavelengths. This prevents generation of a bottleneck due to use of wavelengths.

Alternatively, a value obtained by adding and averaging the use ratios of all wavelengths of the fiber links 21 connected to the optical cross-connect apparatus 10 may be indicated. A value obtained by adding the use ratios of all wavelengths of the fiber links 21 may be indicated.

Information representing whether each wavelength of the fiber links 21 connected to the optical cross-connect apparatus 10 is currently used, the number of wavelengths of the fiber links 21 for which optical paths can newly be set, and the statistical utilization of the fiber links 21 considering the past utilization may the combined and indicated.

(Fifth Embodiment)

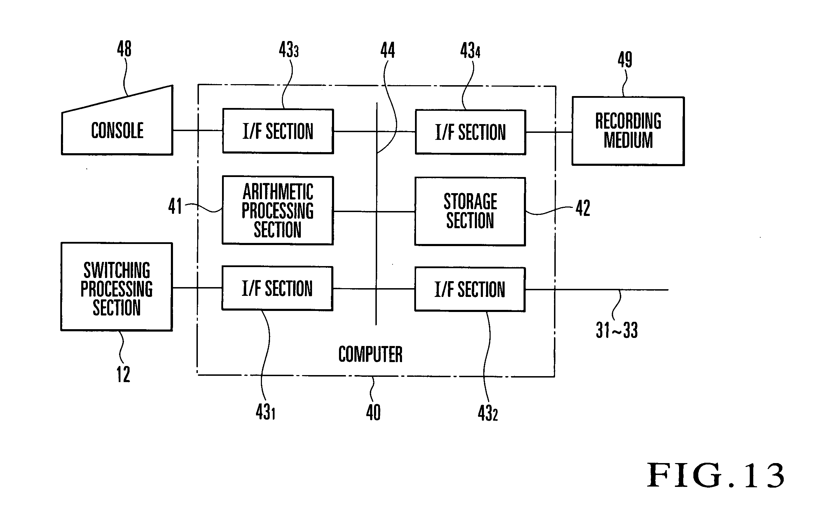

Fig. 13 shows another arrangement of the optical cross-connect apparatus. This optical cross-connect apparatus comprises a switching section 12, a computer 40 which operates under the control of a program, and a console 48 through which the network operator or user inputs an instruction to the computer 40.

In the computer 40, an arithmetic processing section 41, storage section 42, and interface sections (to be referred to as I/F sections hereinafter) $43_1$ to $43_4$ are connected to a bus 44. The I/F sections $43_1$ to $43_3$ interface to the switching section 12, control channels 31 to 33, and console 48, respectively.

The program that controls the operation of the computer 40 is provided as it is recorded on a recording medium 49 such as a magnetic disk or semiconductor memory. When the recording medium 49 is connected to the I/F section $43_4$, the arithmetic processing section 41 reads out the program written in the recording medium 49 and stores the program in the storage section 42. After that, the arithmetic processing section 41 executes the program stored in the storage section 42 on the basis of an instruction from the console 48 to implement a link observation section 13, flooding section 14, data storage section 15, optical path calculation section 17, and optical path setting section 18 shown in Fig. 2. A setting request receiving section 16 is implemented by the console 48. The program may be provided through a control channel such as the Internet.

(Sixth Embodiment)

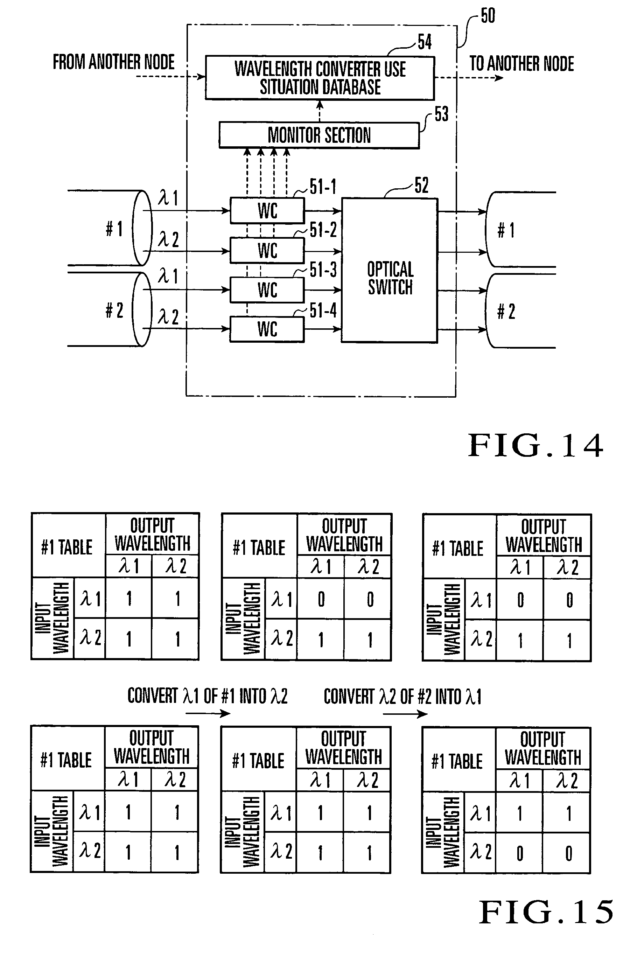

Figs. 14 and 15 show an arrangement of an optical cross-connect apparatus serving as a node of an optical network according to the present invention. Referring to Fig. 14, a node 50 (a modification of the optical cross-connect apparatus 10 shown in Fig. 2) has wavelength converters (WC) 51-1 to 51-4 which perform wavelength conversion for signal light components each having two wavelengths (a total of four wavelengths), which are input from two fiber links #1 and #2, and an optical switch 52 which switches the path and outputs the signal light components to two fiber links #1 and #2. Each wavelength converter has a tunable arrangement capable of converting input signal light into an arbitrary wavelength. A monitor section 53 monitors the utilization of the wavelength converters 51-1 to 51-4 and stores the obtained utilization in a wavelength converter utilization database 54. The wavelength converter utilization database 54 transmits/receives the data of wavelength converter utilization to/from another node. The monitor section 53 has tables as shown in Fig. 15, which indicate whether an input wavelength can be converted into an output wavelength in correspondence with fiber links #1 and #2. In the initial state, any wavelength conversion from input wavelengths λ1 and λ2 to output wavelengths λ1 and λ2 is possible. Hence, "1" is set for both the #1 table and the #2 table.

For example, when signal light with the wavelength λ1 from fiber link #1 is converted into the wavelength λ2 by the wavelength converter 51-1, the value of the input wavelength λ1 in the #1 table changes to "0" representing a wavelength conversion disable state. Since signal light with the wavelength λ2 from fiber link #1 can be converted into either the wavelength λ1 or λ2, the value remains "1". Next, when signal light with the wavelength λ2 from fiber link #2 is converted into the wavelength λ1 by the wavelength converter 51-4, the value of the input wavelength λ2 in the #2 table changes to "0" representing the wavelength conversion disable state. Since signal light with the wavelength λ1 from fiber link #2 can be converted into either the wavelength λ1 or λ2, the value remains "1".

(Seventh Embodiment)

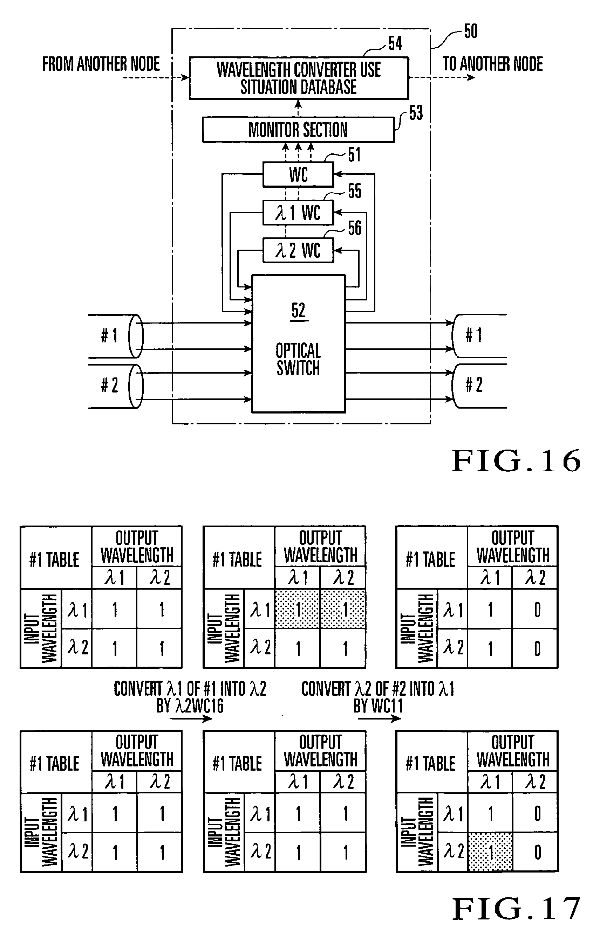

Figs. 16 and 17 show still another arrangement of a node of an optical network according to the present invention. Referring to Fig. 16, a node 50 has an optical switch 52 which switches the paths of signal light components each having two wavelengths (a total of four wavelengths), which are input from two fiber links #1 and #2, and wavelength converters 51, 55, and 56 which are connected between the input and output of the optical switch 52 to perform wavelength conversion for signal light. The wavelength converter (WC) 51 has a tunable arrangement capable of converting input signal light into an arbitrary wavelength. The wavelength converter (λ1WC) 55 performs wavelength conversion to a wavelength λ1. The wavelength converter (λ2WC) 56 performs wavelength conversion to a wavelength λ2. A monitor section 53 monitors the utilization of the wavelength converters 51, 55, and 56 and stores the obtained utilization in a wavelength converter utilization database 54. The wavelength converter utilization database 54 transmits/receives the data of wavelength converter utilization to/from another node. The monitor section 53 has tables as shown in Fig. 17, which indicate whether an input wavelength can be converted into an output wavelength in correspondence with fiber links #1 and #2. In the initial state, any wavelength conversion from input wavelengths λ1 and λ2 to output wavelengths λ1 and λ2 is possible. Hence, "1" is set for both the #1 table and the #2 table.

For example, signal light with the wavelength λ1 from fiber link #1 is connected to the wavelength converter 56 and converted into the wavelength λ2. In terms of form, connection to the remaining wavelength converters 51 and 55 is possible. Hence, the value of the input wavelength λ1 in the #1 table remains "1" (indicated by hatching in Fig. 17). Since signal light with the wavelength λ2 from fiber link #1 can be converted into either the wavelength λ1 or λ2, the value remains "1".

Next, signal light with the wavelength λ2 from fiber link #2 is converted into the wavelength λ1 by the tunable wavelength converter 51. Of the three wavelength converters, only the wavelength converter 55 which performs wavelength conversion to the wavelength λ1 is unused. Hence, the values of the input wavelengths λ1 and λ2 in the #2 and #1 tables change to "0" representing that wavelength conversion to the wavelength λ2 is disabled.

Information in the tables of the monitor section 53 as shown in Fig. 15 or 17 indicates the utilization of the wavelength converters in that node. When this information is shared with the remaining nodes, the utilization of wavelength converters in the entire optical network can be grasped. Accordingly, the utilization (wavelength conversion enable/disable state) of wavelength converters in each node can be taken into consideration. In calculating the route of an optical path, optimum wavelengths can be efficiently selected while preventing selection of a route where no physical path can be set.

(Format to be Used to Send Wavelength Converter Utilization)

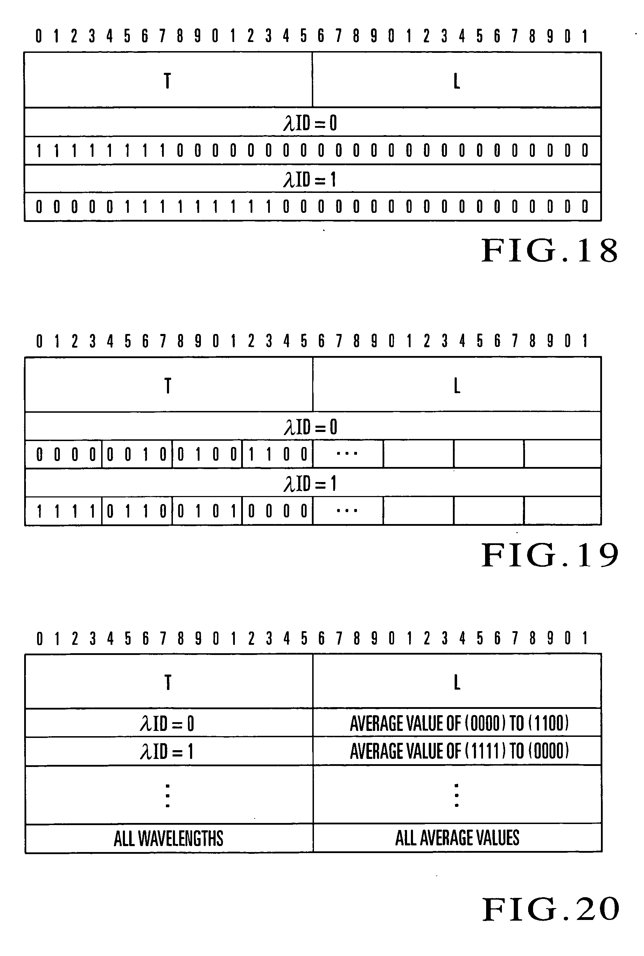

Fig. 18 shows a format to be used to send a wavelength converter utilization in each node. Referring to Fig. 18, T (type) indicates the type (utilization of wavelength converters) to be sent, and L (length) indicates the length of information to be sent. Then, the utilization of wavelength converters is indicated by a bitmap. Figs. 15 and 17 show wavelength conversion to two wavelengths (λ1 and λ2). Fig. 18 shows the enable/disable state of wavelength conversion to 32 wavelengths. For, e.g., a channel of wavelength ID = 0, wavelength conversion to wavelength IDs 0 to 7 is possible. In the above example, the wavelength conversion enable/disable state is indicated by "1"/"0". For example, in the arrangement shown in Fig. 16, if the tunable wavelength converter 51 or fixed wavelength converter 55 or 56 comprises a plurality of wavelength converters, their states are represented by cost values. Accordingly, wavelengths can be finely designated by, e.g., preferentially using channels which are capable of wavelength conversion and have small cost values.

(Format Which Indicates Cost Values)

Fig. 19 shows a format which indicates cost values. For, e.g., a channel of wavelength ID = 0, no wavelength conversion is performed, and the cost value is as small as "0000". Assume that the numbers of wavelength converters from wavelength ID = 0 to wavelength IDs = 1, 2, 3 are, e.g., 10, 5, and 1. The channels are set to low cost "0010" to high cost "1100" in accordance with the number of wavelength converters. This also applies to a channel of wavelength ID = 1.

(Format Which Indicates Average Value of Cost Values for Each Input Wavelength)

Fig. 20 is a view showing a format which indicates the average value of cost values for each input wavelength. In this case, the cost values of output wavelengths are averaged and set for each input wavelength. For, e.g., a channel of wavelength ID = 0, the average value of "0000" to "1100" is set. Alternatively, the sum of the cost values may be set. The average value of cost values assigned to all input wavelengths may be added. When cost values are averaged instead of assigning them to input/output wavelengths, the format to be sent can be made small, and the load on the network can be reduced.

In the above-described arrangement, the wavelength converters may be replaced with regeneration, reshaping and retiming devices, and the utilization of each regeneration, reshaping and retiming device may be monitored by the monitor section. Alternatively, the utilization of both the wavelength converters and regeneration, reshaping and retiming devices may be monitored by the monitor section.

The values may be sent from the monitor section of each node at a predetermined time interval, when the utilization is more than or less than a predetermined reference value, or in the initial state without use of any wavelength converter or regeneration, reshaping and retiming device.

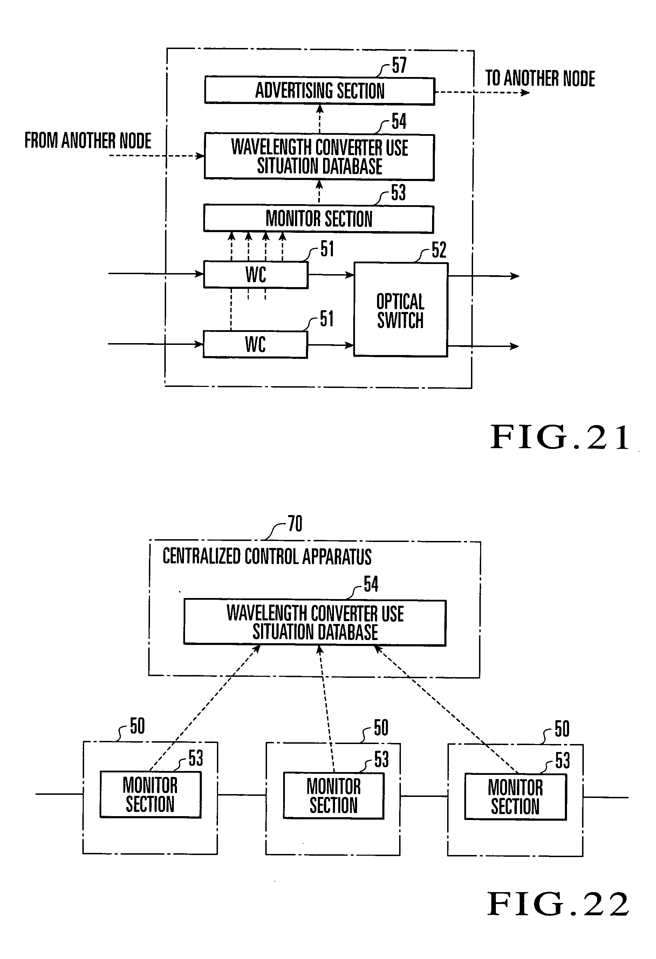

In the embodiments shown in Figs. 14 and 16, the wavelength converter utilization database 54 transmits/receives the data of wavelength converter utilization to/from another node. Instead, an advertising section 57 may be arranged, as shown in Fig. 21. The advertising section 57 may transmit the data of wavelength converter utilization to the next node. Fig. 21 shows an arrangement corresponding to the node shown in Fig. 14. This arrangement also applies to the node shown in Fig. 16. All data in the wavelength converter utilization database 54 may be transmitted. Alternatively, a difference corresponding to a change in utilization from the preceding transmission time may be transmitted.

As shown in Fig. 22, a centralized control apparatus 70 may be arranged for the nodes 50 to collect the data of wavelength converter utilization from the monitor sections 53 of the respective nodes and store the data in the wavelength converter utilization database 54 of the centralized control apparatus 70.

In the present invention, the information (wavelength conversion enable/disable state) of utilization of the wavelength conversion capability and regeneration, reshaping and retiming capability in each node is shared in the entire network whereby the wavelength conversion capability and regeneration, reshaping and retiming capability are suppressed to a necessary minimum level to reduce the cost of the optical network. A routing section (not shown) of a node integrates costs for use of wavelength converters and links for all route candidates from a source node on the originating side of a desired route to a destination node on a terminating side of the desired route, and selects a route with a minimum cost as the desired route. A detailed example of routing of the optical network will be described below.

A method of assigning a cost value to each conversion wavelength in each node will be described. When a wavelength converter is used in a node where the number of unused wavelength converters is small, it puts pressure on the remaining resource of the node. To prevent this, a small cost value is assigned to a node where the number of equipped wavelength converters or the number of unused wavelength converters is large. For example, the reciprocal of the number of equipped wavelength converters or the number of unused wavelength converters can be assigned as a cost value. However, when the number of equipped wavelength converters or the number of unused wavelength converters is 0, the cost value is infinite (wavelength conversion is impossible). In this case, a predetermined value $\alpha$ except 0 to 1 is set and used to indicate a cost value format or calculate a route (to be described below).

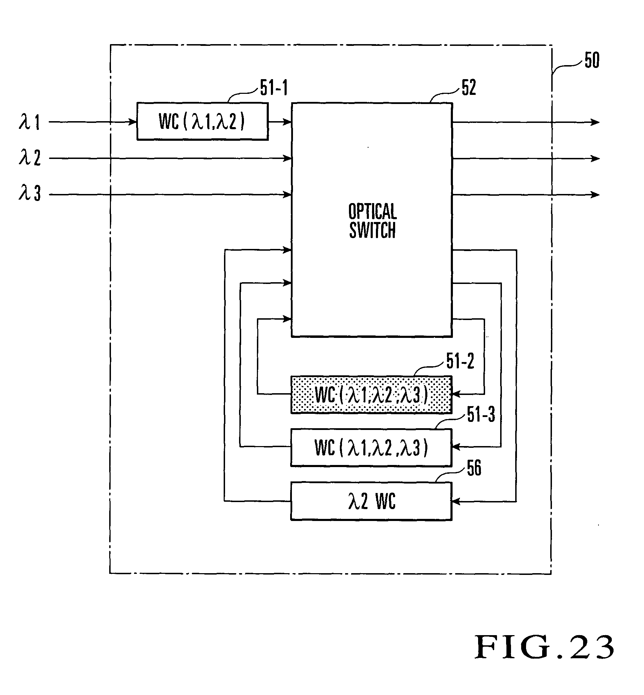

An example of cost value calculation will be described on the basis of the node arrangement shown in Fig. 23. Referring to Fig. 23, the wavelength converter (WC) 51-1 connected to the input port of the node 50 has a tunable arrangement capable of wavelength conversion to the wavelength $\lambda 1$ or $\lambda 2$. The wavelength converters (WC) 51-2 and 51-3 connected between the input and output ports of the optical switch 52 have a tunable arrangement capable of wavelength conversion to the wavelength $\lambda 1$, $\lambda 2$, or $\lambda 3$. The wavelength converter 56 ($\lambda 2$WC) connected between the input and output ports of the optical switch 52 has an arrangement capable of wavelength conversion to the wavelength $\lambda 2$. The wavelength converter 51-2 has already been used. On the basis of the number of equipped wavelength converters, the cost values corresponding to the conversion wavelengths are

$\lambda 1$ : 1/3 (three wavelength converters 51-1, 51-2, and 51-3)
$\lambda 2$ : 1/4 (four wavelength converters 51-1, 51-2, 51-3, and 56)
$\lambda 3$ : 1/2 (two wavelength converters 51-2 and 51-3)

On the basis of the number of unused wavelength converters (wavelength conversion possibility), the cost values are

$\lambda 1$ : 1/2 (two wavelength converters 51-1 and 51-3)
$\lambda 2$ : 1/3 (three wavelength converters 51-1, 51-3, and 56)
$\lambda 3$ : 1/1 (one wavelength converter 51-3)

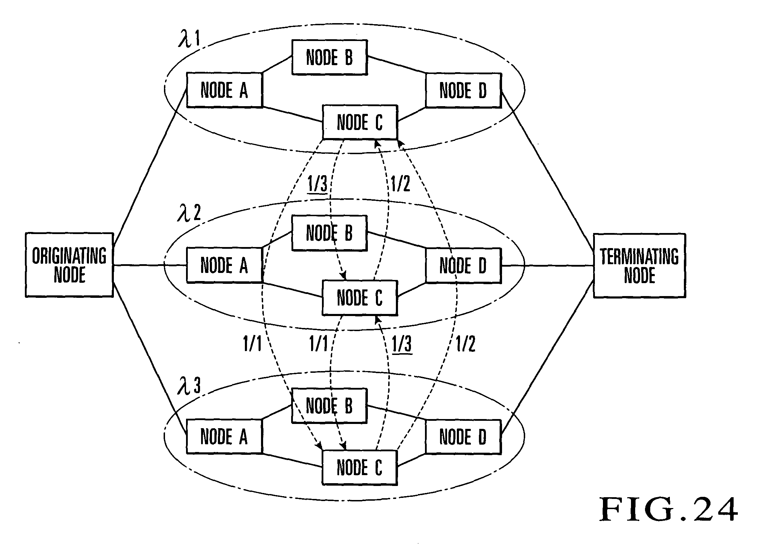

Assume that in an optical network in which three wavelengths ($\lambda 1$, $\lambda 2$, and $\lambda 3$) are multiplexed, the networks of the respective wavelengths are parallelly arranged. For example, the cost values based on the number of unused wavelength converters can be given as shown in Fig. 24. Numerical values represented by fractions indicate cost values for the conversion wavelengths λ1, λ2, and λ3 in the node C.

Assume that three signal light components having the wavelengths λ1, λ2, and λ3 are input to the node 50 in Fig. 23. The cost values for the respective conversion wavelengths with respect to an input wavelength will be examined. On the basis of the number of equipped wavelength converters, the cost values are

$$\lambda1 \rightarrow \lambda2 : 1/4$$
$$\lambda1 \rightarrow \lambda3 : 1/2$$
$$\lambda2 \rightarrow \lambda1 : 1/2$$
$$\lambda2 \rightarrow \lambda3 : 1/2$$
$$\lambda3 \rightarrow \lambda1 : 1/2$$
$$\lambda3 \rightarrow \lambda2 : 1/3$$

On the basis of the number of unused wavelength converters (wavelength conversion possibility), the cost values are

$$\lambda1 \rightarrow \lambda2 : 1/3$$
$$\lambda1 \rightarrow \lambda3 : 1/1$$
$$\lambda2 \rightarrow \lambda1 : 1/1$$
$$\lambda2 \rightarrow \lambda3 : 1/1$$
$$\lambda3 \rightarrow \lambda1 : 1/1$$
$$\lambda3 \rightarrow \lambda2 : 1/2$$

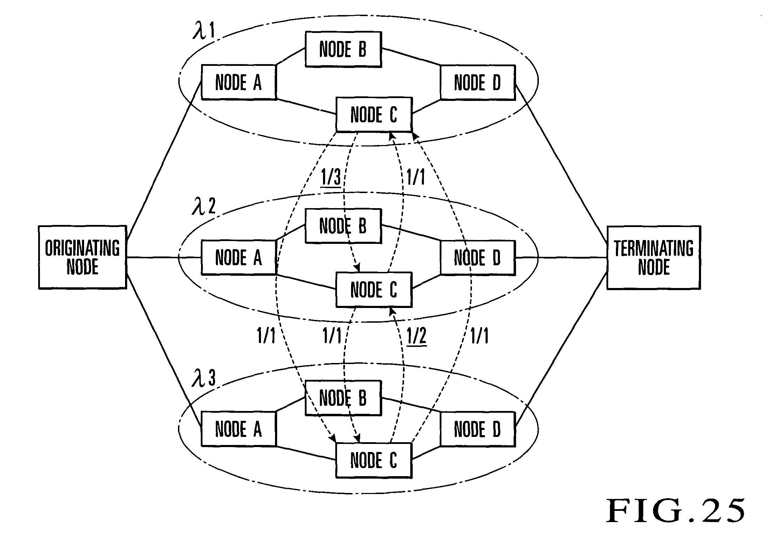

Assume that in an optical network in which three wavelengths (λ1, λ2, and λ3) are multiplexed, the networks of the respective wavelengths are parallelly arranged. For example, the cost values for the conversion wavelengths, which are based on the number of unused wavelength converters, can be given as shown in Fig. 25. Figs. 24 and 25 will be compared. In Fig. 24, the cost value for, e.g., the conversion wavelength λ2 is 1/3 independently of the input wavelength, as is indicated by underlines. In Fig. 25, the cost value is 1/3 for the input wavelength λ1 and 1/2 for the input wavelength λ3.

The wavelength conversion costs obtained in the above way can be used for route calculation together with the link costs between the nodes. The costs may be weighted by the number of wavelength converters (and the number of regeneration, reshaping and retiming devices) and the number of wavelengths multiplexed in the fiber links. For example, when the number of wavelength converters is smaller than the number of wavelengths multiplexed in the fiber links, a great deal of weight is placed on the wavelength conversion costs because use of the wavelength converters has great influence on the entire network.

Fig. 19 shows an example of the format of cost value indication. To indicate fraction values as described above, the following method can be employed. First, each of the calculated cost values is converted into a floating-point number (e.g., $5.0 \times 10^{-1}$). The floating-

point number is expressed by a format of 32-bit floating-point representation. The maximum value of values that can be expressed by the 32-bit floating-point representation is assigned to the cost value α which represents that wavelength conversion is impossible.

When a cost value (0 to 1) is expressed by 4-bit data, the cost values are linearly assigned to "0000" to "1110", and the cost value α which represents that wavelength conversion is impossible is assigned to "1111". All cost values smaller than a given threshold value are assigned to "0000". Cost values from the threshold value to 1 are linearly assigned to "0000" to "1110". The cost value α which represents that wavelength conversion is impossible is assigned to "1111".

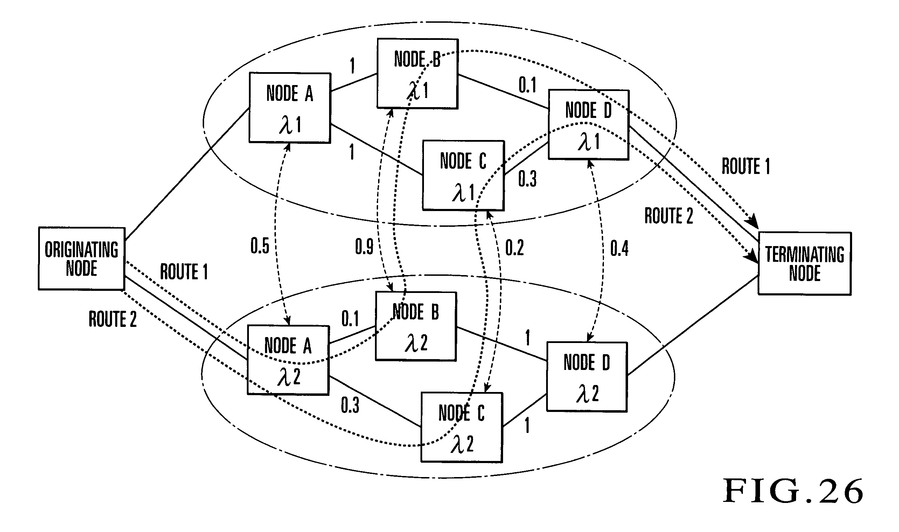

Fig. 26 shows the first example of routing of the optical network. When it is regarded that two wavelengths (λ1 and λ2) are multiplexed in the optical network, and the networks of the respective wavelengths are parallelly arranged, the wavelength conversion capability can be regarded as a route of movement between the arrangement positions. The numerical values in Fig. 26 represent link costs and wavelength conversion costs. In this example, the less the remaining resource is, the higher the cost becomes. The remaining wavelength conversion resource decreases in the order of the node C, node D, node A, and node B. The wavelength conversion cost from the wavelength λ1 to λ2 equals that from the wavelength λ2 to λ1. This also applies to the link costs. A link with "1" has no remaining resource (used) anymore.

Under the above conditions, in the route from a source node to a destination node, wavelength conversion must be performed in the node B or C. When only the link costs are taken into consideration, route 1 (source node - node A (λ2) - node B (λ2/λ1) - node D (λ1) - destination node) is employed. When the wavelength conversion costs are also taken into consideration, route 2 (source node - node A (λ 2) - node C (λ2/λ1) - node D (λ1) - destination node) is employed. For such routing, the monitor function of the present invention is used.

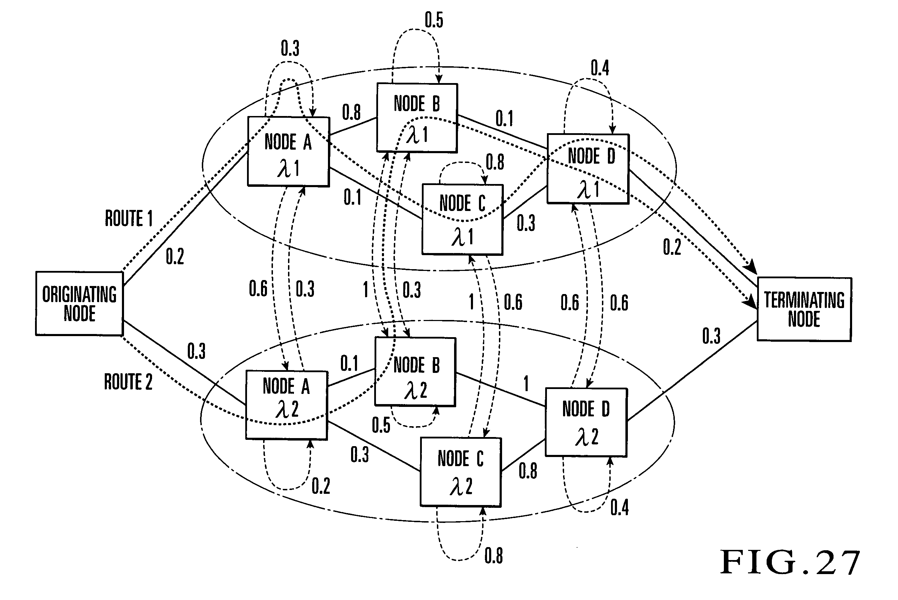

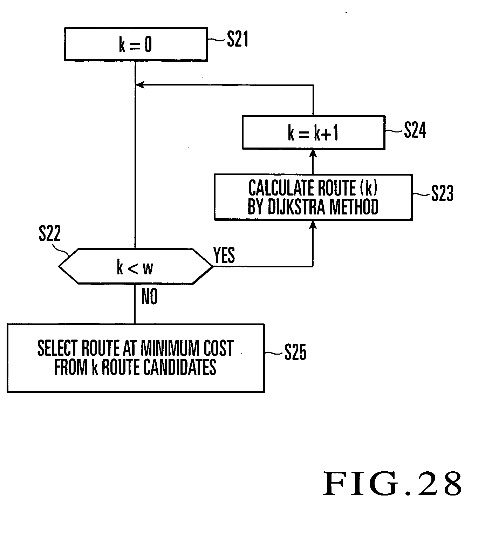

Fig. 27 shows the second example of routing of the optical network. In this example, use of a regeneration, reshaping and retiming device itself in each node is regarded as an moving action from a link place to the same node on another link plane. A cost value is set as a hop. An algorithm is used, which calculates, as a hop, even a route that passes by using a wavelength converter or regeneration, reshaping and retiming device and selects a route where the total cost value from the source node to the destination node is minimum. When the source node and the node of the next hop are connected by a plurality of fiber links and wavelengths, one route is determined as the first hop. A route from this point is calculated by the Dijkstra method shown in Fig. 28 (e.g., reference: A.V. Aho et al., "Data Structures and Algorithms", Baifukan (ISBN4-563-00791-9), p. 179). Referring to Fig. 28, w is the total number of wavelengths, and k is the start wavelength. The first route is selected (step S21). If an unselected route remains (k < w) (step S22: YES), the cost of the route (k) is calculated by Dijkstra calculation (step S23). The next route is selected (k = k + 1) (step S24), and the flow returns to step S22. This processing is repeated for all routes to the next hop. The route with the minimum cost value is selected from the plurality of obtained route candidates (step S25).

In the second example, the cost values for the respective conversion wavelengths are calculated individually with respect to the input wavelength. For example, the wavelength conversion cost from the wavelength $\lambda 1$ to the wavelength $\lambda 2$ is 0.6. The wavelength conversion cost from the wavelength $\lambda 2$ to the wavelength $\lambda 1$ is 0.3. The remaining conditions are the same as in the first example. Under the above conditions, when route 1 from the source node to the destination node passes through the source node ($\lambda$ 1) - node A ($\lambda 1$, regeneration, reshaping and retiming device) - node C ($\lambda 1$) - node D ($\lambda 1$) - destination node, the total cost is 1.1.

In route 2, wavelength conversion is performed in the node B. When route 2 passes through the source node ($\lambda$ 2) - node A ($\lambda 2$) - node B ($\lambda 2/\lambda 1$) - node D ($\lambda$ 1) - destination node, the total cost is 1.0. Hence, route 2 whose total cost is minimum is employed.

(Eighth Embodiment)

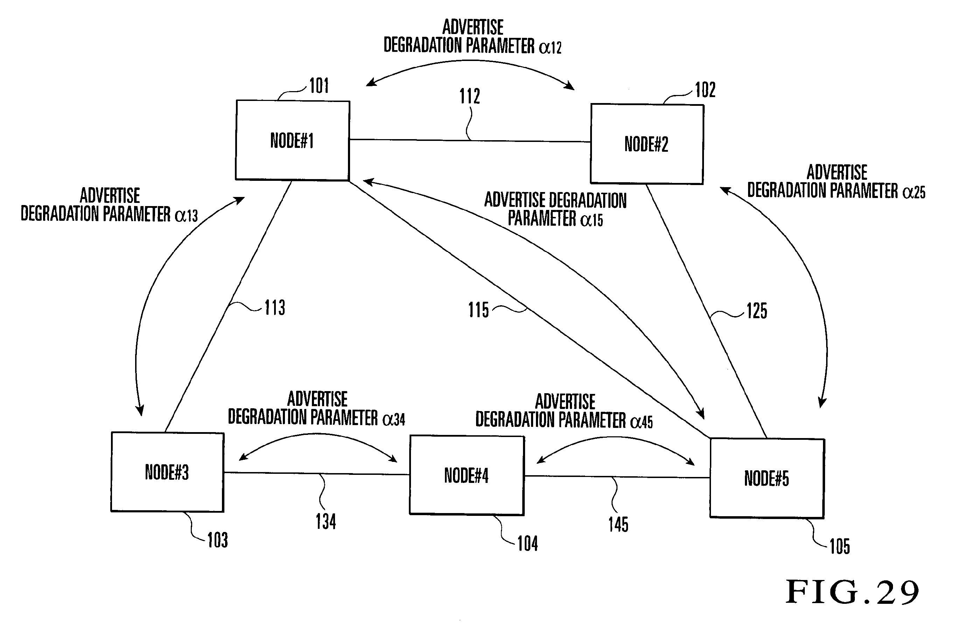

Fig. 29 shows the arrangement of an optical network according to the eighth embodiment of the present invention. For the descriptive convenience, Fig. 29 illustrates only node #1 (101), node #2 (102), node #3 (103), node #4 (104), node #5 (105), a link 112 which connects nodes #1 and #2, a link 113 which connects nodes #1 and #3, a link 125 which connects nodes #2 and #5, a link 134 which connects nodes #3 and #4, and a link 145 which connects nodes #4 and #5. However, the present invention can be applied to optical networks in various forms.

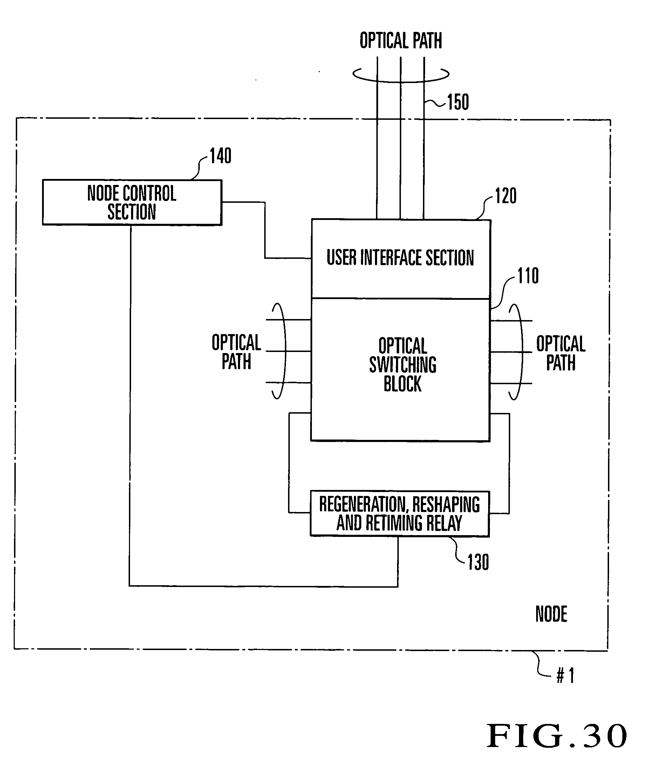

Fig. 30 shows the arrangement of a node (corresponding to the optical cross-connect apparatus 10 shown in Fig. 2) in the optical network shown in Fig. 29 according to the eighth embodiment of the present invention. Fig. 30 shows the arrangement of node #1 as an example. Nodes #2 to #5 can also have the same arrangement as in Fig. 30. Node #1 includes an optical switching block 110 which switches the optical path, a user interface section 120 including a transmitter/receiver connected to an optical path 150 to transmit/receive transmission signal light, a regeneration, reshaping and retiming relay 130 which recovers the signal-to-noise ratio or Q value of transmission signal light, and a node control section 140 which controls the optical switching block 110, user interface section 120, and regeneration, reshaping and retiming relay 130 and executes signaling processing for another node.

For each link such as a fiber link, a known cost C and a degradation parameter $\alpha$ of transmission signal light in a link section, which is newly introduced by the present invention, are defined. A value used as the degradation parameter value is determined in consideration of chromatic dispersion, higher-order chromatic dispersion, polarization dispersion, and nonlinear effect of a fiber link, and the noise characteristic of an optical relay and in accordance with a result of numerical analysis such as beam propagation method. A thus set degradation parameter is managed by the node control section in the node that accommodates the fiber links.

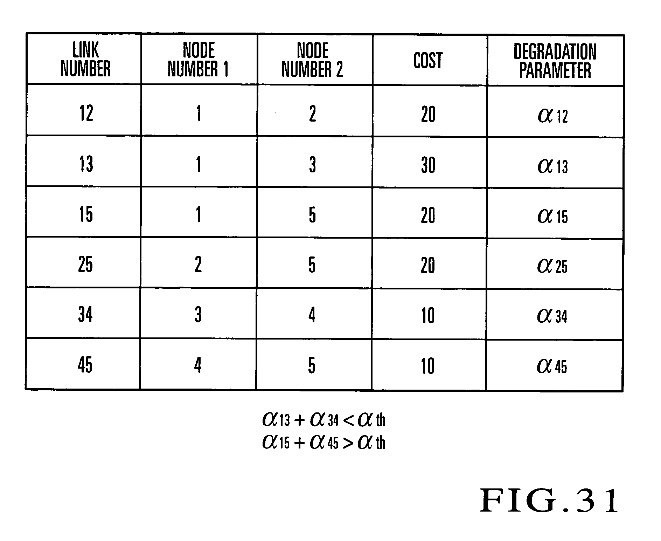

Fig. 31 explains optical-path routing information managed by the node control section in the node according to the eighth embodiment of the present invention. Optical-path routing information is represented, for, e.g., each link number Lij, node numbers I and J of the first and second nodes to be connected by the link Lij, a cost Cij of the link Lij, and a degradation parameter $\alpha ij$ of the link Lij. Each node advertises, to the remaining nodes, the degradation parameter of transmission signal light in a link section defined for each link accommodated by the node. For example, referring to Fig. 31, if a node having the node number I corresponding to the link number Lij is the node that accommodates the link, the node I advertises the degradation parameter $\alpha ij$ related to the link Lij to the remaining nodes.

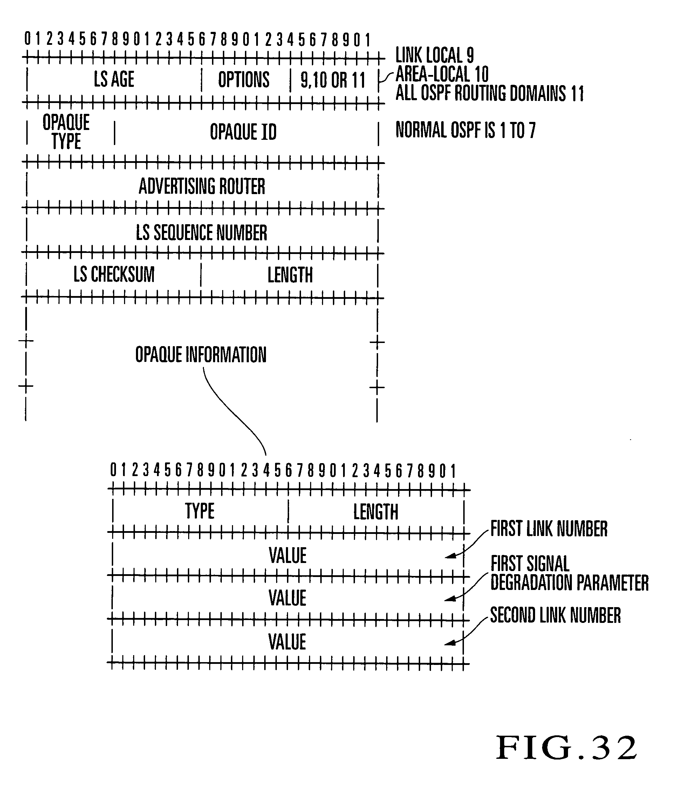

Fig. 32 explains degradation parameter advertising processing according to the eighth embodiment of the present invention. The degradation parameter of transmission signal light is stored in, e.g., Sub-TLV (Opaque Information) of an OSPF packet (IETF internet draft RFC1131/1247/1583) together with the link number. This information is exchanged between the nodes. Accordingly, the node control section 140 of each node can collect optical-path routing information as shown in Fig. 31. The node control section 140 of each node selects and determines a route of transmission signal light, i.e., optical-path routing using the optical-path routing information. For example, assume that in the optical network shown in Fig. 29, an optical path is to be set from node #1 to #4. Optical path candidates are the following three optical paths

(Optical path candidate 1) node #1 $\rightarrow$ node #3 $\rightarrow$ node #4
(Optical path candidate 2) node #1 $\rightarrow$ node #5 $\rightarrow$ node #4
(Optical path candidate 3) node #1 $\rightarrow$ node #2 $\rightarrow$ node #5 $\rightarrow$ node #4

According to the conventional shortest path tree generation method based on the link cost, when the optical-path routing information shown in Fig. 31 is used, the costs of optical path candidates 1 to 3 are

(Optical path candidate 1) SC1 = C13 + C34 = 30 + 10 = 40

(Optical path candidate 2) SC2 = C15 + C45 = 20 + 10 = 30
(Optical path candidate 3) SC3 = C12 + C25 + C45 = 20 + 20 + 10 = 50

Hence, optical path candidate 2 whose total cost SC is minimum is selected as an optical path from node #1 to node #4.

In the eighth embodiment of the present invention, an optical path is determined on the basis of the degradation parameter of transmission signal light in consideration of the transmission quality of a fiber link. In the optical path selection method based on the degradation parameter of transmission signal light according to the eighth embodiment of the present invention, for example, when the sum of degradation parameters of transmission signal light of an optical path candidate is larger than a threshold value like an expectation value $\alpha$th requested for error-free transmission, it is determined that the transmission signal light must be regenerated, reshaped and retimed midway in the route. This optical path candidate is rejected. The sum of degradation parameters of another optical path candidate is checked. An optical path candidate for which the sum of degradation parameters is smaller than the threshold value is finally selected as an optical path.

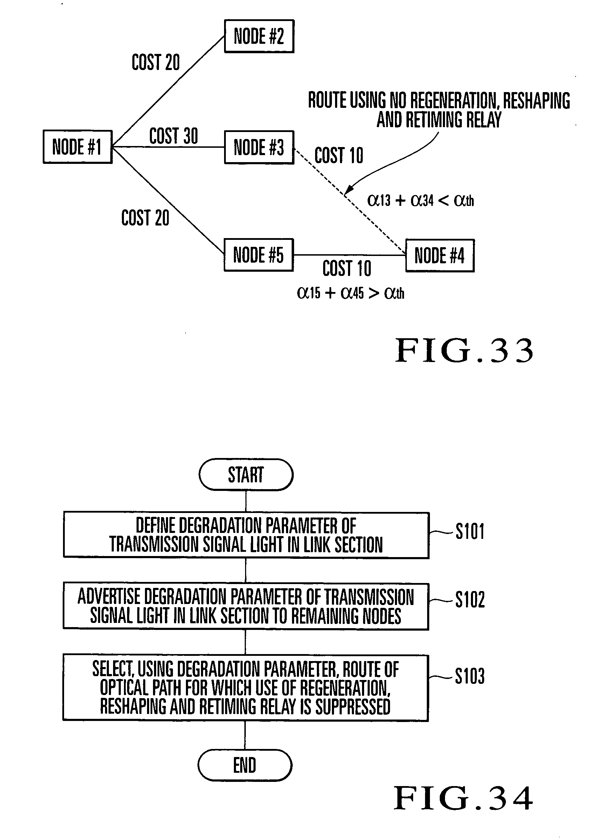

Optical-path routing determination processing using the optical-path routing information shown in Figs. 29 to 31 will be described with reference to Fig. 33. In this example, three optical path candidates from node #1 to node #4 are set as

(Optical path candidate 1) node #1 $\rightarrow$ node #3 $\rightarrow$ node #4
(Optical path candidate 2) node #1 $\rightarrow$ node #5 $\rightarrow$ node #4
(Optical path candidate 3) node #1 $\rightarrow$ node #2 $\rightarrow$ node #5 $\rightarrow$ node #4

For example, the sums of degradation parameters for two optical path candidates with small numbers of times of regeneration, reshaping and retiming relay, i.e., optical path candidates 1 and 2 are

(Optical path candidate 1) $\alpha$13 + $\alpha$34 < $\alpha$th
(Optical path candidate 2) $\alpha$15 + $\alpha$45 > $\alpha$th

For optical path candidate 2, the sum of degradation parameters of transmission signal light for the links 112 and 145 exceeds the threshold value $\alpha$th. Hence, regeneration, reshaping and retiming relay must be added once, as in optical path candidate 3. Hence, optical path candidate 1 with the smallest number of times of regeneration, reshaping and retiming relay is finally selected as an optical path with the shortest route.

Fig. 34 shows a routing method according to the eighth embodiment of the present invention.

Step S101: The degradation parameter of transmission signal light in a link section is defined for each link accommodated by each node.

Step S102: The degradation parameter of transmission signal light in a link section, which is defined for each link accommodated by each node, is advertised to the remaining nodes.

Step S103: In a node for which optical-path routing is to be made, the shortest route where use of regeneration, reshaping and retiming devices is suppressed is selected using the degradation parameter of transmission signal light in the link section.

As described above, according to the routing method of the eighth embodiment of the present invention, optical-path routing where use of regeneration, reshaping and retiming devices is suppressed can be made.

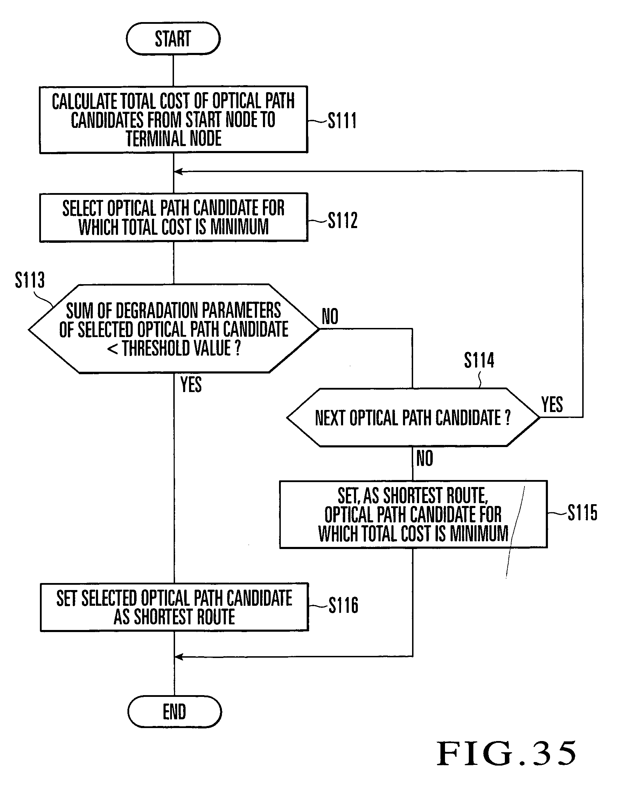

Alternatively, for example, in the eighth embodiment of the present invention, optical path candidates may be sequentially selected in ascending order of sums of link costs. When the sum of the degradation parameters of a selected optical path candidate is smaller than the threshold value, the optical path candidate may be selected as a final optical path. Fig. 35 shows shortest route setting processing according to the eighth embodiment of the present invention.

Step S111: The sums (e.g., SC1, SC2, and SC3) of costs of optical path candidates from a source node (e.g., node #1) to a destination node (e.g., node #4) are calculated.

Step S112: An optical path candidate (e.g., optical path candidate 2) with the minimum total cost is selected.

Step S113: It is determined whether the sum of degradation parameters (e.g., $\alpha$15 + $\alpha$45) of the selected optical path candidate (e.g., optical path candidate 2) is smaller than the threshold value (e.g., $\alpha$th). If the sum of degradation parameters is smaller than the threshold value, the flow advances to step S116. Otherwise, the flow advances to step S114.

Step S114: It is determined whether the next optical path candidate (e.g., optical path candidates 1 and 3) is present. If the next optical path candidate is present, the flow returns to step S112 to select an optical path candidate (e.g., optical path candidate 1) with the minimum total cost in the remaining optical path candidates. In step S113, the sum of degradation parameter of the optical path candidate is compared with the threshold value. In the above example, since the sum of degradation parameters of optical path candidate 1 satisfies $\alpha$13 + $\alpha$34 < $\alpha$th, the flow advances to step S116.

Step S115: The condition that the sum of degradation parameters of the selected optical path candidate is smaller than the threshold value is not satisfied for all optical path candidates. Hence, an optical path candidate with the minimum total cost is set as the shortest route.

Step S116: The optical path candidate with the minimum total cost is selected from the optical path candidates which satisfy the condition that the sum of degradation parameters of the selected optical path candidate is smaller than the threshold value. Hence, the selected optical path candidate is set as the shortest route.

With the above processing, optical-path routing which suppresses use of regeneration, reshaping and retiming relays is made.

(Ninth Embodiment)

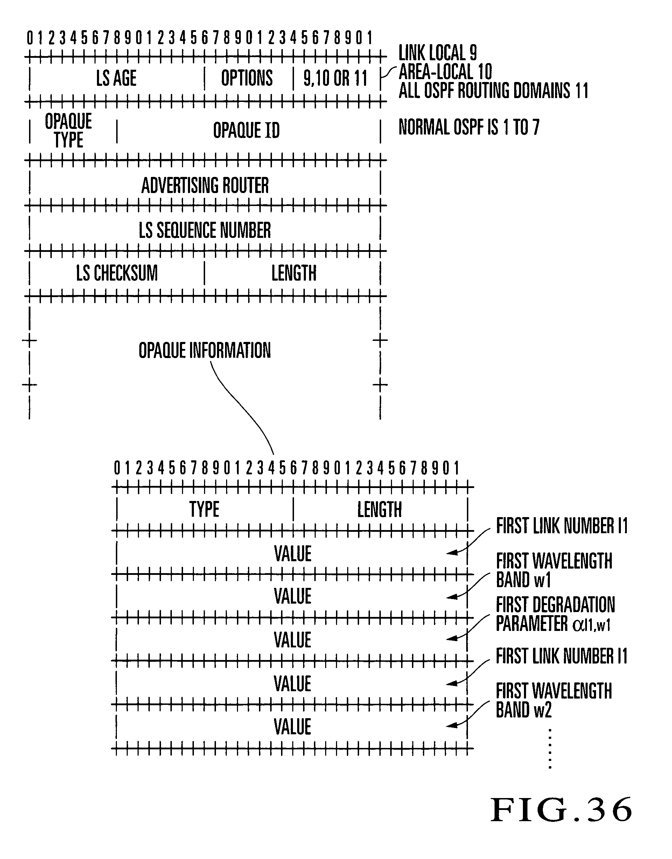

A routing method according to the ninth embodiment of the present invention will be described next. The operation of the routing protocol used and functions implemented in the ninth embodiment are basically the same as in the eighth embodiment. The ninth embodiment is different from the eighth embodiment in that the degradation parameter (to be sometimes referred to as a signal degradation parameter hereinafter) of a transmission signal is defined not for each link section but for each wavelength band of link section. That is, the signal light degradation parameter is stored in Sub-TLV of an OSPF packet together with an link ID and wavelength band ID. These pieces of information are exchanged between nodes. Fig. 36 shows degradation parameter advertising processing according to the ninth embodiment of the present invention.

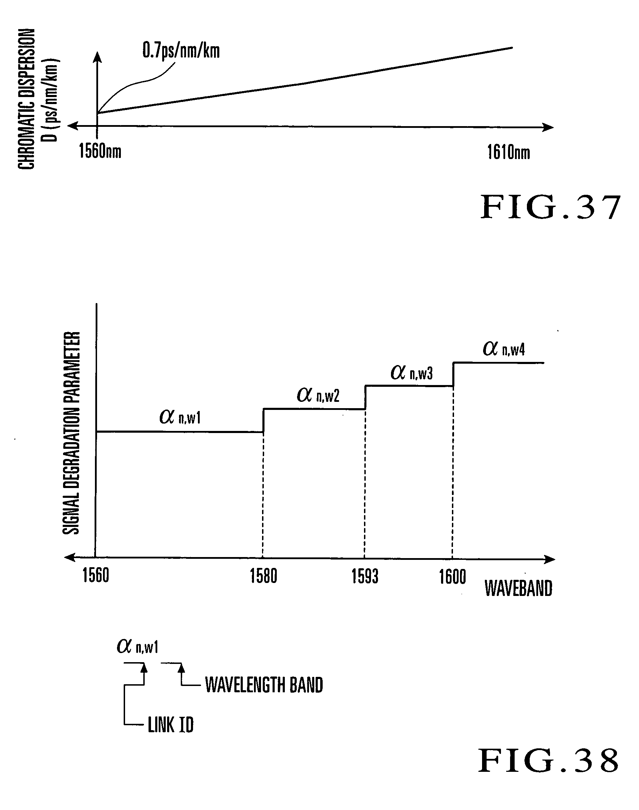

Figs. 37 and 38 show an example of setting of the wavelength band ID and signal degradation parameter according to the ninth embodiment of the present invention. In this example, a dispersion-shifted optical fiber having a wavelength at zero-chromatic dispersion in the 1550-nm band is used. Fig. 37 shows chromatic dispersion for wavelengths. Fig. 38 shows signal light degradation parameters for wavelengths. As is apparent from Figs. 37 and 38, the signal light degradation parameter becomes large toward a longer wavelength band, and the degree of degradation in signal quality becomes high. For example, in the eighth embodiment of the present invention, the worst value of a signal light degradation parameter is advertised in consideration of the dependence of each fiber link on the wavelength. It is determined that a regeneration, reshaping and retiming relay is necessary in the section of node #1 → node #5 → node #4. In the ninth embodiment of the present invention, however, the dependence of each fiber link on the wavelength is also advertised. Hence, at a specific wavelength, even for a route of, e.g., node #1 → node #5 → node #4, it is determined that no regeneration, reshaping and retiming relay needs to be used. An optical path can be set between node #1 and node #4. As described above, according to the routing method of the ninth embodiment of the present invention, a shortest pass tree can be generated in consideration of the dependence of a fiber link on a wavelength. Hence, optical-path routing which suppresses use of regeneration, reshaping and retiming relays can be made.

(10th Embodiment)

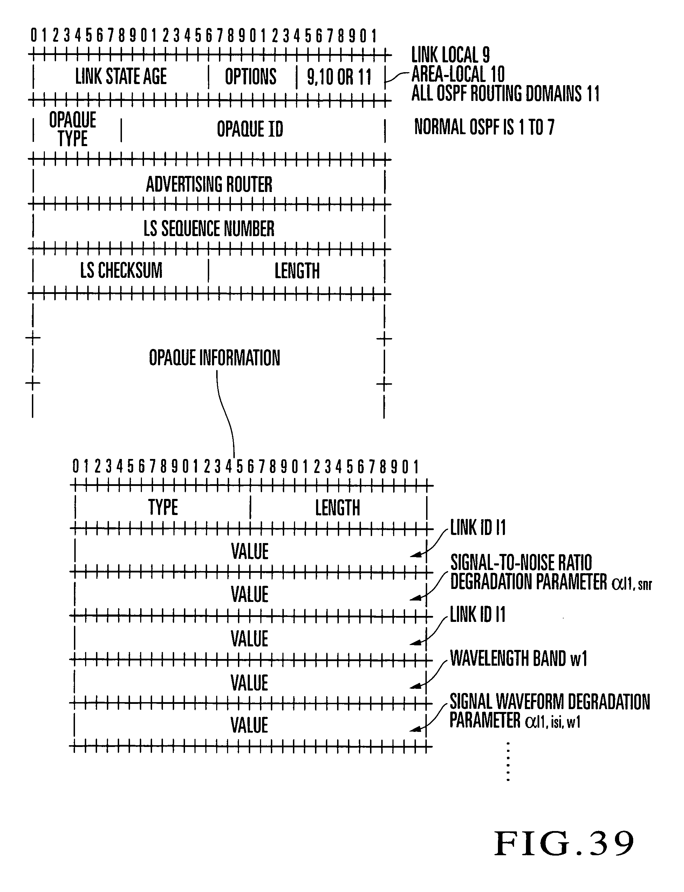

A routing method according to the 10th embodiment of the present invention will be described next. The operation of the routing protocol used and functions implemented in the 10th embodiment are basically the same as in the ninth embodiment. In the 10th embodiment, as a signal light degradation parameter, parameter distance information representing a degradation in signal-to-noise ratio in each fiber section and a degradation in signal light pulse waveform is used. Fig. 39 shows degradation parameter advertising processing according to the 10th embodiment of the present invention. In each link, the signal-to-noise ratio degrades due to the influence of an optical fiber loss and spontaneous emission noise added by an optical amplification relay which compensates for the loss. It is nothing else that the fluctuation in number of photons of transmission signal light that carries digital information increases. In IM-DD (Intensity Modulation Direct Detection) used in a normal optical fiber transmission system, however, a signal-to-noise ratio of 22 dB or less must be implemented in order to implement error-free transmission. Hence, if an excessive degradation in signal-to-noise ratio is present, signal transmission becomes impossible. That is, the signal-to-noise ratio becomes a factor that restricts transmission.

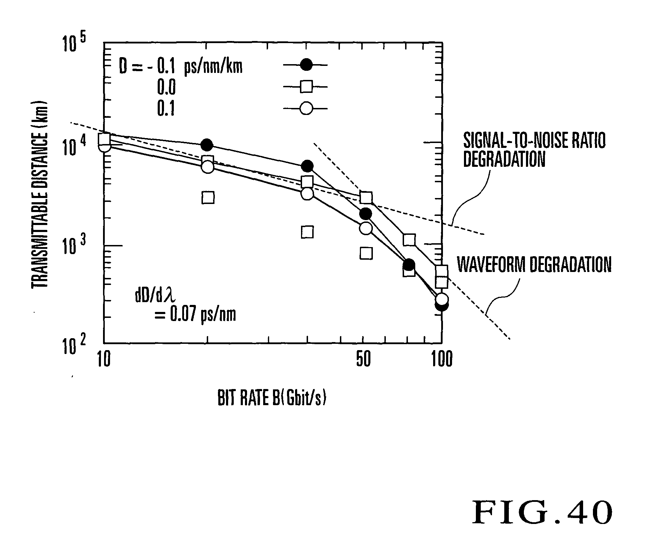

A degradation in signal light waveform also becomes a factor that restricts transmission. More specifically, when the signal light waveform degrades, intersymbol interference occurs in a digital signal, and the receiver cannot identify 1 or 0 of each bit, resulting in restriction on transmission. Factors for the degradation in signal light waveform are chromatic dispersion, higher-order chromatic dispersion (dispersion slope), polarization dispersion, and nonlinear effect of the optical fiber. Especially, the presence of the effect of nonlinear refraction causes spectral spread due to the self-phase modulation of the signal light pulse, or crosstalk between the wavelength channels, which is called fourwave mixing or cross-phase modulation. In the optical fiber transmission system, as shown in Fig. 40, it is known that transmission can be performed under conditions that satisfy both restrictions given by the two factors, i.e., the signal-to-noise ratio and the degradation in signal light waveform. In generating the shortest path tree, each node apparatus uses the protocol according to the eighth embodiment of the present invention. Accordingly, a sum $\Sigma\alpha n$, snr of signal-to-noise ratio degradation parameters and a sum $\Sigma\alpha n$, isi of signal light waveform degradation parameters between the nodes are independently derived. The values $\Sigma\alpha n$, snr and $\Sigma\alpha n$, isi are compared with threshold values $\alpha th$, snr and $\alpha th$, isi, respectively. When at least one sum exceeds the corresponding threshold value, a regeneration, reshaping and retiming relay is used. When this processing is implemented, a necessary regeneration, reshaping and retiming relay can be selected while independently considering the factors for the degradation in signal light propagating through the optical fiber. Hence, the accuracy of selection can be increased.

(11th Embodiment)

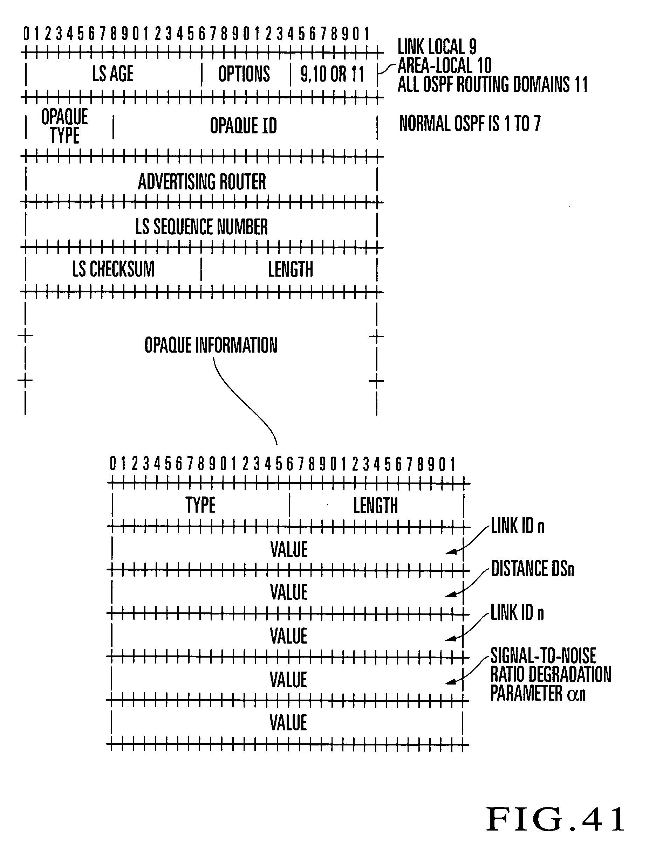

The 11th embodiment of the present invention will be described next. In the 11th embodiment, as signal light degradation parameters, distance information of each fiber link and a degradation parameter per unit length are used. For example, the signal-to-noise ratio degradation parameter used in the eighth embodiment of the present invention and the signal waveform degradation parameter are defined as signal degradation parameters as numerical values per unit length of the fiber link. Fig. 41 shows degradation parameter advertising processing according to the 11th embodiment of the present invention. When a signal degradation parameter is defined as a numerical value per unit length, and the distance information of each fiber link is held, another effect can be obtained so that the distance information can be used for delay management of an optical path to be connected. For example, two optical paths (link ID = 1) are set in the section between the first node and the second node, distance information can be used to manage the delay between the optical paths. Also in connecting an optical path, if a user who is very sensitive to a delay is to be accommodated, an optical path can be set through a route with the minimum propagation delay.

The routing method according to each of the above embodiments of the present invention can be constructed as software (program). When the CPU of a computer executes the program, the routing method according to the embodiment of the present invention can be implemented. The constructed program is recorded on a disk device or the like and installed in a computer as needed. The program may be stored in a portable recording medium such as a flexible disk, memory card, or CD-ROM and installed in a computer as needed. Alternatively, the program may be installed in a computer through a communication line and executed by the CPU of the computer.

(12th Embodiment)

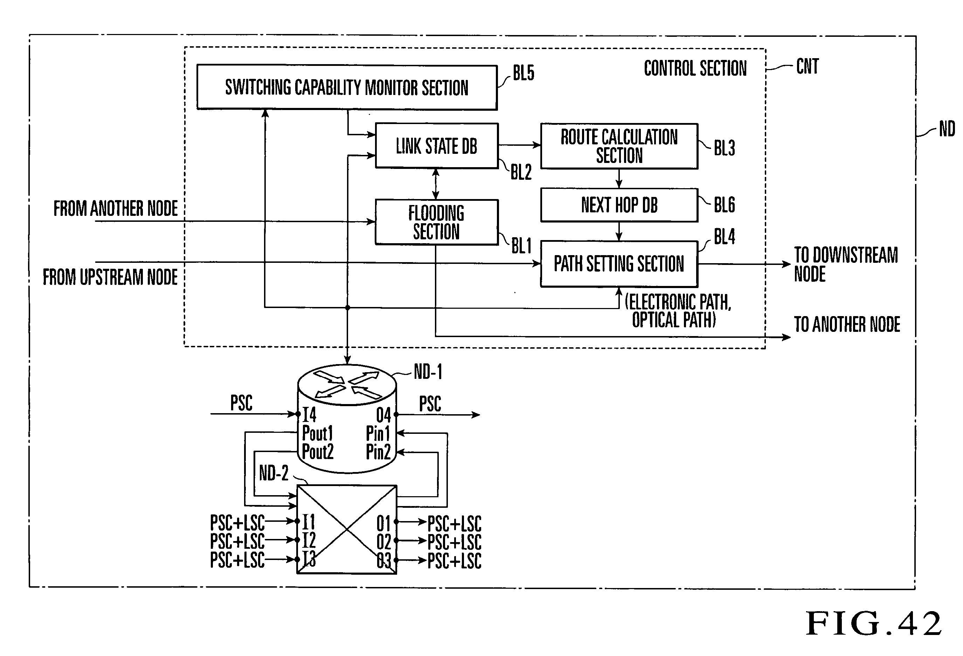

Fig. 42 shows the outline of an embodiment of a node (a modification of the optical cross-connect apparatus 10 shown in Fig. 2) used in a photonic-IP network according to the present invention. The same reference numerals as in Fig. 72 denote the same or similar constituent elements in Fig. 42, and a description thereof will be omitted. In this embodiment, a control block CNT (a modification of the control section 11 of the optical cross-connect apparatus 10 shown in Fig. 2) of a node ND has a switching capability monitor section BL5. The switching capability monitor section BL5 periodically observes the utilization of the resource (the input/output port of an IP switching block ND-1 or the interface of an optical switching block ND-2) in the node ND, determines, on the basis of the observation result, the current switching capabilities of interfaces I1, I2, I3, I4, O1, O2, O3, and O4 in the node ND, and updates/stores the current switching capabilities of interfaces I1, I2, I3, I4, O1, O2, O3, and O4 in a link state DB BL2. The link state DB BL2 stores first the switching capabilities unique to the interfaces I1, I2, I3, I4, O1, O2, O3, and O4. In addition, if, e.g., the interface O1 has no switching capability anymore, the switching capability monitor section BL5 updates/stores "Nothing" representing that no switching capability remains in the link state DB BL2 as the current switching capability.

The current switching capabilities of the interfaces I1, I2, I3, I4, O1, O2, O3, and O4 in the node ND, which are updated/stored in the link state DB BL2, are advertised to the remaining nodes in the photonic-IP network using a routing protocol such as OSPF. Each of the remaining nodes also has the control block CNT having the same arrangement as in the node ND and advertises the current switching capabilities of the interfaces in itself, which are updated/stored in the link state DB BL2, to the remaining nodes, like the node ND. Accordingly, the current switching capabilities of interfaces in all nodes in the photonic-IP network are stored in the link state DB BL2 of the node ND as link state information. The link state DB BL2 of each of the remaining nodes also stores, as link state information, the current switching capabilities of interfaces in all nodes in the photonic-IP network.

To exchange routing protocol information, adjacent nodes must ensure at least one control path therebetween. That is, adjacent nodes have a mechanism which guarantees to always maintain RA (Routing Adjacency). This mechanism guarantees to prevent any situation wherein all the interfaces are set as "Nothing", and no RA can be ensured between adjacent nodes. An inbound control path may be ensured as part of a data link ensured between adjacent nodes. In that case, the data link must always be ensured. Alternatively, an outbound control path may be ensured independently of the data link.

A next hop DB BL6 is a DB which stores a result of route calculation. The next hop DB BL6 stores information representing an IF to which a packet or optical path should be transported (for which an optical path should be set to transport a packet) to reach each node.

[Example 1 of Optical Path Setting in Photonic-IP Network]

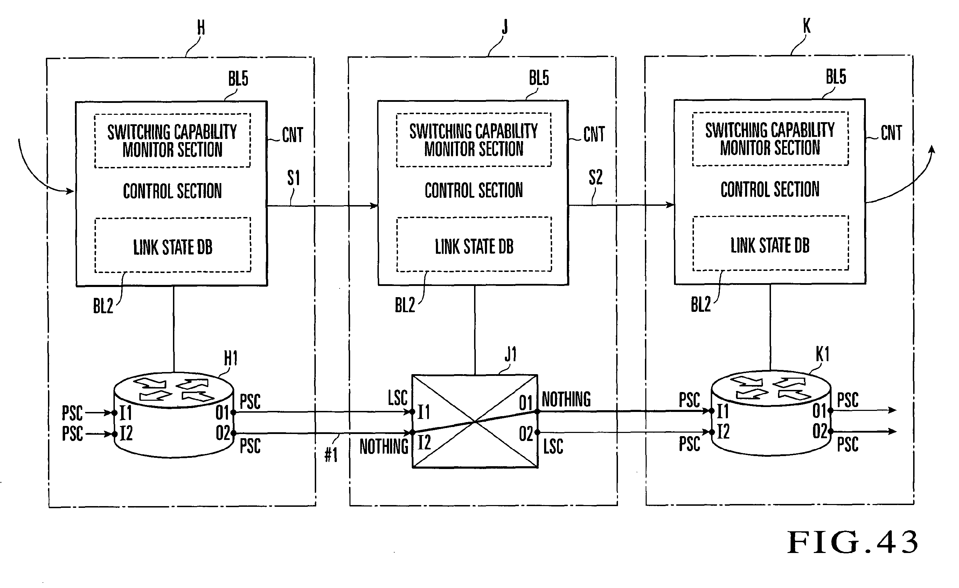

Fig. 43 shows an example of optical path setting in the photonic-IP network. In this example, on the basis of the concept of GMPLS, nodes H and K are nodes of type I, and a node J is a type of node II. The node H is defined as a source node, and the node K is defined as a destination node. A route is calculated by a control block CNT in the node H. The calculated route is sent to the nodes J and K through control paths S1 and S2, thereby setting, between the nodes H and K, optical path #1 from an interface O2 of the node H to an interface I1 of the node K through interfaces I2 and O1 of the node J. Each of the nodes H, J, and K has a switching capability monitor section BL5 in its control block CNT, like the node ND shown in Fig. 42. In the example shown in Fig. 43, in setting optical path #1, the interfaces I2 and O1 of the node J are connected using LSC. Accordingly, the interfaces I2 and O1 have no available switching capability. The switching capability is "Nothing".

In this case, the switching capability monitor section BL5 of the control block CNT determines that the current switching capability of the interfaces I1 and O2 in the node ND is "LSC", and the current switching capability of the interfaces I2 and O1 in the node ND is "Nothing" and updates/stores the current switching capabilities of the interfaces I1, I2, O1, and O2 in the link state DB BL2. More specifically, "LSC" has been stored till then in the link state DB BL2 in the node J as the switching capability of the interfaces I1, I2, O1, and O2 in the node J. The switching capability of the interfaces I2 and O1 is changed from "LSC" to "Nothing". The flooding section BL1 of the node J advertises to the remaining nodes H and K the current switching capabilities of the interfaces I1, I2, O1, and O2, which are updated/stored in the link state DB BL2, together with the unique information (e.g., IP addresses) of the interfaces. Accordingly, the link state information in the link state DB BL2 of each of the nodes H, J, and K is rewritten. In the link state information, the switching capability of the interfaces I2 and O1 in the node J is "Nothing" corresponding to the current state. Hence, none of problems that no appropriate path can be selected in calculating a route or no appropriate optical path can be set in setting an optical path occurs.

[Example 2 of Optical Path Setting in Photonic-IP Network]

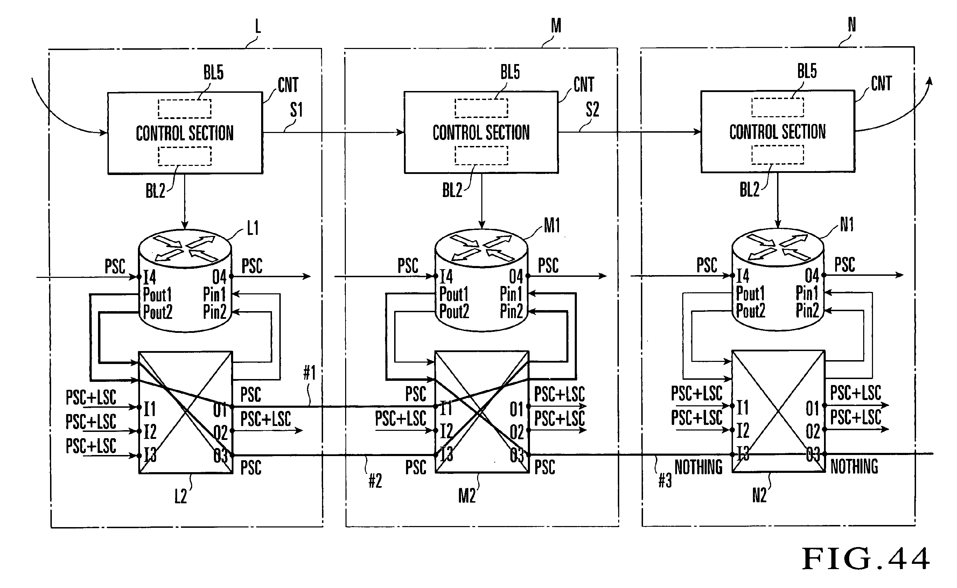

Fig. 44 shows another example of optical path setting in the photonic-IP network. In this example, nodes L, M, and N are nodes of type III. The node L is defined as a source node, and the node M is defined as a destination node. A route is calculated by a control block CNT in the node L. The calculated route is sent to the node M through a control path S1, thereby setting, between the nodes L and M, optical paths #1 and #2. More specifically, optical path #1 from an output port Pout1 of an IP switching block L1 of the node L to an input port Pin1 of an IP switching block M1 of the node M through an interface O1 of an optical switching block L2 of the node L and an interface I1 of an optical switching block M2 of the node M and optical path #2 from an output port Pout2 of the IP switching block L1 of the node L to an input port Pin2 of the IP switching block M1 of the node M through an interface O3 of the optical switching block L2 of the node L and an interface I3 of the optical switching block M2 of the node M are set.

In addition, the node M is defined as a source node, and a downstream node (not shown) is defined as a destination node. A route is calculated by the control block CNT in the node M. The calculated route is sent to the node N through a control path S2, thereby setting, between the nodes M and N, optical path #3. More specifically, optical path #3 which is output from the output port Pout1 of the IP switching block M1 of the node M to the interface I3 of an optical switching block N2 of the node N through the interface O3 of the optical switching block M2 of the node M and output from the interface O3 of the optical switching block N2 is set. Each of the nodes L, M, and N has a switching capability monitor section BL5 in its control block CNT, like the node ND shown in Fig. 42.

In the example shown in Fig. 44, in setting optical path #1, the interface O1 of the optical switching block L2 of the node L is connected to the output port Pout1 of the IP switching block L1 using LSC. The interface I1 of the optical switching block M2 of the node M is connected to the input port Pin1 of the IP switching block M1 using LSC. In setting optical path #2, the interface O3 of the optical switching block L2 of the node L is connected to the output port Pout2 of the IP switching block L1 using LSC. The interface I3 of the optical switching block M2 of the node M is connected to the input port Pin2 of the IP switching block M1 using LSC. In setting optical path #3, the interface O3 of the optical switching block M2 of the node M is connected to the output port Pout1 of the IP switching block M1 using LSC. The interfaces I3 and O3 of the optical switching block N2 of the node N are connected using LSC. For this reason, the interfaces O1 and O3 of the node L and the interfaces I1, I3, and O3 of the node M have no LSC as a switching capability. Only PSC remains. The interfaces I3 and O3 of the node N have neither LSC nor PSC and are set in the "Nothing" state.

In this case, the switching capability monitor section BL5 of the control block CNT of the node L determines that the current switching capability of the interfaces I1, I2, I3, and O2 in the node L is "PSC + LSC", and the current switching capability of the interfaces I4 and O4 is "PSC", the current switching capability of the interfaces O1 and O3 is "PSC" and updates/stores the current switching capabilities of the interfaces I1 to I4 and O1 to O4 in the link state DB BL2. More specifically, "PSC + LSC" has been stored till then in the link state DB BL2 in the node L as the switching capability of the interfaces I1 to I3 and O1 to O3 in the node L, and "PSC " has been stored as the switching capability of the interfaces I4 and O4 in the node L. The switching capability of the interfaces O1 and O3 is changed from "PSC + LSC" to "PSC". The flooding section BL1 of the node L advertises to the remaining nodes M and N the current switching capabilities of the interfaces I1 to I4 and O1 to O4, which are updated/stored in the link state DB BL2, together with the unique information (e.g., IP addresses) of the interfaces.

In addition, the switching capability monitor section BL5 of the control block CNT of the node M determines that the current switching capability of the interfaces I2, O1, and O2 in the node M is "PSC + LSC", the switching capability of the interfaces I4 and O4 is "PSC", and the current switching capability of the interfaces I1, I3, and O3 is "PSC", and updates/stores the current switching capabilities of the interfaces I1 to I4 and O1 to O4 in the link state DB BL2. More specifically, "PSC + LSC" has been stored till then in the link state DB BL2 in the node M as the switching capability of the interfaces I1 to I3 and O1 to O3 in the node M, and "PSC " has been stored as the switching capability of the interfaces I4 and O4 in the node M. The switching capability of the interfaces I1, I3, and O3 is changed from "PSC + LSC" to "PSC". The flooding section BL1 of the node M advertises to the remaining nodes L and N the current switching capabilities of the interfaces I1 to I4 and O1 to O4, which are updated/stored in the link state DB BL2, together with the unique information (e. g., IP addresses) of the interfaces.

Furthermore, the switching capability monitor section BL5 of the control block CNT of the node N determines that the current switching capability of the interfaces I1, I2, O1, and O2 in the node N is "PSC + LSC", the switching capability of the interfaces I4 and O4 is "PSC", and the current switching capability of the interfaces I3 and O3 is "Nothing", and updates/stores the current switching capabilities of the interfaces I1 to I4 and O1 to O4 in the link state DB BL2. More specifically, "PSC + LSC" has been stored till then in the link state DB BL2 in the node N as the switching capability of the interfaces I1 to I3 and O1 to O3 in the node M, and "PSC " has been stored as the switching capability of the interfaces I4 and O4 in the node N. The switching capability of the interfaces I3 and O3 is changed from "PSC + LSC" to "Nothing". The flooding section BL1 of the node N advertises to the remaining nodes L and M the current switching capabilities of the interfaces I1 to I4 and O1 to O4, which are updated/stored in the link state DB BL2, together with the unique information (e. g., IP addresses) of the interfaces.

Accordingly, the link state information in each of the nodes L, M, and N is rewritten. In the link state information, the switching capability of the interfaces O1 and O2 of the node L and that of the interfaces I1, I3, and O3 of the node M are "PSC" corresponding to the current state. In addition, the switching capability of the interfaces I3 and O3 of the node N is "Nothing" corresponding to the current state. Hence, none of problems that no appropriate path can be selected in calculating a route or no appropriate optical path can be set in setting an optical path occurs.

In the above-described examples, when an interface has no switching capability, "Nothing" representing this state is advertised to the remaining nodes as the switching capability. However, the information representing "Nothing" need not always be advertised. For example, when the switching capability of an interface in a given node is to be advertised, that node may refrain from advertising the switching capability and unique information (e.g., IP address) for only interfaces having no switching capability. In either case, it is guaranteed to prevent any situation wherein all the interfaces are set as "Nothing", and no RA can be ensured between adjacent nodes, as described above. In the above-described examples, even the unchanged switching capability of an interface is advertised to the remaining nodes. However, only the changed switching capability of an interface may be advertised to the remaining nodes. That is, the unchanged switching capability of an interface is kept unchanged. Only the changed switching capability of an interface may be updated/stored in the node and advertised to the remaining nodes.

[Problem ① of Example in Fig. 44]

In the example shown in Fig. 44, the output ports Pout1 and Pout2 of the IP switching block L1 in the node L are used by optical paths #1 and #2. The input ports Pin1 and Pin2 of the IP switching block M1 in the node M are used by optical paths #1 and #2. For these reasons, the interface O2 of the node L cannot be connected to the IP switching block L1, and the interface I2 of the node M cannot be connected to the IP switching block M1. In this case, the interface O2 of the node L and the interface I2 of the node M are "PSC + LSC". Actually, the switching capability "PSC" is not present. Only the switching capability "LSC" remains. In the routing protocol, however, the switching capability of the interface O2 of the node L and the interface I2 of the node M are advertised to the remaining nodes in the communication network as "PSC + LSC". When the nodes L, M, and N execute, on the basis of the information, calculation or the like to set an optical path, optical path setting becomes impossible because it is determined for the nodes L and M that an optical path can be set, although no optical path can be set for the node L serving as a source node and no optical path can be set for the node M serving as a destination node.

[Problem ② of Example in Fig. 44]

When optical path #1 is set, the switching capability of the interface O1 of the node L changes to "PSC". When optical path #1 is canceled, the switching capability returns to "PSC + LSC". However, while optical path #1 is set, the switching capability of the interface O1 of the node L is only "PSC". Hence, the remaining nodes M and N do not know that the switching capability can actually be "PSC + LSC". The nodes M and N interpret the interface as an ordinary interface connected to the IP switching block and execute traffic engineering such as route calculation. In another example, when optical path #3 is set, the switching capability of the interfaces I3 and O3 of the node N changes to "Nothing". When optical path #3 is canceled, the switching capability returns to "PSC + LSC". However, while optical path #3 is set, the switching capability of the interfaces I3 and O3 of the node N is "Nothing". Hence, the remaining nodes L and M do not know that the switching capability can actually be "PSC + LSC". The nodes L and M interpret that the node N has no switching capability of interfaces and execute traffic engineering such as route calculation. As described above, in the example shown in Fig. 44, when optical paths are to be rearranged, or optical paths with different priorities should be set, the actual switching capability information is not advertised. Hence, the resource cannot be efficiently used.

[Solution to Problem ① of Example in Fig. 44]

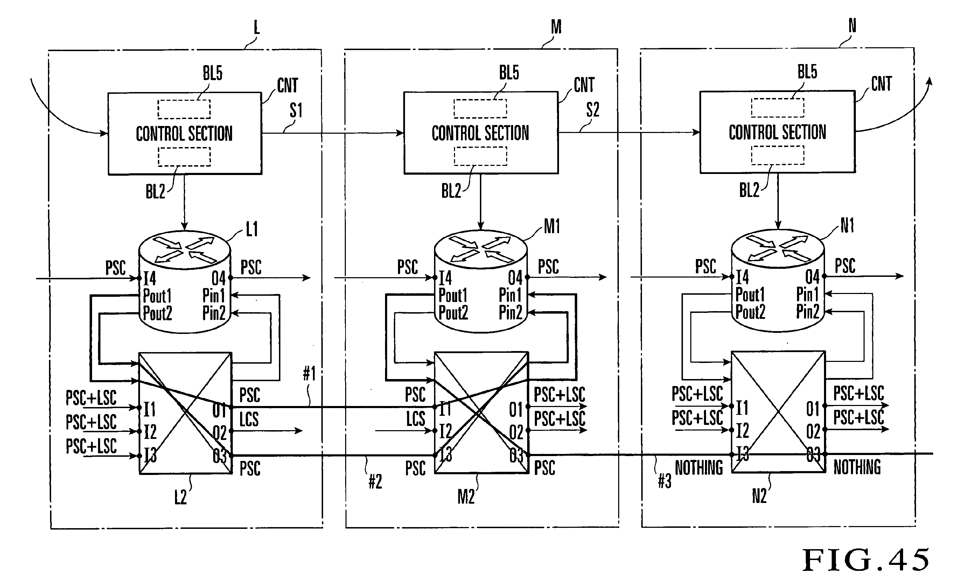

A solution to problem ① in Fig. 44 will be described with reference to Fig. 45. In the example shown in Fig. 44, it is determined that the switching capability of an interface that is not related to optical path setting is kept unchanged. However, since the output ports Pout1 and Pout2 of the IP switching block L1 are used by optical paths #1 and #2, the interface O2 of the node L and the interface I2 of the node M have no capability "PSC". Hence, as in the example shown in Fig. 45, for the interface O2 of the node L and the interface I2 of the node M, their switching capability is advertised as "LSC".

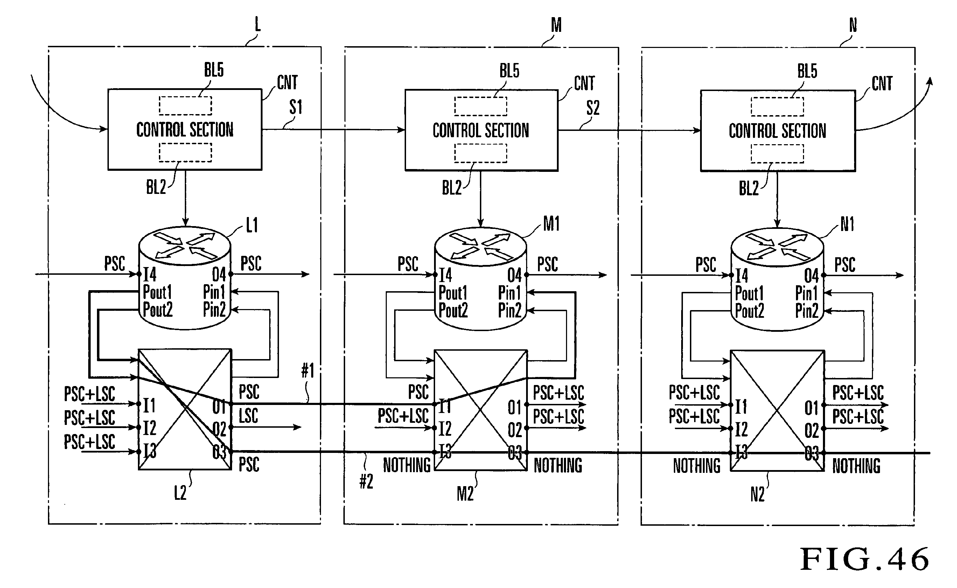

In the example shown in Fig. 46, optical path #2 is not terminated at the IP switching block M1 of the node M but relayed by the interfaces I3 and O3 of the optical switching block M2 of the node M and the interfaces I3 and O3 of the optical switching block N2 of the node N. In this case, since the output ports Pout1 and Pout2 of the IP switching block L1 of the node L are used by optical paths #1 and #2, the interface O2 of the node L has no switching capability "PSC". The interface I2 of the node M has the switching capability "PSC" because the input port Pin2 of the IP switching block M1 of the node M is not used. Hence, in this path setting, the switching capability of the interface O2 of the node L is advertised as "LSC", and the switching capability of the interface I2 of the node M is advertised as "PSC + LSC".

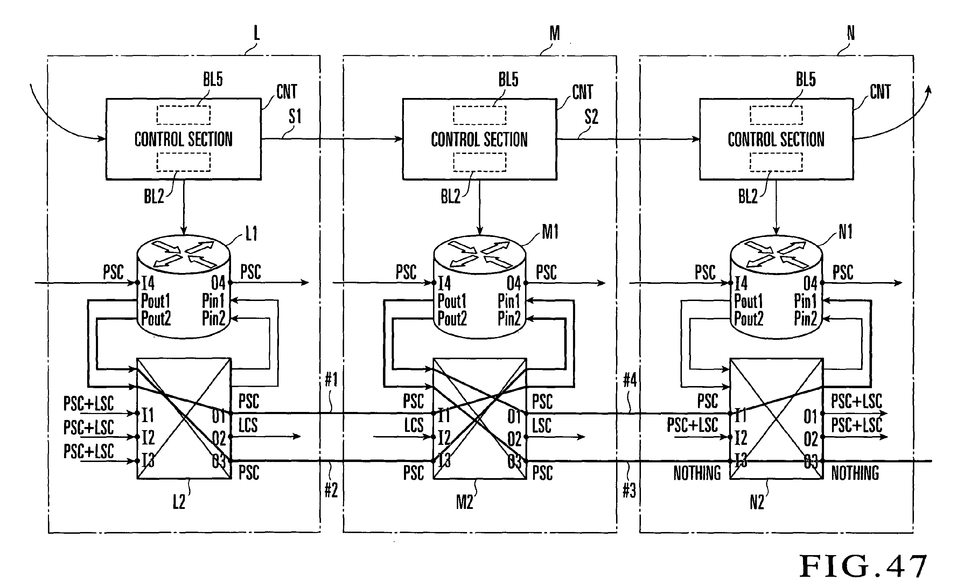

In the example shown in Fig. 47, optical path #4 is newly set in addition to optical paths #1, #2, and #2 shown in Fig. 45. More specifically, optical path #4 is newly set from the output port Pout2 of the IP switching block M1 of the node M to the interface I1 of the optical switching block N2 of the node N through the interface O1 of the optical switching block M2 of the node M and then to the input port Pin2 of the IP switching block N1 of the node N. The example shown in Fig. 47 is different from that shown in Fig. 45 in that the switching capability of the interfaces O1 of the node M and the interface I1 of the node N is advertised as "PSC", and the switching capability of the interface O2 of the node M is advertised as "LSC". The switching capability of the interface O2 of the node M is advertised as "LSC" because the output ports Pout1 and Pout2 of the IP switching block M1 of the node M are unusable.

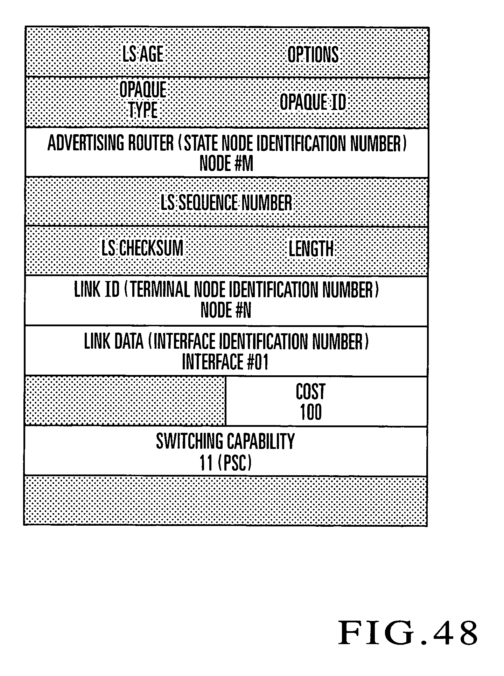

Fig. 48 shows an example of advertisement information of the interfaces O1 and O2 of the node M, which are advertised as "PSC" and "LSC", respectively. For example, information advertised from "interface O1" contains a start node identification number "node M" representing that an optical path reaches the node N2 through the interface O1, a start interface identification number "interface O1", a terminal node identification number "node N", cost information, and information explicitly representing that the start interface O1 is "PSC". Such pieces of information are stored in a message called Opaque LSA when they are advertised by, e.g., OSPF protocol.

[Solution to Problem ② of Example in Fig. 44]

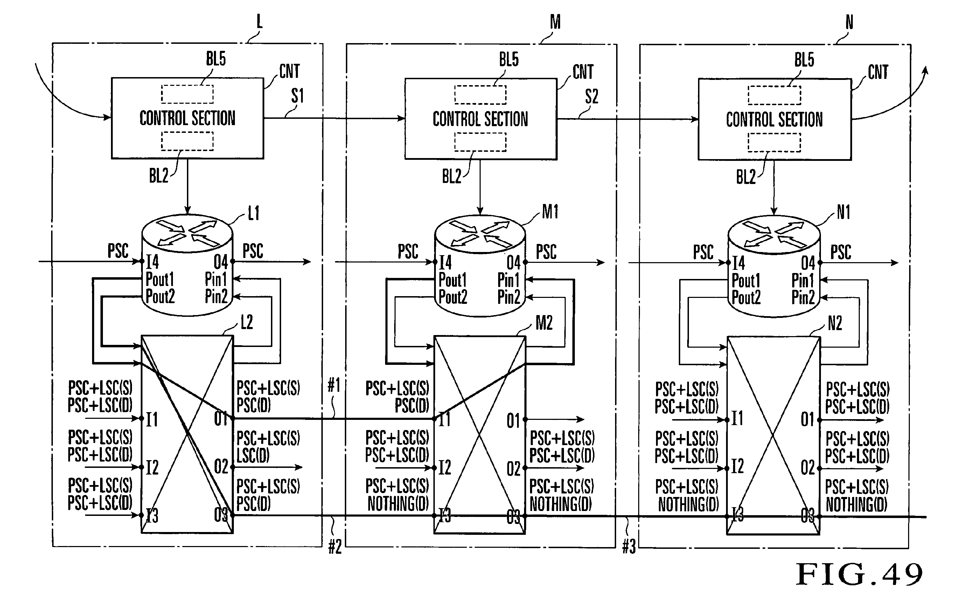

A solution to problem ② in Fig. 44 will be described with reference to Fig. 49. In the example shown in Fig. 44, for example, the switching capability monitor section BL5 of the control block CNT of the node L determines that the current switching capability of the interfaces I1, I2, I3, and O2 in the node L is "PSC + LSC" and the current switching capability of the interfaces O1 and O3 is "PSC", and updates/stores the current switching capabilities of these interfaces I1 to I3 and O1 to O3 in the link state DB BL2. The flooding section BL1 of the node L advertises the current switching capabilities of the interfaces I1 to I3 and O1 to O3, which are updated/stored in the link state DB BL2, to the remaining nodes M and N together with the unique information of the interfaces.

Instead, in the example shown in Fig. 49, the switching capability monitor section BL5 of the control block CNT of the node L determines that the current switching capability of the interfaces I1, I2, I3 in the node L is "PSC + LSC (D: Dynamic)", the current switching capability of the interfaces O1 and O3 is "PSC (D)" and the current switching capability of the interface O2 is "LSC (D)". The current switching capabilities (dynamic switching capabilities) of these interfaces I1 to I3 and O1 to O3 and the switching capability (static switching capabilities) "PSC + LSC (S: Static)" unique to the interfaces I1 to I3 and O1 to O3 are paired, updated/stored in the link state DB BL2, and advertised to the remaining nodes M and N. Even in each of the nodes M and N, the dynamic and static switching capabilities of the interfaces in the node are paired, updated/stored, and advertised to the remaining nodes. Accordingly, the actual switching capabilities are advertised. When optical paths are to be rearranged, or optical paths with different priorities should be set, the resource can be efficiently used.

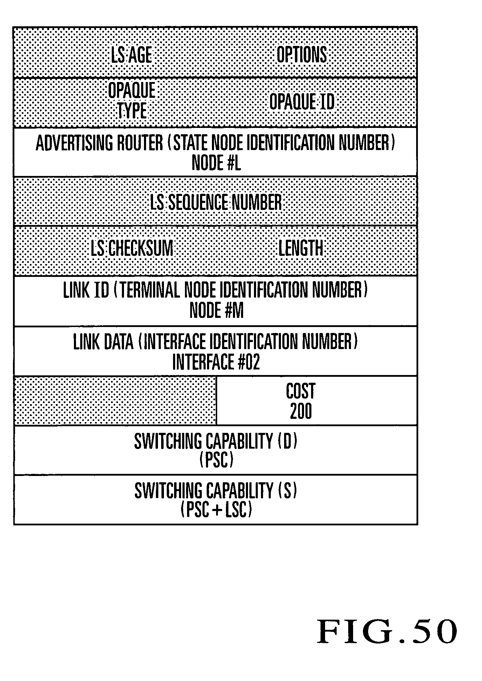

Fig. 50 shows an example of advertisement information of the interfaces O2 and O3 of the node L, which are advertised as "LSC (D)" and "PSC (D)", respectively. For example, information advertised from "interface O2" contains a start node identification number "node L" representing that an optical path reaches the node M through the interface O2 of the node L, a start interface identification number "interface O2", a terminal node identification number "node M", cost information, and information explicitly representing that the start interface O2 has the switching capability "LSC (D)" and unique switching capability "PSC + LSC (D)". Such pieces of information are stored in a message called Opaque LSA when they are advertised by, e.g., OSPF protocol.

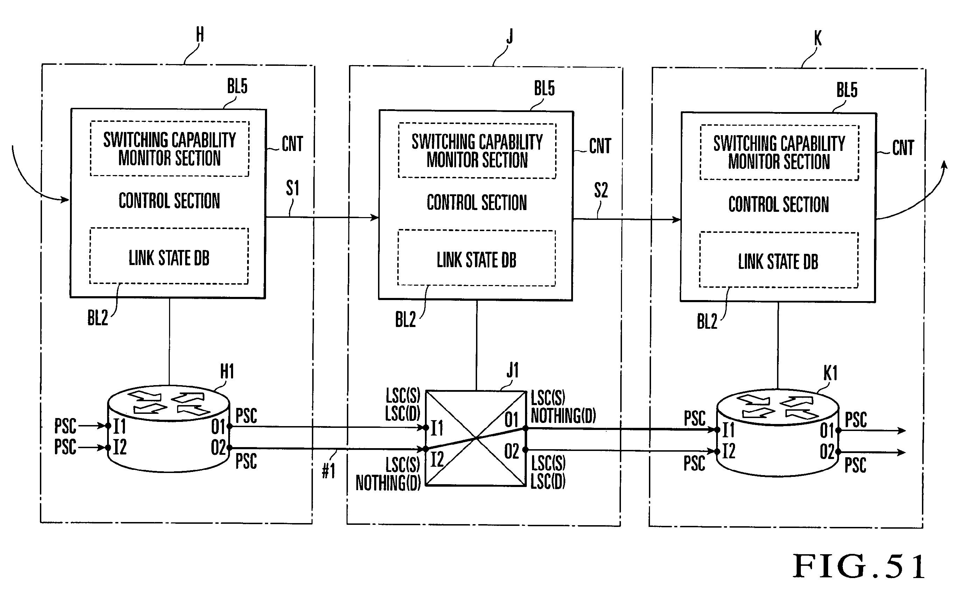

Even the example shown in Fig. 43 has the same problem ② as in the example shown in Fig. 44. Fig. 51 shows a resolution to the problem. In the example shown in Fig. 51, the switching capability monitor section BL5 of the control block CNT of the node J determines that the current switching capability of the interfaces I1 and O2 in the node L are "LSC (D)" and the current switching capability of the interfaces I2 and O1 is "Nothing". The current switching capabilities of these interfaces I1, I2, O1, and O2 and the unique switching capability "LSC (D)" of the interfaces I1, I2, O1, and O2 are paired, updated/stored in the link state DB BL2 and advertised to the remaining nodes M and N.

(13th Embodiment)

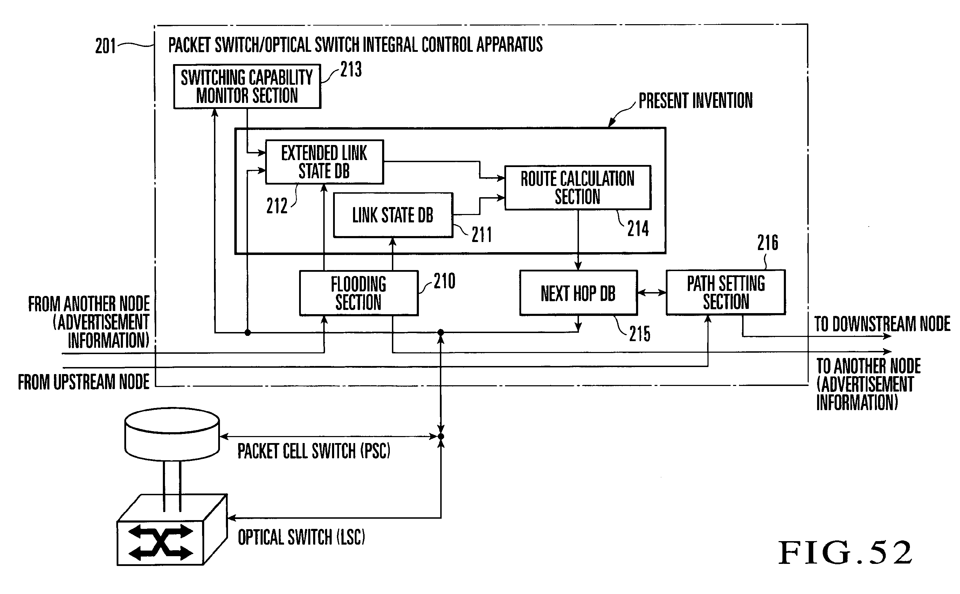

Fig. 52 shows an arrangement of a packet switch/optical switch integral control apparatus (node) 201 (modification of the control block CNT shown in Fig. 42) according to the present invention. As shown in Fig. 52, the packet switch/optical switch integral control apparatus 201 of the present invention comprises a flooding section 210, link state DB 211, extended link state DB 212, switching capability monitor section 213, route calculation section 214, next hop DB 215, and path setting section 216.

The flooding section 210 is a functional section which notifies link state information collected from the node of its own and the remaining nodes of an adjacent node. The link state DB 211 and extended link state DB 212 are databases which hold link information collected from the remaining nodes. The link state DB 211 stores optical path link state information. The extended link state DB 212 stores fiber link state information.

Detailed example of optical path link state information stored in the link state DB 211 are available information and cost information of an optical path link which connects two packet cell switches (PSC) and accommodated in a fiber link. As the cost of the optical path link, the reciprocal of the transport rate of the optical path or the product of the total cost of fiber links which accommodate the optical path and a predetermined constant is assigned. On the other hand, detailed examples of fiber link state information are available information and cost information of a fiber link which connects two optical switches. As the cost of the fiber link, the distance between fibers, the reciprocal of the capacity of the fiber link (the reciprocal of the number of optical paths which can be accommodated), or an expense required for actual construction is assigned.

The switching capability monitor section 213 is a functional section which monitors the switch state of the node of its own. That is, the switching capability monitor section 213 has a function of setting, for the SWs of the node of its own, a logic electric path to PSC and an optical path to LSC and also grasps the residual resources of the SWs and advertising them to the remaining nodes. For example, when an SW of the node of its own has not only a function of transporting an optical path to the remaining nodes using LSC but also a function of terminating the optical path by PSC of the node of its own and transporting the optical path to the remaining nodes for each packet, the total number of the IFs and the number of unused IFs are advertised to the remaining nodes. The route calculation section 214 calculates the transport route of an optical label switch path (OLSP: optical path as shown in Fig. 67) to be set from the link state DB 211 and a label switch path (LSP: logic path as shown in Fig. 67) switched by PSC or a packet.

The next hop DB 215 stores the result of route calculation. The next hop DB 215 stores information representing an IF to which a packet or optical path should be transported (for which an optical path should be set to transport a packet) to reach each node. The path setting section 216 transmits to a downstream node path information obtained by the route calculation section 214 and stored in the next hop DB 215. The path setting section 216 also receives path information from an upstream node and stores the information in the next hop DB 215.

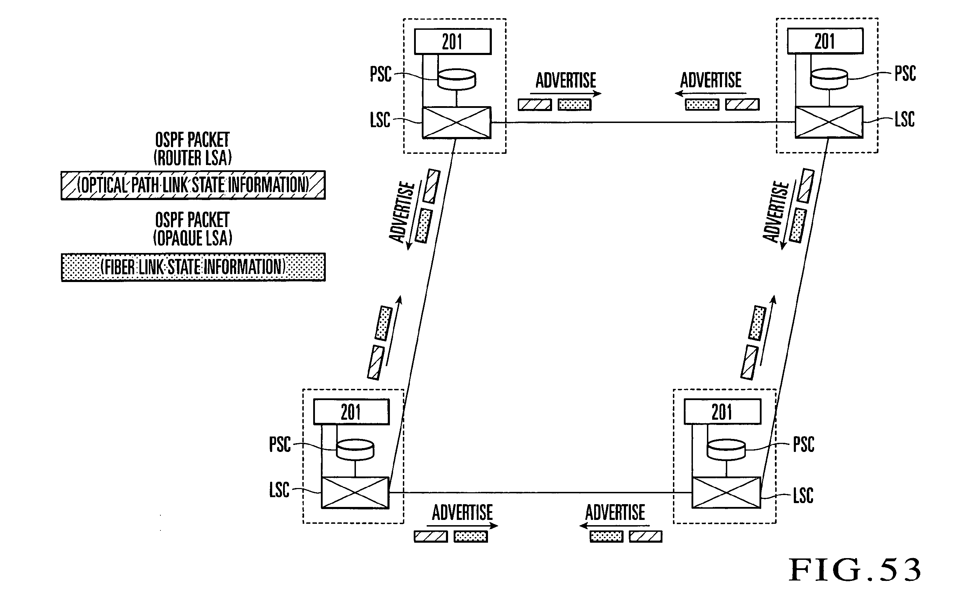

The packet switch/optical switch integral control apparatus 201 according to this embodiment of the present invention uses the OSPF protocol [reference: IETF RFC1131/1247/1573] as a function of collecting the state information (above-described optical path link state information) of a packet/cell transport network implemented by the packet cell switch (PSC) and optical path link and the state information (above-described fiber link state information) of an optical path network implemented by the optical switch (LSC) and fiber link. As shown in Fig. 53, this protocol causes each packet switch/optical switch integral control apparatus 201 to advertise, to the packet switch/optical switch integral control apparatus 201 of each of the remaining nodes, the optical path link state information (packet cell transport network state information) connected to the packet cell switch (PSC) of the node of its own and fiber link state information (optical path network state information) connected to the optical switch (LSC) of the node of its own. Simultaneously, optical path link state information and fiber link state information advertised from the remaining nodes are collected.

As shown in Fig. 53, the above-described optical path link state information is stored in the Router LSA packet of the OSPF protocol and exchanged between the nodes. The data received by each node is stored in the link state DB 211 (packet NW-DB). For the information stored in the link state DB 211, synchronization with the link state DB stored in the conventional IP switching block connected to the packet switch/optical switch integral node is possible.

On the other hand, as shown in Fig. 53, the above-described fiber link state information is exchanged by an Opaque LSA packet [reference: IETF 2370] of the OSPF protocol. The data received by each node is stored in the extended link state DB 212 (optical NW-DB).

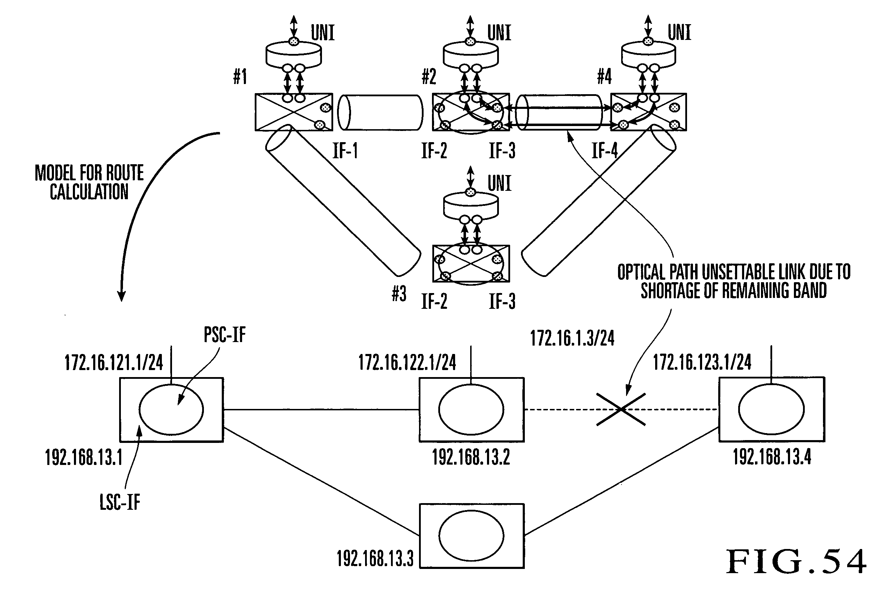

According to this embodiment, each fiber link state information stored in the extended link state DB 212 holds data which suggests a wavelength band usable on each fiber link route. Accordingly, as shown in Fig. 54, in optical-path routing calculation, fiber links having no unused wavelengths can be excluded in advance before route calculation. In addition, when a route is to be calculated for new optical path setting, the use band of each fiber link can also be designated. Hence, in settling a new optical path, operation of confirming the usable band necessary for each fiber link can be omitted. Furthermore, since the wavelength from the start node to the terminal node can be designated in advance, any route which requires wavelength conversion from, e.g., λ1 to λ3 at a halfway node can be avoided. Hence, the number of wavelength converters necessary for each LSC can be reduced.

(14th Embodiment)

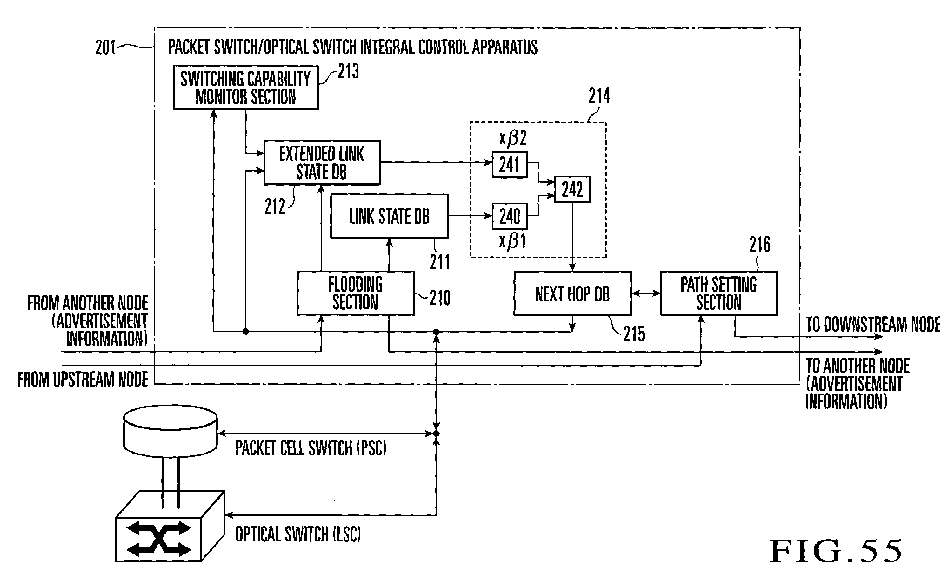

Fig. 55 shows another arrangement of the packet switch/optical switch integral control apparatus 201 according to the present invention. In this embodiment, in addition to the arrangement of the 13th embodiment, the function of a route calculation section 214 which accesses both a link state DB 211 and an extended link state DB 212 is expanded. According to this embodiment, the route calculation section 214 has a multiplication functional section 240 which multiplies the cost of an optical path link, which is managed by the link state DB 211, by a weight coefficient β1, and a multiplication functional section 241 which multiplies the cost of a fiber link, which is managed by the extended link state DB 212, by a weight coefficient β2. A minimum cost route calculation section 242 which calculates a route at a minimum cost calculates a route of packet cells and optical paths which accommodate the cells on the basis of the output results from the multiplication functional section 240 and multiplication functional section 241. The minimum cost route calculation section 242 has a function of searching for a route with a minimum cost between the packet switch/optical switch integral control apparatuses 201 and IP switching blocks (packet cell switches) connected to the packet switch/optical switch integral control apparatuses by the Dijkstra method.

According to this embodiment, the cost information of an optical path link, which is managed by the link state DB 211, is multiplied by the weight coefficient β1, and the cost information of a fiber link, which is managed by the extended link state DB 212, is multiplied by the weight coefficient β2. With this processing function, the packet cell transport network and optical path network, which are conventionally separately managed, can be integrated into a photonic-IP network for routing.

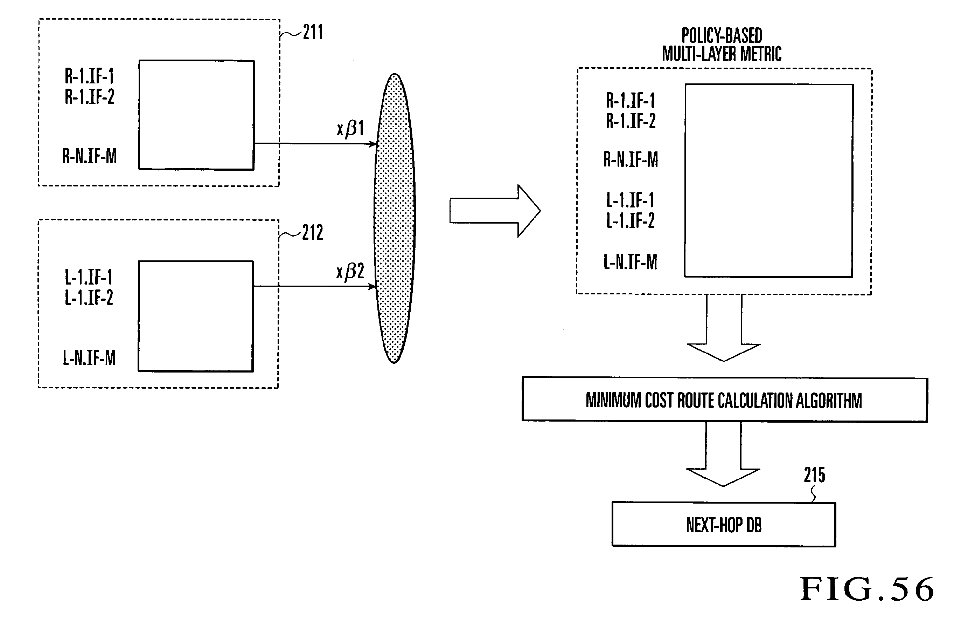

Fig. 56 shows route calculation processing implemented by this embodiment. As shown in Fig. 56, the minimum cost route calculation section 242 multiples the cost information of an optical path link, which is managed by the link state DB 211, by the weight coefficient β1 and the cost information of a fiber link, which is managed by the extended link state DB 212, by the weight coefficient β2. The minimum cost route calculation section 242 searches for a route at a minimum cost using the multiplication results. In this example, a value of "$10^3 \times D$" is used as the weight coefficient β1, and a value of "1" to "10" is used as the weight coefficient β2. This is because the dimensions of the two pieces of cost information must coincide with each other because the cost of the optical path link, which is to be multiplied by the weight coefficient β1, is defined in a form of $10^8/Bw$ (a product of the reciprocal of a bandwidth Bw and $10^8$) in association with the bandwidth Bw (bit/s) of the optical path link, and the cost of the fiber link, which is to be multiplied by the weight coefficient β2, is defined in a form of a distance D (km) of the fiber link.

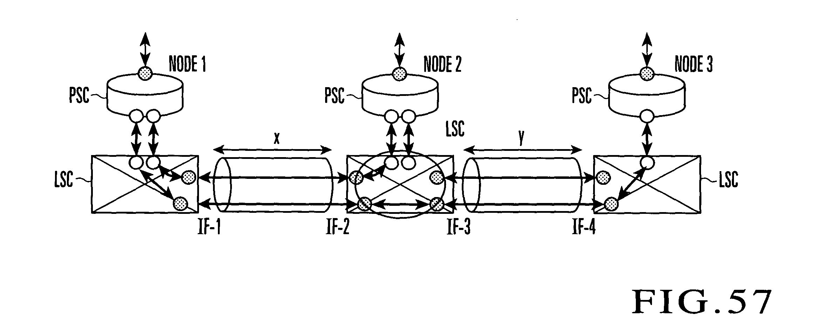

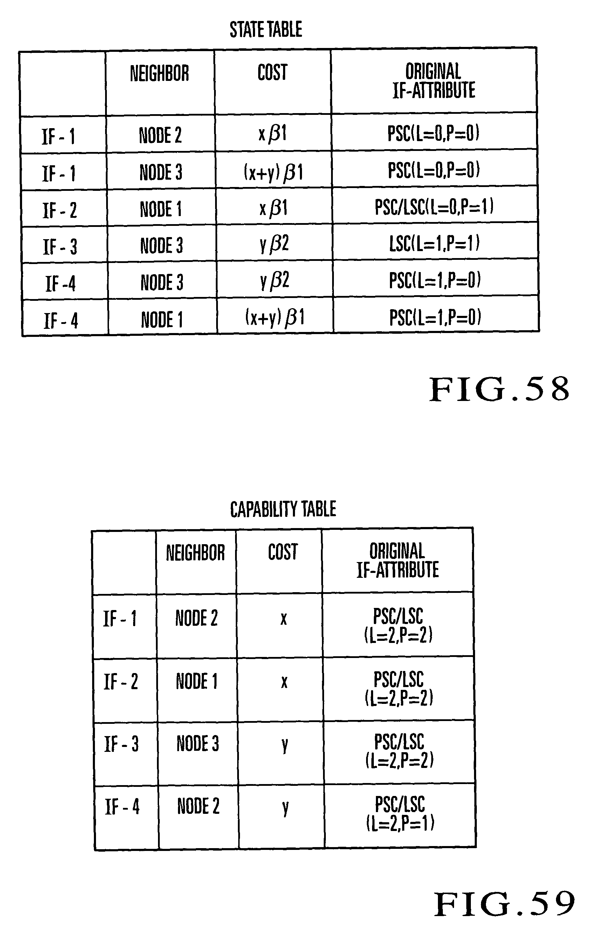

Figs. 57 to 59 show examples of link states and cost information, which are obtained when the pieces of cost information are set in the above forms. For example, as shown in the state table in Fig. 58, attribute information PSC, i.e., optical paths set between PSCs are already registered between IF-1 and Node 2 and between IF-1 and Node 3. The costs for them are interpreted as x*β1 (*: multiply) and (x + y)*β1. In this case, the distances between the fiber links are input to x and y. For a fiber link having a band where no optical path is set, for example, link information with a cost y*β2 is present between IF-3 and IF-4. "P=2" in Fig. 58 indicates that the number of available packet cell switches (PSC) is 2. "L=2" indicates that the number of available optical switches (LSC) is 2. On the other hand, as shown in the capability table in Fig. 59, each node also advertises the number of resources of LSC-IFs and PSC-IFs held by that node.

It is determined on the basis of these data whether it is more advantageous in terms of cost to pass through an existing optical path link or set a new optical path through a fiber link. The next hop DB 215 is generated on the basis of the calculation results. Next hop information representing an output IF to which a packet or optical path should be transported to reach the final destination is registered. A packet or optical path is actually transported by searching the next hop DB 215 which stores the terminal node ID of the traffic. The traffic input to the packet switch/optical switch integral control apparatus 1 is transported to the IF for which the terminal node ID of the traffic is registered.

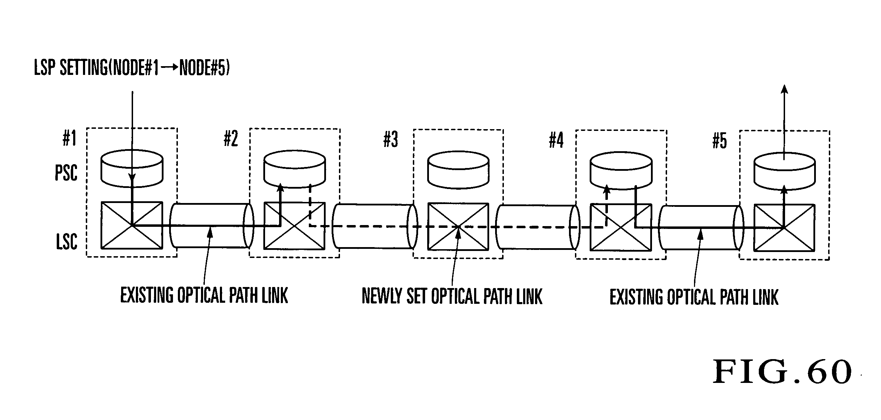

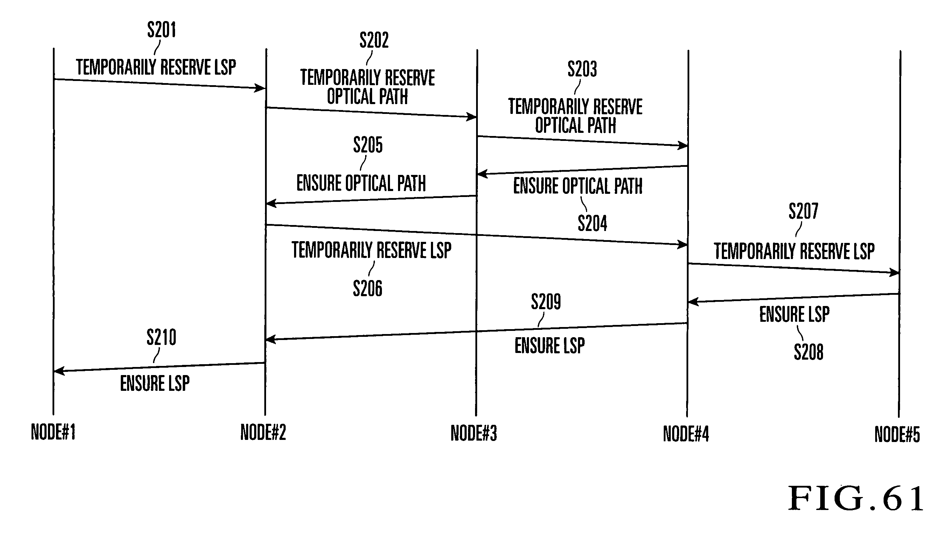

Figs. 60 and 61 show the series of operations. Assume that an instruction is issued from Node #1 such that a logic path called a label switch path (LSP) should be set between the PSCs of Node # to Node #5. An LSP is a virtual path which is assigned to a specific flow of IP packets. As a result of route searching described above, the LSP is stored in an existing optical path link in the section from Node #1 to Node #2. In the section from Node #2 to Node #4, a new optical path link is set using an available wavelength band of the fiber link, and the LSP is accommodated in the optical path link. The LSP is stored in an existing optical path link in the section from Node #4 to Node #5.

Fig. 61 shows the sequence of a control signal for the operation. More specifically, in executing the operation, in the section from Node #1 to Node #2, an LSP band is temporarily reserved using the residual band of an existing optical path link (step S201). Then, in the section from Node #2 to Node #4, an optical path is temporarily reserved using the residual band of a fiber link (steps S202 and S203). When temporary reservation of the optical path link is implemented up to Node #4, an optical path is ensured from Node #4 to Node #2 (step S204). An LSP band from Node #2 to Node #4 is temporarily reserved using the band of the optical path (step S205). In addition, an LSP band from Node #4 to Node #5 is temporarily reserved using the existing optical path link (step S206). When temporary reservation of the LSP band up to Node #5 is confirmed (step S207), the temporary reservation band of the LSP set by the series of processes is ensured from Node #5 to Node #1 (steps S208 to S210). With this processing, integral and quick communication traffic transport can be implemented between networks of different layers, such as a packet cell transport network and an optical path network. According to this arrangement, not only IP packet transport but also newly setting or delete of an optical path and routing can also be integrally implemented in accordance with a change in state of traffic or network.

(Modification to 14th Embodiment)

A modification of the packet switch/optical switch integral control apparatus 201 according to the present invention will be described next. In this modification, as in the 13th embodiment, when a minimum cost route considering both the cost of an optical path link and the cost of a fiber link is to be referred to, the cost of the optical path link is multiplied by a weight coefficient β1, and the cost of the fiber link is multiplied by a weight coefficient β2. A value of "1 " is used as the weight coefficient β1, and a value of "(1 to 10) $\times$ B$_{0,W}$/ 10$^8$" is used as the weight coefficient β2. This is because the dimensions of the two pieces of cost information must coincide with each other because the cost of the optical path link, which is to be multiplied by the weight coefficient β1, is defined in a form of 10$^8$/Bw (a product of the reciprocal of a bandwidth Bw and 10$^8$) in association with the bandwidth Bw (bit/s) of the optical path link, and the cost of the fiber link, which is to be multiplied by the weight coefficient β2, is defined in a form of a bandwidth B$_{0,W}$ of the fiber link.

The values of the weight coefficients β1 and β2 may be changed in accordance with the traffic state of the entire network. For example, when LSC layer has a sufficient available wavelength band, the weight coefficients β1 and β2 may be set such that

$$(\beta 1 \times \text{optical path link cost}) > (\beta 2 \times \text{fiber link cost})$$

is satisfied, and a new optical path can easily be set. To the contrary, if the LSC layer has no sufficient available wavelength band, the weight coefficients β1 and β2 may be set such that

$$(\beta 1 \times \text{optical path link cost}) < (\beta 2 \times \text{fiber link cost})$$

is satisfied, and a new optical path can hardly be set. That is, a new optical path can be set in accordance with the state of the network. The weight coefficients β1 and β2 may be changed in accordance with, e.g., the priority class of the logic path to be accommodated.

(15th Embodiment)

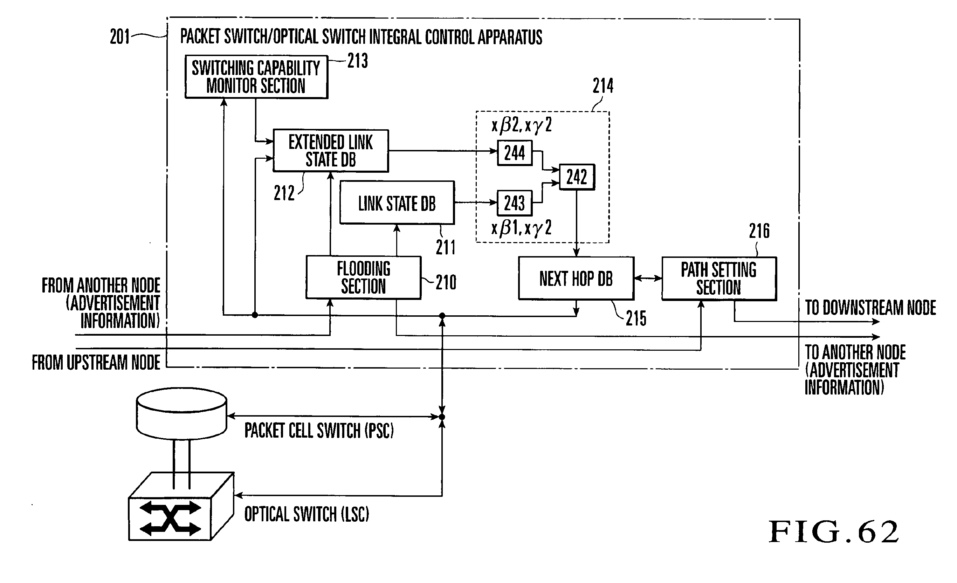

Fig. 62 shows the arrangement of a packet switch/optical switch integral control apparatus 1 according to the present invention. In this embodiment, as in the 14th embodiment, when a minimum cost route considering both the cost of an optical path link and the cost of a fiber link is to be referred to, the cost of the optical path link, which is managed by a link state DB 211, is multiplied by a weight coefficient β1, and the cost of the fiber link, which is managed by an extended link state DB 212, is multiplied by a weight coefficient β2. In addition, the cost of a packet cell switch, which is managed by the link state DB 211, is multiplied by a weight coefficient γ1, and the cost of an optical switch, which is managed by the extended link state DB 212, is multiplied by a weight coefficient γ2. More specifically, according to this embodiment, a route calculation section 214 has a multiplication functional section 243 which multiples the cost of an optical path link by the weight coefficient β1 and the cost of a packet cell switch by the weight coefficient γ1 and a multiplication functional section 244 which multiples the cost of a fiber link by the weight coefficient β2 and the cost of an optical switch by the weight coefficient $\gamma2$. A minimum cost route calculation section 242 calculates the route of packet cells and optical paths which accommodates the packet cells on the basis of the output results. As the values of the weight coefficients $\gamma1$ and $\gamma2$, values from 1 to 10 are often used. The weight coefficients $\gamma1$ and $\gamma2$ are used to give a cost ratio of a packet cell switch to an optical switch.

When the values of the weight coefficients $\gamma1$ and $\gamma2$ are changed, the ease of new optical path setting can be changed in consideration of the node state (the state of a packet cell switch or the state of an optical switch). For example, when the LSC has a sufficient capability, the values of the weight coefficients $\gamma1$ and $\gamma2$ can be changed such that an optical path can newly be set. To the contrary, when the most part of the capability of the LSC and, more particularly, the wavelength conversion capability is consumed, the values of the weight coefficients $\gamma1$ and $\gamma2$ can be changed such that an optical path can hardly be set. That is, a new optical path can be set in accordance with the load state of each PSC/LSC. The weight coefficients $\gamma1$ and $\gamma2$ may be changed in accordance with, e.g., the priority class of the logic path to be accommodated.

(16th Embodiment)

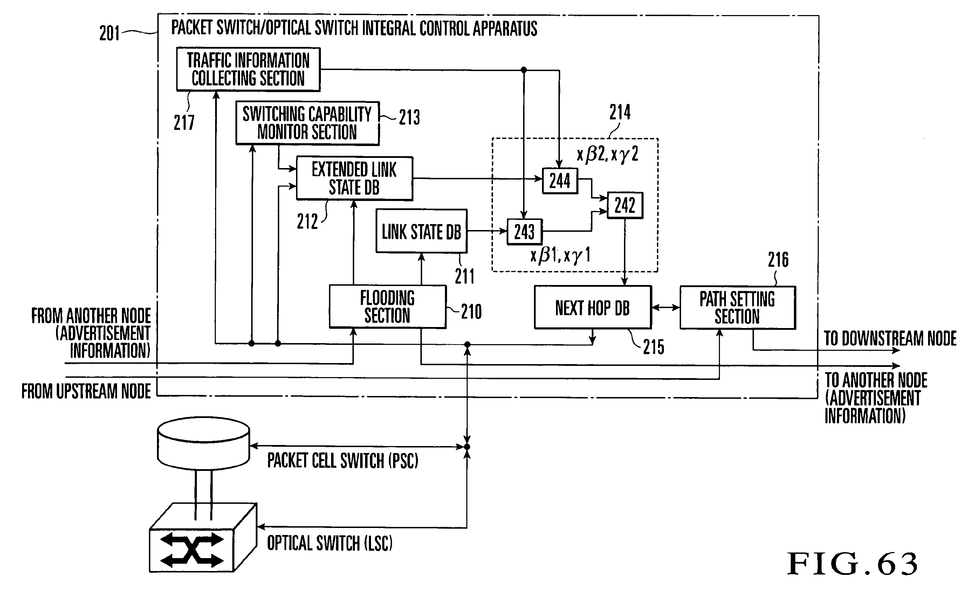

Fig. 63 shows the arrangement of a packet switch/optical switch integral control apparatus 1 according to the present invention. In this embodiment, the packet switch/optical switch integral control apparatus 1 has a traffic information collecting section 217 and the output from the traffic information collecting section 217 is input to multiplication functional sections 243 and 244 of a route calculation section 214. The traffic information collecting section 217 has a function of collecting the traffic state of each node. The traffic information collecting section 217 grasps the traffic situation of the node of its own or the entire network, thereby weighting the cost of an existing optical path link and the cost of a fiber link or changing the weight of the packet cell switch cost and optical switch cost.

The packet cell switch cost is managed by the link state DB 211, and the optical switch cost is managed by the extended link state DB 212. For example, when the packet traffic volume is very small, the fiber link cost or optical switch cost is reduced. The values satisfying

$$\beta1 = 1, \ \beta2 = 0.1 \times B_{0,W}/10^8, \ \gamma1 = 1, \ \gamma2 = 0$$

are set such that a new optical path can easily be set. When the packet traffic volume is large, the fiber link cost or optical switch cost is increased. The values satisfying

$$\beta1 = 1, \ \beta2 = 10 \times B_{0,W}/10^8, \ \gamma1 = 1, \ \gamma2 = 2$$

are set such that a new optical path can hardly be set. As described above, according to this embodiment, the optical path use method can be changed in accordance with the network state.

As is apparent from the above description, according to the present invention, the current switching capability of each interface in a node is determined on the basis of the utilization of the resource in that node. The current switching capability of the interface is updated/stored in the node and also advertised to the remaining nodes. Hence, the switching capability of each interface, on which the utilization of the resource of each node is reflected, can be advertised, and more accurate route calculation and path setting can be performed. In addition, when the dynamic switching capability and static switching capability are advertised, the resource can be efficiently used in rearranging optical paths or setting optical paths with different priorities. Furthermore, optical paths can be set or deleted in accordance with a variation in traffic demand. Hence, optical path setting in the entire network and optimization of logic paths which accommodate the optical paths can be dynamically done. As a result, the service accommodation efficiency in the entire network can be increased.

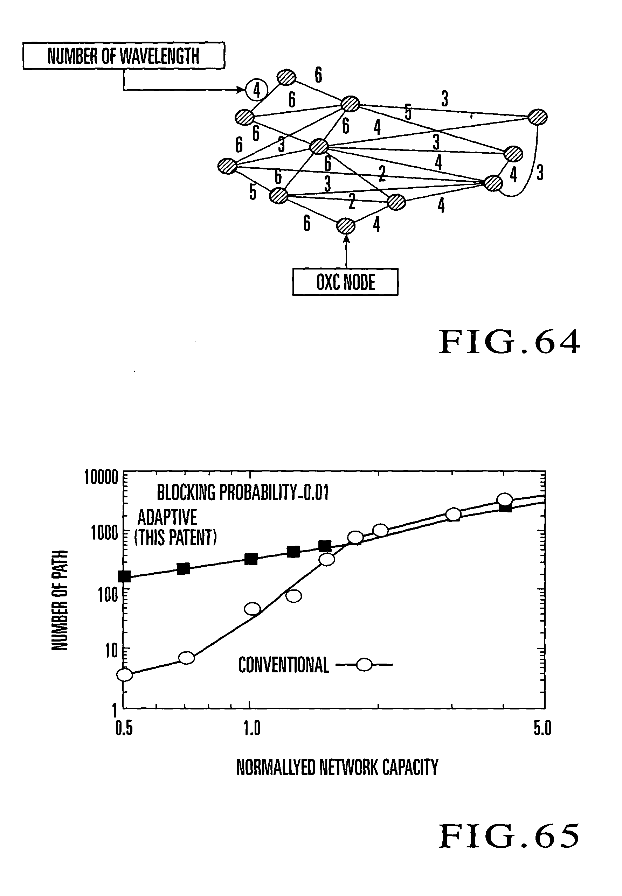

Figs. 64 and 65 show examples of effects of the present invention. Fig. 64 shows an example of a network to be analyzed. Fig. 65 shows the relationship between the NW throughput and the number of network elements of an NW for each of the prior art (the switching capability of each node is not transmitted, and a fixed optical path is set in accordance with generation of an IP traffic between nodes) and the present invention (the switching capability of each node is transmitted and grasped, and optical path setting is determined). In the present invention, a high NW throughput can be obtained. According to the present invention, since the degree of cooperation between the IP layer and the optical layer increases, a high-capacity communication service with an excellent fault resistance can be provided.

The representative embodiments of the present invention have been described above. However, the present invention is not limited to the above embodiments, and various changes and modifications can be made within the spirit and scope of the present invention.

**Claims**

**1.** An optical network **characterized by** comprising:

a plurality of links which transmit a plurality of signal light components having different wavelengths; and
a plurality of nodes which are connected to each other through said links and perform switching of an optical path specified by said link and the wavelength of the transmission signal light,

wherein each of said nodes (10) comprises
control means (11) for setting the optical path to be used for optical transport, and
switching means (12) for performing switching of the optical path set by said control means, and
said control means comprises
link observation means (13) for observing a wavelength of signal light that is being transmitted through a link connected to said node as a utilization of said link,
information exchange means (14) for notifying each of said remaining nodes of the link utilization observed by said link observation means and acquiring a link utilization observed by each of said remaining nodes so as to share the link utilization between said nodes,
optical path selection means (17) for selecting the optical path to be used for optical transport by calculation using the link utilization observed by said link observation means and the link utilization observed by each of said remaining nodes, and
optical path setting means (18) for setting the optical path selected by said optical path setting means as the optical path to be used for optical transport.

2. A network according to claim 1, wherein
one of said nodes has a wavelength converter (51) which converts a wavelength of input signal light input through said link,
a control section of said node having said wavelength converter has a monitor section (53) which monitors a utilization of said wavelength converter, which represents a wavelength convertible from each wavelength of input signal light, and
said information exchange means notifies each of said remaining nodes of the utilization of said wavelength converter, which is observed by said monitor section, and acquires a utilization of said wavelength converter, which is observed by each of said remaining nodes, so as to share the utilization of said wavelength converter between said nodes.

3. A network according to claim 2, wherein a regeneration, reshaping and retiming device which regenerates a signal waveform of the input signal light input from said link is used as said wavelength converter.

4. A network according to claim 2, wherein information obtained by said monitor section is formed from a bitmap representing the utilization of said wavelength converter, which represents the wavelength convertible from each wavelength of the input signal light.

5. A network according to claim 2, wherein information obtained by said monitor section is formed from a cost value corresponding to each conversion wavelength for each wavelength of the input signal light.

6. A network according to claim 5, wherein the information obtained by said monitor section is formed from a statistic value of the cost value for each wavelength of the input signal light.

7. A network according to claim 5, wherein a value which becomes small as the number of unused wavelength converters or the number of available wavelengths becomes large is used as the cost value.

8. A network according to claim 7, wherein said optical path selection means integrates a cost necessary for use of said wavelength converter of each node and use costs of said links which connect said nodes for all route candidates settable between a source node and a destination node and selects a route representing a minimum cost value as the optical path to be used for optical transport.

9. A network according to claim 2, wherein said information exchange means determines on the basis of a result of comparison between the utilization of said wavelength converter, which is obtained by said monitor section of said node, and a predetermined reference value whether notification of the utilization is necessary.

10. A network according to claim 9, wherein said information exchange means notifies a difference from a utilization at a preceding notification time as the utilization of said wavelength converter.

11. A network according to claim 2, wherein
said control means (140) further comprises
means for defining a degradation parameter of transmission signal light for each link accommodated in each node,
said information exchange means advertises the degradation parameter of the transmission signal light in a predetermined link section to each of said remaining nodes and receives the degradation parameter of the transmission signal light in the link section, which is advertised by each of said remaining nodes, and
said optical path selection means selects the optical path to be used for optical transport on the basis of the degradation parameter of the transmission signal light in the link section.

12. A network according to claim 11, wherein the degradation parameter is defined in correspondence with each wavelength band in each link section.

13. A network according to claim 11, wherein the degradation parameter includes an amount of increase in spontaneous emission noise in the link section.

14. A network according to claim 11, wherein the degradation parameter includes a degradation in signal-to-noise ratio in the link section.

15. A network according to claim 11, wherein the degradation parameter includes a degradation in signal light waveform in the link section.

16. A network according to claim 11, wherein the degradation parameter includes distance information of the link section.

17. A network according to claim 1, wherein said link observation means outputs information representing whether the wavelength of the signal light transmitted through said link is currently used or unused.

18. A network according to claim 17, wherein said link observation means outputs the information in a bitmap format.

19. A network according to claim 17, wherein said link observation means outputs, as the information, a number of a currently used wavelength in the wavelengths of the signal light transmitted through said link.

20. A network according to claim 17, wherein said link observation means outputs, as the information, a number of a currently unused wavelength in the wavelengths of the signal light transmitted through said link.

21. A network according to claim 1, wherein said link observation means outputs information representing the number of wavelengths in the wavelengths of the signal light transmitted through said link, for which a new optical path can be set.

22. A network according to claim 21, wherein said link observation means outputs, as the information, the number of currently unused wavelengths in the wavelengths of the signal light transmitted through said link.

23. A network according to claim 21, wherein said link observation means outputs, as the information, the number of currently used wavelengths in the wavelengths of the signal light transmitted through said link.

24. A network according to claim 1, wherein said link observation means outputs information representing a probability of use of a wavelength of the signal light transmitted through said link per unit time.

25. A network according to claim 1, wherein said link observation means outputs information representing a value obtained by averaging probabilities of use of all wavelengths of the signal light transmitted through said link per unit time.

26. A network according to claim 1, wherein said link observation means outputs information representing a value obtained by adding probabilities of use of all wavelengths of the signal light transmitted through said link per unit time.

27. An optical cross-connect apparatus **characterized by** comprising:

> control means for setting an optical path specified by a link which transmits a plurality of signal light components having different wavelengths and the wavelength of the transmission signal light; and
> switching means for performing switching of the optical path set by said control means,

> wherein said control means comprises
> link observation means for observing a wavelength of signal light that is being transmitted through a link connected to said cross-connect apparatus as a utilization of said link,
> information exchange means for notifying each of said remaining nodes of the link utilization observed by said link observation means and acquiring a link utilization observed by each of said remaining nodes so as to share the link utilization between nodes in an optical network to which said cross-connect apparatus is connected,
> optical path selection means for selecting an optical path to be used for optical transport by calculation using the link utilization observed by said link observation means and the link utilization observed by each of said remaining nodes, and
> optical path setting means for setting the optical path selected by said optical path setting means to an optical path to be used for optical transport.

28. An apparatus according to claim 27, wherein
> said apparatus further comprises a wavelength converter which converts a wavelength of input signal light input through said link,
> said control section has a monitor section (53) which monitors a utilization of said wavelength converter, which represents a wavelength convertible from each wavelength of input signal light, and
> said information exchange means notifies each of said remaining nodes of the utilization of said wavelength converter, which is observed by said monitor section, and acquires a utilization of said wavelength converter, which is observed by each of said remaining nodes, so as to share the utilization of said wavelength converter between said nodes.

29. An apparatus according to claim 28, wherein a regeneration, reshaping and retiming device which regenerates a signal waveform of the input signal light input from said link is used as said wavelength converter.

30. An apparatus according to claim 28, wherein information obtained by said monitor section is formed from a bitmap representing the utilization of said wavelength converter, which represents the wavelength convertible from each wavelength of the input signal light.

31. An apparatus according to claim 28, wherein information obtained by said monitor section is formed from a cost value corresponding to each conversion wavelength for each wavelength of the input signal light.

32. An apparatus according to claim 31, wherein the information obtained by said monitor section is formed from a statistic value of the cost value for each wavelength of the input signal light.

33. An apparatus according to claim 31, wherein a value which becomes small as the number of unused wavelength converters or the number of available wavelengths becomes large is used as the cost value.

34. An apparatus according to claim 33, wherein said optical path selection means integrates a cost necessary for use of said wavelength converter of each node and use costs of said links which connect said nodes for all route candidates settable between a source node and a destination node and selects a route representing a minimum cost value as the optical path to be used for optical transport.

35. An apparatus according to claim 28, wherein said information exchange means determines on the basis of a result of comparison between the utilization of said wavelength converter, which is obtained by said monitor section of said cross-connect apparatus, and a predetermined reference value whether notification of the utilization is necessary.

36. An apparatus according to claim 35, wherein said information exchange means notifies a difference from a utilization at a preceding notification time as the utilization of said wavelength converter.

37. An apparatus according to claim 28, wherein said control means further comprises means for defining a degradation parameter of transmission signal light for each link accommodated in each node, said information exchange means advertises the degradation parameter of the transmission signal light in a predetermined link section to each of said remaining nodes and receives the degradation parameter of the transmission signal light in the link section, which is advertised by each of said remaining nodes, and said optical path selection means selects the optical path to be used for optical transport on the basis of the degradation parameter of the transmission signal light in the link section.

38. An apparatus according to claim 37, wherein the degradation parameter is defined in correspondence with each wavelength band in each link section.

39. An apparatus according to claim 37, wherein the degradation parameter includes an amount of increase in spontaneous emission noise in the link section.

40. An apparatus according to claim 37, wherein the degradation parameter includes a degradation in signal-to-noise ratio in the link section.

41. An apparatus according to claim 37, wherein the degradation parameter includes a degradation in signal light waveform in the link section.

42. An apparatus according to claim 37, wherein the degradation parameter includes distance information of the link section.

43. An apparatus according to claim 27, wherein said link observation means outputs information representing whether the wavelength of the signal light transmitted through said link is currently used or unused.

44. An apparatus according to claim 43, wherein said link observation means outputs the information in a bitmap format.

45. An apparatus according to claim 43, wherein said link observation means outputs, as the information, a number of a currently used wavelength in the wavelengths of the signal light transmitted through said link.

46. An apparatus according to claim 43, wherein said link observation means outputs, as the information, a number of a currently unused wavelength in the wavelengths of the signal light transmitted through said link.

47. An apparatus according to claim 27, wherein said link observation means outputs information representing the number of wavelengths in the wavelengths of the signal light transmitted through said link, for which a new optical path can be set.

48. An apparatus according to claim 47, wherein said link observation means outputs, as the information, the number of currently unused wavelengths in the wavelengths of the signal light transmitted through said link.

49. An apparatus according to claim 47, wherein said link observation means outputs, as the information, the number of currently used wavelengths in the wavelengths of the signal light transmitted through said link.

50. An apparatus according to claim 27, wherein said link observation means outputs information representing a probability of use of a wavelength of the signal light transmitted through said link per unit time.

51. An apparatus according to claim 27, wherein said link observation means outputs information representing a value obtained by averaging probabilities of use of all wavelengths of the signal light transmitted through said link per unit time.

52. An apparatus according to claim 27, wherein said link observation means outputs information representing a value obtained by adding probabilities of use of all wavelengths of the signal light transmitted through said link per unit time.

53. A photonic-IP network having an interface (ND-1) which has a switching capability for performing switching, for each packet, of a path to be used for data communication through an IP network, and an interface (ND-2) which has a switching capability for performing switching, for each wavelength of transmission signal light, of a path to be used for data communication through an optical network, **characterized by** comprising:

a node (ND) which switching-connects the IP network and the optical network,

wherein said node (ND) comprises monitor means (BL5) for monitoring the switching capability of each interface in said node on the basis of a utilization of a resource in said node,
storage means for updating/storing the switching capability obtained by said monitor means, and

switching capability advertising means (BL1) for advertising the switching capability to remaining nodes.

54. A network according to claim 53, wherein the utilization of the resource in said node in said switching capability advertising means includes a utilization of the interface in said node.

55. A network according to claim 53, wherein the utilization of the resource in said node in said switching capability advertising means includes a utilization of the interface in said node and a utilization of the resource except the interface in said node.

56. A network according to claim 53, wherein when an interface has no switching capability remaining, said switching capability advertising means updates/stores in said storage means information representing that no switching capability remains as a current switching capability of the interface and advertises the information to remaining nodes.

57. A network according to claim 53, wherein said switching capability advertising means advertises to remaining nodes a current switching capability of the interface together with unique information of the interface and, when an interface has no switching capability remaining, said switching capability advertising means does not advertise the unique information of the interface to the remaining nodes.

58. A network according to claim 53, wherein at least one control path to be used to exchange information of a routing protocol is ensured between adjacent nodes.

59. A network according to claim 53, wherein said switching capability advertising means pairs the utilization of the resource in said node and a switching capability unique to said node, updates/stores the utilization and switching capability in said storage means, and advertises the utilization and switching capability to remaining nodes.

60. A network according to claim 53, wherein when an interface has no switching capability remaining, said switching capability advertising means pairs, as a current switching capability of the interface, information representing that no switching capability remains, and a switching capability unique to the interface, updates/stores the information and switching capability in said storage means, and advertises the information and switching capability to remaining nodes.

**61.** A node **characterized by** comprising:

> an interface (ND-2) having a switching capability for performing switching, for each wavelength of transmission signal light, of a path to be used for data communication through an optical network;
> monitor means (BL5) for monitoring the switching capability of each interface in said node on the basis of a utilization of a resource in said node;
> storage means (BL2) for updating/storing the switching capability obtained by said monitor means; and
> switching capability advertising means (BL1) for advertising the switching capability to remaining nodes.

**62.** A node according to claim 61, wherein said switching capability advertising means pairs the utilization of the resource in said node and a switching capability unique to said node, updates/stores the utilization and switching capability in said storage means, and advertises the utilization and switching capability to remaining nodes.

**63.** A node according to claim 61, wherein said interface also has a switching capability for performing switching, for each packet, of a path to be used for data communication through an IP network.

**64.** A node according to claim 63, further comprising
first management means (211) for recognizing and managing a network state of a packet or cell transport network formed from a packet or cell switch and an optical path on the basis of information related to the switching capability of said interface, which is advertised from the remaining nodes,
second management means (212) for recognizing and managing a network state of an optical path network formed from an optical switch and a fiber link which accommodates the optical path, and
determination means (214) for receiving state information managed by said first management means and state information managed by said second management means and determining a route through which the packet or cell and the optical path are to be transported.

**65.** A node according to claim 64, wherein
said node further comprises multiplication means (240, 241) for receiving cost information of the optical path, which is managed by said first management means, multiplying the cost information by a weight coefficient $\beta 1$, receiving cost information of the fiber link, which is managed by said second management means, and multiplying the cost information by a weight coefficient $\beta 2$, and

said determination means receives a multiplication result from said multiplication means and searches for a transport route at a minimum cost, thereby determining the route through which the packet or cell and the optical path are to be transported.

**66.** A node according to claim 65, wherein said node further comprises collection means for collecting traffic state information of the network, and
said multiplication means dynamically changes one or both of the weight coefficients $\beta 1$ and $\beta 2$ in accordance with the traffic state information.

**67.** A node according to claim 64, wherein
said node further comprises multiplication means (243, 244) for receiving cost information of the optical path and cost information of a packet or a cell switching block, which are managed by said first management means, multiplying the two pieces of cost information by a weight coefficient $\beta 1$ and a weight coefficient $\gamma 1$, respectively, receiving cost information of the fiber link and cost information of an optical switching block, which are managed by said second management means, and multiplying the two pieces of cost information by a weight coefficient $\beta 2$ and a weight coefficient $\gamma 2$, respectively, and
said determination means receives multiplication results from said multiplication means and searches for a transport route at a minimum cost, thereby determining the route through which the packet or cell and the optical path are to be transported.

**68.** A node according to claim 67, wherein said multiplication means dynamically changes one or both of the weight coefficients $\gamma 1$ and $\gamma 2$ in accordance with one or both of state information of the packet/cell switching block, which is managed by said first management means, and state information of the optical switching block, which is managed by said second management means.

**69.** A node according to claim 67, wherein
said node further comprises collection means (217) for collecting traffic state information of the network, and
said multiplication means dynamically changes some or all of the weight coefficients $\beta 1$, $\beta 2$, $\gamma 1$, and $\gamma 2$ in accordance with the traffic state information.

FIG. 1

**FIG. 2**

CONTROL SECTION

11

16 — SETTING REQUEST RECEIVING SECTION

13 — LINK OBSERVATION SECTION

15 — DATA STORAGE SECTION

17 — OPTICAL PATH CALCULATION SECTION

32 — FROM ANOTHER NODE

14 — FLOODING SECTION

18 — OPTICAL PATH SETTING SECTION

33 — TO ANOTHER NODE

31 — TO ANOTHER NODE

21

12 — SWITCHING PROCESSING SECTION

21

OPTICAL CROSS-CONNECT APPARATUS — 10

EP 1 335 627 A2

32

```
0 1 2 3 4 5 6 7 8 9 0 1 2 3 4 5 6 7 8 9 0 1 2 3 4 5 6 7 8 9 0 1

             TYPE                              LENGTH

                              BITMAP

```

## F I G. 3

```
0 1 2 3 4 5 6 7 8 9 0 1 2 3 4 5 6 7 8 9 0 1 2 3 4 5 6 7 8 9 0 1

             TYPE                              LENGTH

0 1 0 1 1 1 0 0 0 1 0 1 0 1 0 1 0 1 1 1 1 0 0 1 1 0 0 0 1 1 0 1

1 1 1 1 0 0 0 0 0 1 1 0 1 0 0 1 1 1 0 0 0 0 0 1 0 1 1 1 1 0 0 0 0

```

## F I G. 4

START

OBSERVE USE SITUATION OF FIBER LINK 21 FOR EACH WAVELENGTH — S1

UPDATE LINK STATE DATA ON THE BASIS OF OBTAINED INFORMATION AND BROADCAST OBTAINED INFORMATION TO REMAINING OPTICAL CROSS-CONNECT APPARATUSES — S2

END

# FIG. 5

START

RECEIVE INFORMATION FROM ANOTHER OPTICAL CROSS-CONNECT APPARATUS — S3

S4 — INFORMATION RECEIVED FOR THE FIRST TIME ?  NO

YES

BROADCAST RECEIVED INFORMATION TO REMAINING OPTICAL CROSS-CONNECT APPARATUSES — S5

DISCARD RECEIVED INFORMATION — S7

UPDATE LINK STATE DATA ON THE BASIS OF RECEIVED INFORMATION — S6

END

# FIG. 6

```
                    ┌─────────┐
                    │  START  │
                    └────┬────┘
                         │
         ┌───────────────┼──────────────────────────┐
         │               ▼                          │
S8   ╱───────────────────────────────────────╲  NO  │
     ╲  OPTICAL PATH SETTING  REQUEST RECEIVED ? ╱───┘
      ╲─────────────────────────────────────╱
                         │ YES
                         ▼
         ┌───────────────────────────────────┐
         │  CALCULATE OPTICAL PATH ON THE BASIS │─ S9
         │       OF LINK STATE DATA            │
         └─────────────────┬─────────────────┘
                           ▼
         ┌───────────────────────────────────┐
         │  TRANSMIT OBTAINED OPTICAL PATH      │
         │  INFORMATION TO REMAINING OPTICAL    │─ S10
         │  CROSS-CONNECT APPARATUSES           │
         └─────────────────┬─────────────────┘
                           │
         ┌─────────────────┼───────────────────────┐
         │                 ▼                        │
S11  ╱───────────────────────────────────────╲ NO  │
     ╲   RECEPTION INFORMATION RECEIVED ?      ╱────┘
      ╲─────────────────────────────────────╱
                           │ YES
                           ▼
         ┌───────────────────────────────────┐
         │          SET OPTICAL PATH           │─ S12
         └─────────────────┬─────────────────┘
                           ▼
                    ┌─────────┐
                    │   END   │
                    └─────────┘
```

FIG. 7

```
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|                              |                                |
|            TYPE              |            LENGTH              |
|                              |                                |
+-+-+-+-+-+-+-+-+-+-+-+-+-+-+-+-+-+-+-+-+-+-+-+-+-+-+-+-+-+-+-+-+
|                                                               |
|                     ID OF USED WAVELENGTH                      |
|                                                               |
+-+-+-+-+-+-+-+-+-+-+-+-+-+-+-+-+-+-+-+-+-+-+-+-+-+-+-+-+-+-+-+-+
|                                                               |
|                     ID OF USED WAVELENGTH                      |
|                                                               |
+-+-+-+-+-+-+-+-+-+-+-+-+-+-+-+-+-+-+-+-+-+-+-+-+-+-+-+-+-+-+-+-+
|                                                               |
|                            • • •                              |
|                                                               |
+-+-+-+-+-+-+-+-+-+-+-+-+-+-+-+-+-+-+-+-+-+-+-+-+-+-+-+-+-+-+-+-+
```

# FIG. 8

```
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|                              |                                |
|            TYPE              |            LENGTH              |
|                              |                                |
+-+-+-+-+-+-+-+-+-+-+-+-+-+-+-+-+-+-+-+-+-+-+-+-+-+-+-+-+-+-+-+-+
|                                                               |
|                    ID OF UNUSED WAVELENGTH                     |
|                                                               |
+-+-+-+-+-+-+-+-+-+-+-+-+-+-+-+-+-+-+-+-+-+-+-+-+-+-+-+-+-+-+-+-+
|                                                               |
|                    ID OF UNUSED WAVELENGTH                     |
|                                                               |
+-+-+-+-+-+-+-+-+-+-+-+-+-+-+-+-+-+-+-+-+-+-+-+-+-+-+-+-+-+-+-+-+
|                                                               |
|                            • • •                              |
|                                                               |
+-+-+-+-+-+-+-+-+-+-+-+-+-+-+-+-+-+-+-+-+-+-+-+-+-+-+-+-+-+-+-+-+
```

# FIG. 9

| 0 1 2 3 4 5 6 7 8 9 0 1 2 3 4 5 | 6 7 8 9 0 1 2 3 4 5 6 7 8 9 0 1 |
|---|---|
| TYPE | LENGTH |
| NUMBER OF UNUSED WAVELENGTH ||

**FIG.10**

| 0 1 2 3 4 5 6 7 8 9 0 1 2 3 4 5 | 6 7 8 9 0 1 2 3 4 5 6 7 8 9 0 1 |
|---|---|
| TYPE | LENGTH |
| NUMBER OF USED WAVELENGTH ||

**FIG.11**

| 0 1 2 3 4 5 6 7 8 9 0 1 2 3 4 5 | 6 7 8 9 0 1 2 3 4 5 6 7 8 9 0 1 |
|---|---|
| TYPE | LENGTH |
| ID OF WAVELENGTH | USE RATIO |
| ID OF WAVELENGTH | USE RATIO |
| . . . ||
| ID OF WAVELENGTH | USE RATIO |

**FIG.12**

EP 1 335 627 A2

FIG.13

FROM ANOTHER NODE

TO ANOTHER NODE

54 WAVELENGTH CONVERTER USE SITUATION DATABASE

50

53 MONITOR SECTION

51-1 WC
51-2 WC
51-3 WC
51-4 WC

52 OPTICAL SWITCH

#1 λ1 λ2
#2 λ1 λ2

#1
#2

## FIG.14

| #1 TABLE | | OUTPUT WAVELENGTH | |
|---|---|---|---|
| | | λ1 | λ2 |
| INPUT WAVELENGTH | λ1 | 1 | 1 |
| | λ2 | 1 | 1 |

| #1 TABLE | | OUTPUT WAVELENGTH | |
|---|---|---|---|
| | | λ1 | λ2 |
| INPUT WAVELENGTH | λ1 | 0 | 0 |
| | λ2 | 1 | 1 |

| #1 TABLE | | OUTPUT WAVELENGTH | |
|---|---|---|---|
| | | λ1 | λ2 |
| INPUT WAVELENGTH | λ1 | 0 | 0 |
| | λ2 | 1 | 1 |

CONVERT λ1 OF #1 INTO λ2 →    CONVERT λ2 OF #2 INTO λ1 →

| #1 TABLE | | OUTPUT WAVELENGTH | |
|---|---|---|---|
| | | λ1 | λ2 |
| INPUT WAVELENGTH | λ1 | 1 | 1 |
| | λ2 | 1 | 1 |

| #1 TABLE | | OUTPUT WAVELENGTH | |
|---|---|---|---|
| | | λ1 | λ2 |
| INPUT WAVELENGTH | λ1 | 1 | 1 |
| | λ2 | 1 | 1 |

| #1 TABLE | | OUTPUT WAVELENGTH | |
|---|---|---|---|
| | | λ1 | λ2 |
| INPUT WAVELENGTH | λ1 | 1 | 1 |
| | λ2 | 0 | 0 |

## FIG.15

FROM ANOTHER NODE

TO ANOTHER NODE

WAVELENGTH CONVERTER USE SITUATION DATABASE 54 50

MONITOR SECTION 53

WC 51

λ1 WC 55

λ2 WC 56

52

OPTICAL SWITCH

#1

#2

#1

#2

## FIG.16

| #1 TABLE | | OUTPUT WAVELENGTH | |
|---|---|---|---|
| | | λ1 | λ2 |
| INPUT WAVELENGTH | λ1 | 1 | 1 |
| | λ2 | 1 | 1 |

| #1 TABLE | | OUTPUT WAVELENGTH | |
|---|---|---|---|
| | | λ1 | λ2 |
| INPUT WAVELENGTH | λ1 | 1 | 1 |
| | λ2 | 1 | 1 |

| #1 TABLE | | OUTPUT WAVELENGTH | |
|---|---|---|---|
| | | λ1 | λ2 |
| INPUT WAVELENGTH | λ1 | 1 | 0 |
| | λ2 | 1 | 0 |

CONVERT λ1 OF #1 INTO λ2
BY λ2WC16
→

CONVERT λ2 OF #2 INTO λ1
BY WC11
→

| #1 TABLE | | OUTPUT WAVELENGTH | |
|---|---|---|---|
| | | λ1 | λ2 |
| INPUT WAVELENGTH | λ1 | 1 | 1 |
| | λ2 | 1 | 1 |

| #1 TABLE | | OUTPUT WAVELENGTH | |
|---|---|---|---|
| | | λ1 | λ2 |
| INPUT WAVELENGTH | λ1 | 1 | 1 |
| | λ2 | 1 | 1 |

| #1 TABLE | | OUTPUT WAVELENGTH | |
|---|---|---|---|
| | | λ1 | λ2 |
| INPUT WAVELENGTH | λ1 | 1 | 0 |
| | λ2 | 1 | 0 |

## FIG.17

0 1 2 3 4 5 6 7 8 9 0 1 2 3 4 5 6 7 8 9 0 1 2 3 4 5 6 7 8 9 0 1

| T | L |
|---|---|
| $\lambda$ID = 0 | |

1 1 1 1 1 1 1 1 0 0 0 0 0 0 0 0 0 0 0 0 0 0 0 0 0 0 0 0 0 0 0 0

| $\lambda$ID = 1 | |

0 0 0 0 0 1 1 1 1 1 1 1 1 0 0 0 0 0 0 0 0 0 0 0 0 0 0 0 0 0 0 0

## FIG.18

0 1 2 3 4 5 6 7 8 9 0 1 2 3 4 5 6 7 8 9 0 1 2 3 4 5 6 7 8 9 0 1

| T | L |
|---|---|
| $\lambda$ID = 0 | |

| 0 0 0 0 | 0 0 1 0 | 0 1 0 0 | 1 1 0 0 | ... | | | |

| $\lambda$ID = 1 | |

| 1 1 1 1 | 0 1 1 0 | 0 1 0 1 | 0 0 0 0 | ... | | | |

## FIG.19

0 1 2 3 4 5 6 7 8 9 0 1 2 3 4 5 6 7 8 9 0 1 2 3 4 5 6 7 8 9 0 1

| T | L |
|---|---|
| $\lambda$ID = 0 | AVERAGE VALUE OF (0000) TO (1100) |
| $\lambda$ID = 1 | AVERAGE VALUE OF (1111) TO (0000) |
| : | : |
| ALL WAVELENGTHS | ALL AVERAGE VALUES |

## FIG.20

**FIG.21**

**FIG.22**

FIG.23

FIG.24

FIG.25

EP 1 335 627 A2

FIG.26

EP 1 335 627 A2

FIG.27

EP 1 335 627 A2

```
        ┌─────────────────────┐
        │       k = 0         │──S21
        └─────────────────────┘
                   │
                   │          ┌─────────────────────┐
                   │          │      k = k+1        │──S24
                   │          └─────────────────────┘
                   │                     ↑
                   │          ┌─────────────────────┐
                   │          │  CALCULATE ROUTE (k) │──S23
                   │          │  BY DIJKSTRA METHOD  │
                   │          └─────────────────────┘
                   │                     ↑
         S22       │          YES        │
          ╱────────────────╲──────────────┘
         ╱      k < w        ╲
         ╲                   ╱
          ╲─────────────────╱
                   │ NO
        ┌─────────────────────┐
        │ SELECT ROUTE AT MINIMUM COST │──S25
        │ FROM k ROUTE CANDIDATES      │
        └─────────────────────┘
```

## FIG.28

FIG.29

OPTICAL PATH

~150

NODE CONTROL
SECTION
~140

120

USER INTERFACE SECTION

110

OPTICAL
PATH

OPTICAL
SWITCHING
BLOCK

OPTICAL
PATH

REGENERATION, RESHAPING
AND RETIMING RELAY

130

NODE

#1

FIG.30

| LINK NUMBER | NODE NUMBER 1 | NODE NUMBER 2 | COST | DEGRADATION PARAMETER |
|---|---|---|---|---|
| 12 | 1 | 2 | 20 | $\alpha_{12}$ |
| 13 | 1 | 3 | 30 | $\alpha_{13}$ |
| 15 | 1 | 5 | 20 | $\alpha_{15}$ |
| 25 | 2 | 5 | 20 | $\alpha_{25}$ |
| 34 | 3 | 4 | 10 | $\alpha_{34}$ |
| 45 | 4 | 5 | 10 | $\alpha_{45}$ |

$$\alpha_{13} + \alpha_{34} < \alpha_{th}$$
$$\alpha_{15} + \alpha_{45} > \alpha_{th}$$

FIG.31

```
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+      LINK LOCAL 9
|          LS AGE          |     OPTIONS    | 9,10 OR 11 |         AREA-LOCAL 10
+-+-+-+-+-+-+-+-+-+-+-+-+-+-+-+-+-+-+-+-+-+-+-+-+-+-+-+-+-+-+-+-+      ALL OSPF ROUTING DOMAINS 11
| OPAQUE        |                                            |
|  TYPE         |           OPAQUE ID                        |       NORMAL OSPF IS 1 TO 7
+-+-+-+-+-+-+-+-+-+-+-+-+-+-+-+-+-+-+-+-+-+-+-+-+-+-+-+-+-+-+-+-+
|                      ADVERTISING ROUTER                    |
+-+-+-+-+-+-+-+-+-+-+-+-+-+-+-+-+-+-+-+-+-+-+-+-+-+-+-+-+-+-+-+-+
|                      LS SEQUENCE NUMBER                    |
+-+-+-+-+-+-+-+-+-+-+-+-+-+-+-+-+-+-+-+-+-+-+-+-+-+-+-+-+-+-+-+-+
|        LS CHECKSUM       |             LENGTH              |
+-+-+-+-+-+-+-+-+-+-+-+-+-+-+-+-+-+-+-+-+-+-+-+-+-+-+-+-+-+-+-+-+
|                                                            |
+                                                            +
|                  OPAQUE INFORMATION                        |
+                                                            +
|                                                            |
```

```
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|            TYPE           |            LENGTH             |          FIRST LINK NUMBER
+-+-+-+-+-+-+-+-+-+-+-+-+-+-+-+-+-+-+-+-+-+-+-+-+-+-+-+-+-+-+-+-+
|                        VALUE                              |          FIRST SIGNAL
+-+-+-+-+-+-+-+-+-+-+-+-+-+-+-+-+-+-+-+-+-+-+-+-+-+-+-+-+-+-+-+-+         DEGRADATION PARAMETER
|                        VALUE                              |          SECOND LINK NUMBER
+-+-+-+-+-+-+-+-+-+-+-+-+-+-+-+-+-+-+-+-+-+-+-+-+-+-+-+-+-+-+-+-+
|                        VALUE                              |
+-+-+-+-+-+-+-+-+-+-+-+-+-+-+-+-+-+-+-+-+-+-+-+-+-+-+-+-+-+-+-+-+
```

FIG.32

52

NODE #2

COST 20

ROUTE USING NO REGENERATION, RESHAPING
AND RETIMING RELAY

NODE #1

COST 30    NODE #3    COST 10

$\alpha 13 + \alpha 34 < \alpha th$

COST 20

NODE #5    COST 10    NODE #4

$\alpha 15 + \alpha 45 > \alpha th$

# FIG.33

START

DEFINE DEGRADATION PARAMETER OF
TRANSMISSION SIGNAL LIGHT IN LINK SECTION — S101

ADVERTISE DEGRADATION PARAMETER OF TRANSMISSION
SIGNAL LIGHT IN LINK SECTION TO REMAINING NODES — S102

SELECT, USING DEGRADATION PARAMETER, ROUTE OF
OPTICAL PATH FOR WHICH USE OF REGENERATION,
RESHAPING AND RETIMING RELAY IS SUPPRESSED — S103

END

# FIG.34

START

CALCULATE TOTAL COST OF OPTICAL PATH
CANDIDATES FROM START NODE TO
TERMINAL NODE — S111

SELECT OPTICAL PATH CANDIDATE FOR
WHICH TOTAL COST IS MINIMUM — S112

S113

SUM OF DEGRADATION PARAMETERS
OF SELECTED OPTICAL PATH CANDIDATE
< THRESHOLD VALUE ?

NO

YES

S114

NEXT OPTICAL PATH CANDIDATE ?

YES

NO

SET, AS SHORTEST ROUTE,
OPTICAL PATH CANDIDATE FOR
WHICH TOTAL COST IS MINIMUM — S115

SET SELECTED OPTICAL PATH CANDIDATE
AS SHORTEST ROUTE — S116

END

FIG.35

```
0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|            LS AGE            |   OPTIONS    | 9,10 OR 11 |
+-+-+-+-+-+-+-+-+-+-+-+-+-+-+-+-+-+-+-+-+-+-+-+-+-+-+-+-+-+-+-+-+
|   OPAQUE   |                                             |
|    TYPE    |              OPAQUE ID                       |
+-+-+-+-+-+-+-+-+-+-+-+-+-+-+-+-+-+-+-+-+-+-+-+-+-+-+-+-+-+-+-+-+
|                  ADVERTISING ROUTER                       |
+-+-+-+-+-+-+-+-+-+-+-+-+-+-+-+-+-+-+-+-+-+-+-+-+-+-+-+-+-+-+-+-+
|                  LS SEQUENCE NUMBER                       |
+-+-+-+-+-+-+-+-+-+-+-+-+-+-+-+-+-+-+-+-+-+-+-+-+-+-+-+-+-+-+-+-+
|        LS CHECKSUM          |          LENGTH             |
+-+-+-+-+-+-+-+-+-+-+-+-+-+-+-+-+-+-+-+-+-+-+-+-+-+-+-+-+-+-+-+-+
|                                                          |
+                  OPAQUE INFORMATION                       +
|                                                          |
+                                                          +
|                                                          |
```

LINK LOCAL 9
AREA-LOCAL 10
ALL OSPF ROUTING DOMAINS 11

NORMAL OSPF IS 1 TO 7

```
0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|              TYPE              |            LENGTH           |
+-+-+-+-+-+-+-+-+-+-+-+-+-+-+-+-+-+-+-+-+-+-+-+-+-+-+-+-+-+-+-+-+
|                          VALUE                             |
+-+-+-+-+-+-+-+-+-+-+-+-+-+-+-+-+-+-+-+-+-+-+-+-+-+-+-+-+-+-+-+-+
|                          VALUE                             |
+-+-+-+-+-+-+-+-+-+-+-+-+-+-+-+-+-+-+-+-+-+-+-+-+-+-+-+-+-+-+-+-+
|                          VALUE                             |
+-+-+-+-+-+-+-+-+-+-+-+-+-+-+-+-+-+-+-+-+-+-+-+-+-+-+-+-+-+-+-+-+
|                          VALUE                             |
+-+-+-+-+-+-+-+-+-+-+-+-+-+-+-+-+-+-+-+-+-+-+-+-+-+-+-+-+-+-+-+-+
|                          VALUE                             |
+-+-+-+-+-+-+-+-+-+-+-+-+-+-+-+-+-+-+-+-+-+-+-+-+-+-+-+-+-+-+-+-+
```

FIRST LINK NUMBER l1

FIRST WAVELENGTH
BAND w1

FIRST DEGRADATION
PARAMETER $\alpha l1,w1$

FIRST LINK NUMBER l1

FIRST WAVELENGTH
BAND w2

# FIG.36

FIG.37

FIG.38

0 1 2 3 4 5 6 7 8 9 0 1 2 3 4 5 6 7 8 9 0 1 2 3 4 5 6 7 8 9 0 1

| LINK STATE AGE | OPTIONS | 9,10 OR 11 |

LINK LOCAL 9
AREA-LOCAL 10
ALL OSPF ROUTING DOMAINS 11

| OPAQUE TYPE | OPAQUE ID |

NORMAL OSPF IS 1 TO 7

| ADVERTISING ROUTER |

| LS SEQUENCE NUMBER |

| LS CHECKSUM | LENGTH |

OPAQUE INFORMATION

0 1 2 3 4 5 6 7 8 9 0 1 2 3 4 5 6 7 8 9 0 1 2 3 4 5 6 7 8 9 0 1

| TYPE | LENGTH |

| VALUE | — LINK ID l1

| VALUE | — SIGNAL-TO-NOISE RATIO DEGRADATION PARAMETER $\alpha_{l1, snr}$

| VALUE | — LINK ID l1

| VALUE | — WAVELENGTH BAND w1

| VALUE | — SIGNAL WAVEFORM DEGRADATION PARAMETER $\alpha_{l1, isi, w1}$

FIG.39

FIG.40

```
0 1 2 3 4 5 6 7 8 9 0 1 2 3 4 5 6 7 8 9 0 1 2 3 4 5 6 7 8 9 0 1          LINK LOCAL 9
+-+-+-+-+-+-+-+-+-+-+-+-+-+-+-+-+-+-+-+-+-+-+-+-+-+-+-+-+-+-+-+-+          AREA-LOCAL 10
|          LS AGE          |    OPTIONS    | 9,10 OR 11 |               ALL OSPF ROUTING DOMAINS 11
+-+-+-+-+-+-+-+-+-+-+-+-+-+-+-+-+-+-+-+-+-+-+-+-+-+-+-+-+-+-+-+-+
| OPAQUE  |                                                    |       NORMAL OSPF IS 1 TO 7
|  TYPE   |              OPAQUE ID                             |
+-+-+-+-+-+-+-+-+-+-+-+-+-+-+-+-+-+-+-+-+-+-+-+-+-+-+-+-+-+-+-+-+
|                  ADVERTISING ROUTER                          |
+-+-+-+-+-+-+-+-+-+-+-+-+-+-+-+-+-+-+-+-+-+-+-+-+-+-+-+-+-+-+-+-+
|                  LS SEQUENCE NUMBER                          |
+-+-+-+-+-+-+-+-+-+-+-+-+-+-+-+-+-+-+-+-+-+-+-+-+-+-+-+-+-+-+-+-+
|      LS CHECKSUM         |           LENGTH                  |
+-+-+-+-+-+-+-+-+-+-+-+-+-+-+-+-+-+-+-+-+-+-+-+-+-+-+-+-+-+-+-+-+
|
+                  OPAQUE INFORMATION                          +
|
+                                                             +
|
```

```
0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|              TYPE            |           LENGTH             |
+-+-+-+-+-+-+-+-+-+-+-+-+-+-+-+-+-+-+-+-+-+-+-+-+-+-+-+-+-+-+-+-+      LINK ID n
|                          VALUE                             |
+-+-+-+-+-+-+-+-+-+-+-+-+-+-+-+-+-+-+-+-+-+-+-+-+-+-+-+-+-+-+-+-+      DISTANCE DSn
|                          VALUE                             |
+-+-+-+-+-+-+-+-+-+-+-+-+-+-+-+-+-+-+-+-+-+-+-+-+-+-+-+-+-+-+-+-+      LINK ID n
|                          VALUE                             |
+-+-+-+-+-+-+-+-+-+-+-+-+-+-+-+-+-+-+-+-+-+-+-+-+-+-+-+-+-+-+-+-+      SIGNAL-TO-NOISE
|                          VALUE                             |       RATIO DEGRADATION
+-+-+-+-+-+-+-+-+-+-+-+-+-+-+-+-+-+-+-+-+-+-+-+-+-+-+-+-+-+-+-+-+      PARAMETER αn
|                          VALUE                             |
+-+-+-+-+-+-+-+-+-+-+-+-+-+-+-+-+-+-+-+-+-+-+-+-+-+-+-+-+-+-+-+-+
```

# FIG.41

FIG.42

FIG.43

FIG.44

FIG.45

EP 1 335 627 A2

FIG.46

EP 1 335 627 A2

**FIG. 47**

| |
|---|
| LS AGE / OPTIONS |
| OPAQUE TYPE / OPAQUE ID |
| ADVERTISING ROUTER (STATE NODE IDENTIFICATION NUMBER) NODE #M |
| LS SEQUENCE NUMBER |
| LS CHECKSUM / LENGTH |
| LINK ID (TERMINAL NODE IDENTIFICATION NUMBER) NODE #N |
| LINK DATA (INTERFACE IDENTIFICATION NUMBER) INTERFACE #01 |
| COST 100 |
| SWITCHING CAPABILITY 11 (PSC) |
| |

FIG.48

FIG.49

EP 1 335 627 A2

| LS AGE | OPTIONS |
|---|---|
| OPAQUE TYPE | OPAQUE ID |
| ADVERTISING ROUTER (STATE NODE IDENTIFICATION NUMBER) NODE #L | |
| LS SEQUENCE NUMBER | |
| LS CHECKSUM | LENGTH |
| LINK ID (TERMINAL NODE IDENTIFICATION NUMBER) NODE #M | |
| LINK DATA (INTERFACE IDENTIFICATION NUMBER) INTERFACE #02 | |
| | COST 200 |
| SWITCHING CAPABILITY (D) (PSC) | |
| SWITCHING CAPABILITY (S) (PSC + LSC) | |

# FIG.50

EP 1 335 627 A2

H

BL5

SWITCHING CAPABILITY
MONITOR SECTION

CONTROL SECTION

CNT

S1

LINK STATE DB

BL2

J

BL5

SWITCHING CAPABILITY
MONITOR SECTION

CONTROL SECTION

CNT

S2

LINK STATE DB

BL2

K

BL5

SWITCHING CAPABILITY
MONITOR SECTION

CONTROL SECTION

CNT

LINK STATE DB

BL2

H1

PSC → I1          O1 PSC
PSC → I2          O2 PSC

#1

J1

LSC(S)
LSC(D)  I1          O1  LSC(S)
                        NOTHING(D)

LSC(S)
NOTHING(D)  I2      O2  LSC(S)
                        LSC(D)

K1

PSC  I1          O1  PSC
PSC  I2          O2  PSC

FIG.51

FIG.52

**PACKET SWITCH/OPTICAL SWITCH INTEGRAL CONTROL APPARATUS** — 201

- SWITCHING CAPABILITY MONITOR SECTION — 213
- PRESENT INVENTION
- EXTENDED LINK STATE DB — 212
- ROUTE CALCULATION SECTION — 214
- LINK STATE DB — 211
- FLOODING SECTION — 210
- NEXT HOP DB — 215
- PATH SETTING SECTION — 216

FROM ANOTHER NODE (ADVERTISEMENT INFORMATION)

FROM UPSTREAM NODE

TO DOWNSTREAM NODE

TO ANOTHER NODE (ADVERTISEMENT INFORMATION)

PACKET CELL SWITCH (PSC)

OPTICAL SWITCH (LSC)

EP 1 335 627 A2

**FIG.53**

OSPF PACKET
(ROUTER LSA)
(OPTICAL PATH LINK STATE INFORMATION)

OSPF PACKET
(OPAQUE LSA)
(FIBER LINK STATE INFORMATION)

ADVERTISE

PSC

LSC

201

FIG.54

EP 1 335 627 A2

201 — PACKET SWITCH/OPTICAL SWITCH INTEGRAL CONTROL APPARATUS

SWITCHING CAPABILITY MONITOR SECTION — 213

214

$x\beta2$
241
242
$x\beta1$
240

EXTENDED LINK STATE DB

212

LINK STATE DB

211

FLOODING SECTION — 210

216

NEXT HOP DB

PATH SETTING SECTION

215

FROM ANOTHER NODE (ADVERTISEMENT INFORMATION)

FROM UPSTREAM NODE

TO DOWNSTREAM NODE

TO ANOTHER NODE (ADVERTISEMENT INFORMATION)

PACKET CELL SWITCH (PSC)

OPTICAL SWITCH (LSC)

FIG.55

EP 1 335 627 A2

R-1.IF-1
R-1.IF-2

R-N.IF-M

~211

$x\beta1$

L-1.IF-1
L-1.IF-2

L-N.IF-M

~212

$x\beta2$

POLICY-BASED
MULTI-LAYER METRIC

R-1.IF-1
R-1.IF-2

R-N.IF-M

L-1.IF-1
L-1.IF-2

L-N.IF-M

MINIMUM COST ROUTE CALCULATION ALGORITHM

NEXT-HOP DB

215

FIG.56

FIG.57

NODE 1 · NODE 2 · NODE 3

PSC · LSC · IF-1 · IF-2 · IF-3 · IF-4

x · y

STATE TABLE

|  | NEIGHBOR | COST | ORIGINAL IF-ATTRIBUTE |
|---|---|---|---|
| IF - 1 | NODE 2 | $x\beta1$ | PSC(L=0,P=0) |
| IF - 1 | NODE 3 | $(x+y)\beta1$ | PSC(L=0,P=0) |
| IF - 2 | NODE 1 | $x\beta1$ | PSC/LSC(L=0,P=1) |
| IF - 3 | NODE 3 | $y\beta2$ | LSC(L=1,P=1) |
| IF -4 | NODE 3 | $y\beta2$ | PSC(L=1,P=0) |
| IF - 4 | NODE 1 | $(x+y)\beta1$ | PSC(L=1,P=0) |

# FIG.58

CAPABILITY TABLE

|  | NEIGHBOR | COST | ORIGINAL IF-ATTRIBUTE |
|---|---|---|---|
| IF - 1 | NODE 2 | x | PSC/LSC (L=2,P=2) |
| IF - 2 | NODE 1 | x | PSC/LSC (L=2,P=2) |
| IF - 3 | NODE 3 | y | PSC/LSC (L=2,P=2) |
| IF - 4 | NODE 2 | y | PSC/LSC (L=2,P=1) |

# FIG.59

EP 1 335 627 A2

LSP SETTING(NODE#1→NODE#5)

#1    #2    #3    #4    #5

PSC

LSC

EXISTING OPTICAL PATH LINK    NEWLY SET OPTICAL PATH LINK    EXISTING OPTICAL PATH LINK

FIG.60

FIG.61

EP 1 335 627 A2

FIG.62

EP 1 335 627 A2

201 — PACKET SWITCH/OPTICAL SWITCH INTEGRAL CONTROL APPARATUS

TRAFFIC INFORMATION
COLLECTING SECTION

217

SWITCHING CAPABILITY
MONITOR SECTION — 213

214

$x\beta2, x\gamma2$

EXTENDED LINK
STATE DB

244

212

242

LINK STATE DB

243

$x\beta1, x\gamma1$

211

216

FLOODING
SECTION — 210

NEXT HOP DB

PATH SETTING
SECTION

215

FROM ANOTHER NODE
(ADVERTISEMENT
INFORMATION)

TO DOWNSTREAM NODE

FROM UPSTREAM NODE

TO ANOTHER NODE
(ADVERTISEMENT
INFORMATION)

PACKET CELL SWITCH (PSC)

OPTICAL SWITCH (LSC)

FIG.63

FIG.64

FIG.65

CENTRALIZED CONTROL APPARATUS — 504

NODE — 501D

502D

502C

501C

NODE

NODE

501A

502A

NODE

501B

502B

503

FIG.66

IP NETWORK #3

IP NETWORK #1

PACKET CELL TRANSFER NETWORK
(PACKET CELL SWITCH + OPTICAL PATH)

IP NETWORK #2

600

600

600
(PSC)

600

LABEL SWITCH PATH (LOGIC PATH)
LSP

OPTICAL PATH
(OPTICAL LABEL SWITCH PATH)
OLSP

601

601
(LSC)

602

OPTICAL PATH NETWORK
(OPTICAL SWITCH + FIBER LINK)

FIG.67

EP 1 335 627 A2

TYPE I

**FIG.68**

TYPE II

**FIG.69**

TYPE III

**FIG.70**

84

FIG.71

EP 1 335 627 A2

FIG.72

FIG.73

EP 1 335 627 A2

FIG.74

EP 1 335 627 A2